# EUROPEAN PATENT APPLICATION

(11) **EP 4 641 810 A1**
(43) Date of publication of application: **29.10.2025**
(21) Application number: 23925670.4
(22) Date of filing: 03.03.2023
(51) Int. Cl.: H01M 50/50

(54) **BATTERY CELL, BATTERY, AND ELECTRICAL APPARATUS**

(71) Applicant: Contemporary Amperex Technology (Hong Kong) Limited, Hong Kong (HK)
(72) Inventor: LIN, Wenfa, Ningde, Fujian 352100 (CN); CHEN, Congsheng, Ningde, Fujian 352100 (CN); WEN, Yaoling, Ningde, Fujian 352100 (CN); TANG, Minghao, Ningde, Fujian 352100 (CN); ZHANG, Shengwu, Ningde, Fujian 352100 (CN); DING, Yu, Ningde, Fujian 352100 (CN)
(74) Representative: Ziebig Hengelhaupt Intellectual Property Attorneys Patentanwaltskanzlei PartGmbB
(86) International application number: PCT/CN2023/079677
(87) International publication number: WO 2024/182944

(57) **Abstract**

A battery cell, a battery, and an electrical device. The battery cell comprises: a casing assembly, comprising a casing and a first pole, the first pole comprising a pole body and a first cover plate, the pole body being mounted in the casing, and the first cover plate being arranged on the pole body; and a cell assembly, comprising an active material coating portion and a conductive portion connected to the active material coating portion, the active material coating portion being accommodated in the casing, and the conductive portion being connected to the pole body by means of a first welding portion. The first welding portion is at least partially located on the side of the pole body away from the active material coating portion, and the first cover plate is used for shielding the first welding portion. The present application can improve the reliability of a battery cell.

## Description

### TECHNICAL FIELD

The present application relates to the technical field of batteries, and in particular, to a battery cell, a battery, and an electrical apparatus.

### BACKGROUND

In recent years, new energy vehicles have developed by leaps and bounds. In the field of electric vehicles, batteries, as the power source of electric vehicles, play an irreplaceable and important role. Generally, a battery includes a plurality of battery cells. There is a certain risk of thermal runaway or short circuit in the battery cells during use, resulting in poor reliability of the battery cells, which is not conducive to improving the performance and service life of the battery cells.

### SUMMARY

Embodiments of the present application provide a battery cell, a battery, and an electrical apparatus, which can reduce the probability of thermal runaway or short circuit of the battery cell, improve the reliability of the battery cell, and enhance the performance and service life of the battery cell.

In a first aspect, the embodiments of the present application provide a battery cell, which includes: a housing assembly, including a housing and a first post terminal, the first post terminal including a post terminal body and a first cover plate, the post terminal body being mounted in the housing, and the first cover plate being provided on the post terminal body; a battery cell assembly, including an active substance-coated part and a conductive part connected to the active substance-coated part, the active substance-coated part being accommodated in the housing, and the conductive part being connected to the post terminal body through a first welding part, where the first welding part is at least partially located on a side of the post terminal body away from the active substance-coated part, and the first cover plate is configured to shield the first welding part.

In the above technical solution, by locating the first welding part at least partially on the side of the post terminal body away from the active substance-coated part, in one aspect, the metal residues generated in the welding process can be reduced from entering the interior of the battery cell, and to a certain extent, the metal residues can be prevented from overlapping the positive and negative electrode plates, thereby reducing the possibility of internal short circuit in the battery cell. In another aspect, the first welding part can be kept away from the active substance-coated part. When the post terminal body and the conductive part are welded at high temperature to form the first welding part, since the first welding part is kept away from the active substance-coated part as a high-temperature heat source, the influence of the high temperature generated by the welding on the active substance-coated part can be reduced, and the probability of damage to the active substance-coated part can be reduced, thereby improving the reliability of the battery cell. In addition, after the post terminal body is welded to the conductive part inside the housing, when the battery cell is welded to the busbar component, the first cover plate can play a protective role by shielding the first welding part, which reduces the influence of the high temperature generated when the post terminal body is welded to the busbar component on the first welding part, thereby improving the connection reliability between the post terminal body and the conductive part.

In some embodiments, the post terminal body is provided with a first accommodating groove, a surface of the first post terminal on a side facing the active substance-coated part is a post terminal inner end surface, an opening of the first accommodating groove is formed on the post terminal inner end surface, and the first accommodating groove is provided with a first end wall and a first side wall; the first end wall is located on a side of the first side wall distal to the active substance-coated part, at least a part of the conductive part is accommodated in the first accommodating groove, the first welding part is provided on the first end wall, and the first cover plate is fitted to the post terminal body and covers the first welding part.

In the above technical solution, in one aspect, by forming the first accommodating groove on the first post terminal, the weight of the first post terminal can be reduced to a certain extent, so as to improve the gravimetric energy density of the battery cell and the battery; in another aspect, since the opening of the first accommodating groove is formed on the post terminal inner end surface, and the post terminal inner end surface is the surface of the first post terminal on a side proximal to the active substance-coated part, the first accommodating groove can be open toward the active substance-coated part, thereby facilitating the conductive part to extend into the first accommodating groove and improving the assembly efficiency. Moreover, the first accommodating groove in this form is easy to process, thereby improving the production efficiency.

Furthermore, the first accommodating groove is easy to be processed to have a relatively large volume, so as to accommodate more conductive parts. Meanwhile, since the first accommodating groove is open toward the active substance-coated part, the first accommodating groove can also be used as a buffering and temporary storage structure for an electrolytic solution, such that a larger amount of electrolytic solution can be accommodated in the housing; since the electrolytic solution will be consumed during the charging and discharging processes of the battery cell, the service life of the battery cell can be prolonged when there is a larger amount of electrolytic solution. Also, since the first accommodating groove is open toward the active substance-coated part, the first accommodating groove can also be used as an accommodating and buffering structure for gas generated inside the battery cell assembly, so as to reduce the expansion of the battery cell, thereby improving the reliability and stability of the battery cell.

In addition, since the first accommodating groove is located on an inner side of the first post terminal, external foreign substances and impurities are not easy to enter the first accommodating groove, thereby reducing the influence of external foreign substances and impurities on the battery cell assembly, improving the stability and reliability of the battery cell assembly, and further improving the stability and reliability of the battery cell and battery. Secondly, by providing the first welding part between the post terminal body and the conductive part on the first end wall, in one aspect, the first welding part can be further far away from the active substance-coated part when in the first accommodating groove, thereby further reducing the influence of the high temperature generated when the post terminal body and the conductive part are welded to form the first welding part on the active substance-coated part; in another aspect, not only the first accommodating groove has the function of accommodating at least a part of the conductive part, but also the wall of the first accommodating groove has the function of realizing an electrical connection to the conductive part, such that the structure of the first post terminal can be simplified, thereby facilitating the processing of the first post terminal, and the structure of the conductive part can also be simplified, thereby reducing the redundancy of the conductive part and lowering the cost of the conductive part. Furthermore, by utilizing the welding of the first end wall to the conductive part, the welding area formed by the first welding part can be set relatively large, which can not only reduce the difficulty of welding, but also improve the reliability and stability of welding, thereby improving the performance of the battery cell.

In addition, since the first welding part is located in the first accommodating groove, not only can the first welding part be prevented from protruding outside the first post terminal and occupying the space outside the first post terminal, but also the first welding part can be protected by the first cover plate, thereby improving the welding reliability and stability of the conductive part and the first post terminal.

In some embodiments, the first end wall is provided with a first recess, and at least a part of the first welding part is located in the first recess.

In the above technical solution, in one aspect, the first recess can be used to pre-position and limit the first welding part, which is not only conducive to accurately locating the position for welding and improving the production efficiency, but also conducive to improving the stability and reliability of the conductive part and ensuring the stability and reliability of the battery cell in the charging and discharging processes; in another aspect, by providing the first recess on the first end wall, the wall thickness of a part of the first end wall can be locally reduced, which is not only conducive to welding, but also conducive to reducing the weight of the first post terminal and improving the gravimetric energy density of the battery cell.

In some embodiments, the first post terminal is provided with a first groove, a surface of the first post terminal on a side distal to the active substance-coated part is a post terminal outer end surface, an opening of the first groove is formed on the post terminal outer end surface, and the first cover plate covers the opening of the first groove.

In the above technical solution, in one aspect, since the first post terminal is provided with the first groove, the weight of the first post terminal can be further reduced, so as to improve the gravimetric energy density of the battery cell and the battery; in another aspect, the first groove is located on an outer side of the first post terminal, that is, the first groove is open to a side of the first post terminal away from the interior of the housing, and the first groove can be used to accommodate or mount structural components of the battery that electrically connect various battery cells, so as to make full use of the space in the first post terminal, thereby improving the space utilization and volumetric energy density of the battery; by providing the first groove and enabling the first cover plate to cover the opening of the first groove, the welding of the first cover plate is facilitated, thereby improving the assembly efficiency.

In addition, since the first post terminal is provided with both the first accommodating groove and the first groove, the first groove is located on a side of the first accommodating groove distal to the active substance-coated part, and the first groove is open in a direction away from the first accommodating groove, it is conducive to laser welding the conductive part to the first end wall through the first groove from the outside of the first post terminal, that is, a side of the first post terminal distal to the active substance-coated part, so as to facilitate the electrical connection between the conductive part and the first post terminal through external welding. That is, by the above structural arrangement, external welding of the first post terminal to the conductive part through the first groove can be facilitated, which facilitates processing and manufacture of the battery cell and can save processing and manufacturing costs.

In some embodiments, the active substance-coated part includes a current collector and an active substance layer provided on the current collector, the conductive part includes a tab part electrically connected to the current collector, the tab part includes a plurality of tab plates, parts of the plurality of tab plates proximal to the current collector converge to form a first gathering part, parts of the plurality of tab plates distal to the current collector converge and are connected to form a second gathering part, the first gathering part connects the second gathering part and the active substance-coated part, at least a part of the second gathering part is accommodated in the first accommodating groove, and the second gathering part is connected to the first end wall through the first welding part.

In the above technical solution, since the tab part includes the second gathering part formed by converging and connecting parts of the plurality of tab plates, at least a part of the second gathering part is accommodated in the first accommodating groove, which facilitates the connection between the conductive part and the first post terminal and can make full use of the space of the first post terminal, thereby improving the volumetric energy density of the battery cell. When the second gathering part is electrically connected to the first end wall through the first welding part, such as when the second gathering part is welded (e.g., laser welded) to the first end wall, the composition of the battery cell assembly can be simplified, thereby reducing the number of components, simplifying the assembly process, and improving the assembly efficiency.

In some embodiments, the active substance-coated part includes a current collector and an active substance layer provided on the current collector, the conductive part includes a tab part and an adapting piece, the tab part includes a plurality of tab plates, parts of the plurality of tab plates proximal to the current collector converge to form a first gathering part, parts of the plurality of tab plates distal to the current collector converge and are connected to form a second gathering part, the first gathering part connects the second gathering part and the active substance-coated part, the adapting piece is connected to the second gathering part, at least a part of the adapting piece is accommodated in the first accommodating groove, and the adapting piece is connected to the first end wall through the first welding part.

In the above technical solution, in one aspect, by accommodating at least a part of the adapting piece in the first accommodating groove, the space in the first post terminal can be more fully utilized, and the space occupied by the conductive part in the housing can be further reduced, so as to improve the volumetric energy density of the battery cell. In another aspect, by using the adapting piece and the first welding part to achieve an indirect electrical connection between the second gathering part and the first post terminal, the adapting piece can be welded to the first post terminal at a part avoiding the second gathering part, such that the welding between the adapting piece and the first post terminal is firm, the risk of welding cracking is low, and the reliability and stability of the battery cell can be further improved; meanwhile, by electrically connecting the first post terminal and the tab plates through the adapting piece, the configuration of the tab plates can also be simplified.

In some embodiments, at least a part of the first gathering part is accommodated in the first accommodating groove.

In the above technical solution, by accommodating at least a part of the first gathering part of the tab part in the first accommodating groove, the space in the first post terminal can be more fully utilized, and the space occupied by the tab part in the housing can be further reduced, so as to accommodate an active substance-coated part of a larger size, thereby improving the volumetric energy density of the battery cell; moreover, the redundancy of the tab part in the housing can be better reduced, thereby further reducing the probability of short circuit between the tab part and the active substance-coated part.

In some embodiments, the housing is provided with a mounting hole, and the first post terminal is mounted in the mounting hole; in an axial direction of the first post terminal, a depth H1 of the first accommodating groove is greater than or equal to a minimum distance H2 from the post terminal inner end surface to the mounting hole.

In the above technical solution, since in the axial direction of the first post terminal, the depth H1 of the first accommodating groove is greater than or equal to the minimum distance H2 from the post terminal inner end surface to the mounting hole, the volume of the first post terminal can be fully utilized, such that the first accommodating groove has a relatively great depth, which is conducive to accommodating more conductive parts, thereby reducing the space occupied by the conductive parts in the housing to a greater extent, further improving the energy density of the battery cell, and further reducing the redundancy of the conductive parts in the housing. Meanwhile, since the first accommodating groove has a relatively great depth, the gas generated in the battery cell assembly can be accommodated, so as to ensure the reliability and stability of the battery cell, and a larger amount of electrolytic solution can also be accommodated, so as to ensure the service life of the battery cell.

In some embodiments, the post terminal body is provided with a second accommodating groove, a surface of the post terminal body on a side distal to the active substance-coated part is a post terminal outer end surface, an opening of the second accommodating groove is formed on the post terminal outer end surface, the second accommodating groove is provided with a second end wall proximal to the active substance-coated part, the first welding part is provided on the second end wall, and the first cover plate is fitted to the post terminal body and covers the opening of the second accommodating groove.

In the above technical solution, in one aspect, by providing the second accommodating groove on the first post terminal, the weight of the first post terminal can be reduced to a certain extent, so as to improve the gravimetric energy density of the battery cell and the battery; in another aspect, since the opening of the second accommodating groove is formed on the post terminal outer end surface, and the post terminal outer end surface is a surface of the first post terminal on a side distal to the active substance-coated part, the second accommodating groove can be open in a direction away from the active substance-coated part. In this way, when at least a part of the conductive part is accommodated in the second accommodating groove, the accommodation and arrangement of the conductive part can be easily realized through the opening of the second accommodating groove, the electrical connection operation between the conductive part and the first post terminal can be easily realized through the opening of the second accommodating groove, and the like, thereby reducing the production difficulty of the battery cell and improving the production efficiency of the battery cell. The first welding part is provided on the second end wall, that is, not only the second accommodating groove has the function of accommodating at least a part of the conductive part, but also the wall of the second accommodating groove has the function of welding to the conductive part, such that the structure of the first post terminal can be simplified, thereby facilitating the processing of the first post terminal. Furthermore, the opening direction of the opening of the second accommodating groove enables the welding operation between the conductive part and the wall of the second accommodating groove to be easily performed through the opening of the second accommodating groove, such that the difficulty of welding can be reduced. Furthermore, by utilizing the wall of the second accommodating groove to achieve a welding connection to the conductive part, the welding region formed by the first welding part between the conductive part and the first post terminal can be relatively large, thereby improving the reliability and stability of the electrical connection, and further improving the performance of the battery cell.

Moreover, since the conductive part is connected to the post terminal body through the first welding part, there is welding slag at the first welding part. By providing the first welding part on the second end wall, the welding slag can be kept away from the active substance-coated part, thereby reducing the amount of welding slag entering the housing. In another aspect, by shielding the first welding part through the first cover plate, the first welding part can be protected. In this way, the welding slag or part of the welding slag falling from the first welding part can be blocked by the first cover plate, thereby further reducing the amount of welding slag entering the housing. By reducing the amount of welding slag entering the housing twice, the risk of short circuit inside the battery cell due to the presence of welding slag can be greatly reduced, thereby improving the reliability of the battery cell.

In addition, when the battery cell transmits electricity to the outside, the post terminal body needs to be electrically connected to the busbar component. At this time, the post terminal body is welded to the busbar component. In this case, since the first cover plate can shield the first welding part, the busbar component can be prevented from contacting the first welding part, or it can be understood that the busbar component and the first welding part can be isolated from each other, which can also reduce the influence of the first welding part on other welding positions on the post terminal body.

In some embodiments, the conductive part is located on a side of the second end wall facing the active substance-coated part.

In the above technical solution, the first welding part is provided on the side of the second end wall facing the active substance-coated part. At this time, a distance between the first welding part and the surface of the post terminal body located on an outer side of the housing is relatively long, which can reduce the influence of the high temperature generated when the post terminal body is welded to the busbar component on the first welding part.

In some embodiments, the second accommodating groove is in communication with the interior of the housing through a first perforation, the conductive part is provided in the first perforation in a penetrating manner and is at least partially accommodated in the second accommodating groove, and the conductive part is at least partially provided on a side of the second end wall away from the active substance-coated part.

In the above technical solution, since the second accommodating groove can be in communication with the interior of the housing through the first perforation, the second accommodating groove can also be used as a buffering and temporary storage structure for an electrolytic solution, such that a larger amount of electrolytic solution can be accommodated in the housing; since the electrolytic solution will be consumed during the charging and discharging processes of the battery cell, the service life of the battery cell can be prolonged when there is a larger amount of electrolytic solution. Also, since the second accommodating groove can be in communication with the interior of the housing through the first perforation, the second accommodating groove can also be used as an accommodating and buffering structure for gas generated inside the battery cell assembly, so as to reduce the expansion of the battery cell, thereby improving the reliability and stability of the battery cell.

In some embodiments, the second accommodating groove is further provided with a second side wall, the second side wall is located on a side of the second end wall distal to the active substance-coated part, and the second side wall and the second end wall define, in an enclosing manner, the second accommodating groove; the first perforation is formed on the second end wall, the second end wall is provided with a second recess, and at least a part of the first welding part is located in the second recess.

In the above technical solution, in one aspect, since the first perforation is formed on the second end wall, it is convenient for the conductive part to extend into the second accommodating groove through the first perforation, which can simplify the structure of the conductive part, reduce the redundancy of the conductive part, and lower the cost of the conductive part. In another aspect, a part of the first welding part located in the second recess is configured to match the second recess in shape and is provided in a fitting manner to achieve an electrical connection, such that the second recess can be used to pre-position and limit the electrical connection position on the conductive part, which is conducive to accurately locating the position for the electrical connection, thereby improving the production efficiency and improving the stability and reliability of the position of the electrical connection, so as to ensure the reliability and stability of the charging and discharging operations of the battery cell.

In some embodiments, the active substance-coated part includes a current collector and an active substance layer provided on the current collector, the conductive part includes a tab part electrically connected to the current collector, the tab part includes a plurality of tab plates, parts of the plurality of tab plates proximal to the current collector converge to form a first gathering part, parts of the plurality of tab plates distal to the current collector converge and are connected to form a second gathering part, the first gathering part connects the second gathering part and the active substance-coated part, at least a part of the second gathering part is accommodated in the second accommodating groove, and the second gathering part is connected to the second end wall through the first welding part.

In the above technical solution, since the tab part includes the second gathering part formed by converging and connecting parts of the plurality of tab plates, at least a part of the second gathering part can be easily accommodated in the second accommodating groove, which facilitates the welding of the conductive part to the first post terminal. Secondly, by accommodating at least a part of the second gathering part in the second accommodating groove, the space in the first post terminal can be utilized, so as to reduce the space occupied by the conductive part in the housing, thereby improving the volumetric energy density of the battery cell.

In some embodiments, the active substance-coated part includes a current collector and an active substance layer provided on the current collector, the conductive part includes a tab part and an adapting piece, the tab part is electrically connected to the current collector, the tab part includes a plurality of tab plates, parts of the plurality of tab plates proximal to the current collector converge to form a first gathering part, parts of the plurality of tab plates distal to the current collector converge and are connected to form a second gathering part, the first gathering part connects the second gathering part and the active substance-coated part, the adapting piece is connected to the second gathering part, at least a part of the adapting piece is accommodated in the second accommodating groove, and the adapting piece is connected to the second end wall through the first welding part.

In some embodiments, at least a part of the first gathering part is accommodated in the second accommodating groove.

In the above technical solution, by accommodating at least a part of the first gathering part and the adapting piece in the second accommodating groove, the space in the first post terminal can be more fully utilized, so as to further reduce the space occupied by the conductive part in the housing, thereby further improving the volumetric energy density of the battery cell. Furthermore, by providing the adapting piece of the plate structure, it is convenient for the adapting piece to pass through the first perforation and extend into the second accommodating groove.

In some embodiments, the post terminal body is provided with a first accommodating part, the first accommodating part is provided with a third accommodating groove, a surface of the first post terminal on a side facing the active substance-coated part is a post terminal inner end surface, the third accommodating groove is located on a side of the second accommodating groove proximal to the active substance-coated part, and an opening of the third accommodating groove is formed on the post terminal inner end surface; the third accommodating groove is connected to the second accommodating groove through the first perforation, and at least a part of the first gathering part is accommodated in the third accommodating groove.

In the above technical solution, a part of the conductive part is located in the third accommodating groove, and meanwhile, the conductive part is provided in the first perforation in a penetrating manner, and the rest of the conductive part is located in the second accommodating groove, such that the space in the first post terminal can be more fully utilized, and the space occupied by the conductive part the housing can be reduced.

In some embodiments, the housing assembly further includes a second cover plate, and the second cover plate lids the first perforation and is located outside the conductive part in the second accommodating groove.

In the above technical solution, at least a part of the conductive part is located in the second accommodating groove, the second cover plate lids this part of the conductive part, and the second cover plate also lids the first perforation, such that when the electrolytic solution enters the second accommodating groove from the first perforation, the problem of overflow of the electrolytic solution this part of the conductive part from the first post terminal can be alleviated through the second cover plate, thereby improving the reliability of the battery cell.

In some embodiments, the housing is provided with a mounting hole, and the first post terminal is mounted in the mounting hole; in an axial direction of the first post terminal, a depth H3 of the second accommodating groove is greater than or equal to a minimum distance H4 from the post terminal outer end surface to the mounting hole.

In the above technical solution, the depth H3 of the second accommodating groove refers to a maximum depth of the second accommodating groove in the axial direction of the first post terminal. Since in the axial direction of the first post terminal, the depth H3 of the second accommodating groove is greater than or equal to the minimum distance H4 from the post terminal outer end surface to the mounting hole, the volume of the first post terminal can be fully utilized, such that the second accommodating groove has a relatively great depth, which is conducive to accommodating more conductive parts, thereby reducing the space occupied by the conductive parts in the housing to a greater extent, further improving the energy density of the battery cell, and further reducing the redundancy of the conductive parts in the housing. Meanwhile, since the second accommodating groove has a relatively great depth, the gas generated in the battery cell assembly can be accommodated, so as to ensure the reliability and stability of the battery cell, and a larger amount of electrolytic solution can also be accommodated, so as to ensure the service life of the battery cell.

In some embodiments, the post terminal body is provided with a first accommodating part, the first accommodating part is provided with a fourth accommodating groove, a surface of the post terminal body on a side distal to the active substance-coated part is a post terminal outer end surface, an opening of the fourth accommodating groove is formed on the post terminal outer end surface, the fourth accommodating groove is in communication with the interior of the housing through a second perforation, the conductive part is provided in the second perforation in a penetrating manner, the first welding part is provided on the wall of the second perforation formed in the first accommodating part, and the first cover plate is fitted to the post terminal body and covers the second perforation.

In the above technical solution, by providing the fourth accommodating groove, the welding of the conductive part to the wall of the second perforation can be easily realized. Furthermore, in some cases, the sealing of the second perforation can be realized by the electrical connection of the conductive part to the first post terminal. For example, the conductive part and the wall of the second perforation can be welded at a position where the second perforation is connected to the fourth accommodating groove, so as to facilitate the operation. In addition, by controlling the weld mark, the sealing of the second perforation can be realized by utilizing the weld mark and the conductive part, so as to alleviate the problem of leakage of the electrolytic solution in the housing from the second perforation.

In some embodiments, the post terminal body includes a first post terminal part and a second post terminal part made of different materials and electrically connected, the second post terminal part is located on a side of the first post terminal part distal to the active substance-coated part, the first accommodating part is provided on the first post terminal part or on the first post terminal part and the second post terminal part, and the first welding part is provided on the first post terminal part.

In the above technical solution, by configuring the first post terminal as a composite form composed of different materials, the first post terminal part located on the inner side is fitted in a receiving manner and electrically connected to the conductive part, and the second post terminal part located on the outer side is electrically connected to the busbar component and the like, which is conducive to realizing the assembly and electrical connection of the first post terminal to related components, reducing the mutual interference between the welding position of the first post terminal and the conductive part, and the welding position of the first post terminal and the busbar component of the battery, and improving the reliability and stability of the battery cell.

In some embodiments, the first cover plate is provided with a second accommodating part, the second accommodating part is provided with a fifth accommodating groove, an opening of the fifth accommodating groove is formed on an end surface of the first cover plate on a side facing the active substance-coated part, and the fifth accommodating groove is provided with a third end wall and a third side wall; the third end wall is located on a side of the third side wall distal to the active substance-coated part, and at least a part of the first welding part is accommodated in the fifth accommodating groove.

In the above technical solution, in one aspect, by providing the fifth accommodating groove on the first cover plate, the weight of the first post terminal can be reduced to a certain extent, so as to improve the gravimetric energy density of the battery cell and the battery; in another aspect, since the opening of the fifth accommodating groove is formed on the end surface of the first cover plate on the side facing the active substance-coated part, and the third end wall is located on the side of the third side wall distal to the active substance-coated part, the fifth accommodating groove can be open in a direction away from the active substance-coated part. In this way, when at least a part of the conductive part is accommodated in the fifth accommodating groove, the accommodation and arrangement of the first welding part can be easily realized through the opening of the fifth accommodating groove, thereby reducing the production difficulty of the battery cell and improving the production efficiency of the battery cell.

In some embodiments, the first cover plate is electrically connected to the post terminal body; or, the first cover plate is provided to be insulated from the post terminal body.

In the above technical solution, the first cover plate can be electrically connected to the post terminal body, and at this time, the first cover plate can also participate in the electrical connection to the busbar component, which can increase the area of the weldable region, thereby facilitating the welding of the first post terminal to the busbar component. The first cover plate may also not be electrically connected to the post terminal body, that is, the two are insulated with each other. In this case, the first cover plate mainly serves to protect the first welding part.

In some embodiments, the first cover plate includes a first conductive member and a second conductive member made of different materials, the first conductive member is fitted to and electrically connected to the post terminal body, and the second conductive member is fitted to and electrically connected to the first conductive member.

In the above technical solution, by configuring the first cover plate to be a composite form, and configuring the first conductive member to be made of the same material as the first post terminal, the electrical connection between the first conductive member and the first post terminal is facilitated. For example, the first conductive member can be easily and reliably and stably connected to the first post terminal through welding. Furthermore, since the second conductive member is made of a different material from that of the first conductive member, the electrical connection between the second conductive member and a busbar component made of a different material from that of the first post terminal is facilitated. For example, the second conductive member can be easily and reliably and stably connected to a busbar component made of the same material as that of the second conductive member through welding.

In some embodiments, the first conductive member is provided with a second groove, the second conductive member is embedded in the second groove, and an opening of the second groove is formed on a surface of the first conductive member distal to the active substance-coated part, such that the second conductive member is exposed from the opening of the second groove.

In the above technical solution, in one aspect, by embedding the second conductive member in the first conductive member, the difficulty in assembling the first conductive member and the second conductive member can be reduced, thereby improving the stability and convenience of the fit between the first conductive member and the second conductive member, and the thickness of the first cover plate can be reduced, thereby reducing the space occupied by the first cover plate, so as to improve the space utilization of the battery cell. In another aspect, since the second conductive member can be exposed from the surface of the first conductive member distal to the second accommodating groove through the opening of the second groove, it is conducive to realizing the electrical connection between the second conductive member and the busbar component outside the first post terminal.

In addition, since the opening of the second groove is formed on the surface of the first conductive member distal to the second accommodating groove, it means that the second groove is open in a direction away from the active substance-coated part, such that the part of the first conductive member configured to define the wall of the second groove is located between the second accommodating groove and the second conductive member, so as to separate the second accommodating groove from the second conductive member, thereby preventing the electrolytic solution entering the second groove from contacting the second conductive member and reducing leakage of the electrolytic solution.

In some embodiments, the first cover plate is provided with a stress relief groove, and the stress relief groove is located in an outer peripheral region of the first cover plate.

In the above technical solution, by providing a stress relief groove on the first cover plate, the stress generated during the processing of the first cover plate or the electrical connection between the first cover plate and the first post terminal can be released, so as to improve the deformation or damage of the first cover plate caused by stress and other related problems.

In some embodiments, the battery cell further includes: a support, located in the housing and on a side of the active substance-coated part proximal to the first post terminal. The support is provided with a clearance hole configured to provide clearance for the conductive part, and the conductive part is suitable for extending to a side of the support distal to the active substance-coated part through the clearance hole.

In the above technical solution, by providing the support on the side of the active substance-coated part proximal to the first post terminal, the active substance-coated part can be separated from the housing by the support, thereby improving the reliability of the battery cell. Furthermore, by providing the clearance hole on the support, the conductive part can be guided and constrained to fit to the first post terminal by passing through the clearance hole, thereby eliminating the need for the conductive part to bypass the edge of the support to approach the first post terminal, which can not only simplify the arrangement of the conductive part, save the material of the conductive part, and reduce the cost, but also reduce the risk of short-circuit connection between the conductive part and the active substance-coated part by supporting and guiding the conductive part to fit to the first post terminal through the support, so as to further improve the reliability of the battery cell.

In some embodiments, the post terminal body is provided with a first accommodating part, the support is provided with a guiding part, the guiding part defines, in an enclosing manner, at least a part of the clearance hole, and the guiding part at least partially extends to the first accommodating part.

In the above technical solution, the guiding part protrudes from the support and extends into the first accommodating part, and at least a part of the clearance hole is formed in the guiding part, such that when the conductive part is provided in the clearance hole in a penetrating manner, at least a part of the conductive part can be easily accommodated in the first accommodating part, thereby improving the assembly efficiency of the conductive part; meanwhile, by providing the guiding part, the fits between the support and the first post terminal, and between the support and the conductive part are tighter and more reliable, such that the structure of the battery cell becomes more compact, which is more conducive to improving the energy density of the battery cell.

In some embodiments, the clearance hole includes a first hole segment and a second hole segment, the second hole segment is located on a side of the first hole segment proximal to the active substance-coated part, and the cross-sectional area of the second hole segment gradually increases in a direction distal to the first hole segment. The active substance-coated part includes a current collector and an active substance layer provided on the current collector, the conductive part includes a tab part electrically connected to the current collector, the tab part includes a plurality of tab plates, parts of the plurality of tab plates proximal to the current collector converge to form a first gathering part, parts of the plurality of tab plates distal to the current collector converge and are connected to form a second gathering part, the first gathering part connects the second gathering part and the active substance-coated part, at least a part of the first gathering part is accommodated in the second hole segment, and the second gathering part is provided in the first hole segment in a penetrating manner.

In the above technical solution, by configuring the clearance hole to include a second hole segment that gradually expands in the direction toward the active substance-coated part, it is convenient for the second hole segment to accommodate more first gathering parts, so as to improve the compactness of the fit between the support and the battery cell assembly, such that the overall volume of the battery cell is smaller, and the battery can accommodate a larger number of battery cells, thereby improving the volumetric energy density of the battery.

In some embodiments, the support is of an integrated structure; or, the support is of a split-type structure and includes a first support and a second support that are separable, and a clearance hole is defined between the first support and the second support.

In the above technical solution, the clearance hole is formed in the form of a through hole penetrating the support. Therefore, the support of an integrated structure is easy to process and has relatively good reliability, which facilitates the assembly of the support and the housing assembly, thereby improving assembly efficiency and fitting stability. When the support is of a split-type structure, the support includes a first support and a second support that are separable. The first support and the second support are both of a long-stripped plate-shaped structure and can be detachably connected, for example, in insertion fit or snap fit, to facilitate the assembly. The clearance hole is defined by the fit of the first support and the second support. When the support and the battery cell assembly are assembled, there is no need to pass the conductive part from one end of the clearance hole to the other end. Instead, the first support and the second support can be fitted at the position of the conductive part to clamp the conductive part, such that the clearance hole surrounds the conductive part, thereby facilitating the assembly of the support and the battery cell assembly and improving the assembly efficiency.

In some embodiments, the housing is provided with a first wall, a mounting hole is formed on the first wall, and the post terminal body is provided in the mounting hole; taking a plane where the cross-section of the mounting hole is located as a projection plane, in a direction perpendicular to the projection plane, a ratio of a projection area of the first welding part on the projection plane to a projection area of the first wall on the projection plane is in a range of 0.1%-1%.

In the above technical solution, by setting the ratio of the projection area of the first welding part on the projection plane to the projection area of the first wall on the projection plane to be in the range of 0.1%-1%, the effective current passage area between the conductive part and the post terminal body is increased, the current passage area of the first post terminal is increased, and the current passage capacity of the first post terminal is increased, which is conducive to increasing the charging speed of the battery cell, and also conducive to increasing the thermal diffusion capacity of the first post terminal to a certain extent and reducing the current passage temperature of the first post terminal, and thus helping to reduce the risk of loss of control of the battery cell.

In some embodiments, the housing is provided with a mounting hole, the post terminal body includes a post terminal body part, a first limiting stage part, and a second limiting stage part that are integrally formed, the post terminal body part is provided in the mounting hole in a penetrating manner, the first limiting stage part and the second limiting stage part are provided at both ends of the post terminal body part in an axial direction of the mounting hole, the first limiting stage part is in limiting fit to an outer side of the housing, and the second limiting stage part is in limiting fit to an inner side of the housing, such that the post terminal body is riveted to the housing.

In the above technical solution, the first limiting stage part and the second limiting stage part separately extend in a radial direction of the mounting hole to the radial outer side of the peripheral wall of the mounting hole. The first limiting stage part can limit the movement of the first post terminal relative to the housing in a direction toward the inner side of the housing, whereas the second limiting stage part can limit the movement of the first post terminal relative to the housing in a direction toward the outer side of the housing, such that the first post terminal is easy to be reliably mounted at the mounting hole through the first limiting stage part and the second limiting stage part, so as to realize the fixed connection between the first post terminal and the housing and facilitate the assembly of the first post terminal and the housing; moreover, there is no need to adopt other connection modes between the first post terminal and the housing, that is, it is convenient to achieve a reliable connection between the first post terminal and the housing, which is conducive to simplifying the structure of the housing assembly and simplifying the assembly process of the housing assembly.

Moreover, since the post terminal body, the first limiting stage part, and the second limiting stage part are integrally formed, components can be saved and costs can be reduced. Meanwhile, it is convenient to ensure the strength of the first post terminal, such that the first post terminal, after being fitted to the housing, is not easy to separate from the housing due to vibration or external pulling during the charging and discharging processes of the battery cell, and also not easy to crack or be damaged due to vibration or external pulling, which can improve the stability and reliability of the housing assembly, thereby improving the stability and reliability of the battery cell.

In some embodiments, the battery cell further includes: an outer insulating member wrapped outside the housing. In the above technical solution, the outer insulating member plays an insulating role and is configured to separate the housing from external components. For example, the outer insulating member is a blue film.

In some embodiments, the housing is provided with a first wall, a mounting hole is formed on the first wall, the post terminal body is provided in the mounting hole, the battery cell further includes a patch covering an outer side of the first wall, the outer insulating member includes an outer insulating film, the outer insulating film is an integrated film, the outer insulating film is provided with a connecting part, and the connecting part extends to an outer side of the first wall and is connected to the patch.

In the above technical solution, the connecting part can be stacked with the patch in the axial direction of the mounting hole to facilitate the connection between the connecting part and the patch. At this time, the outer insulating film and the patch can at least separate the first post terminal and the housing on the first wall, so as to improve the insulation reliability between the first post terminal and the housing, thereby improving the reliability of the battery cell. For example, the connecting part can extend around the outer periphery of the first wall to form an annular shape, such that the outer insulating member is wrapped outside all walls of the housing except the first wall. The connecting part is provided between the patch and the first wall, such that the patch plays a certain protective role in the connection between the connecting part and the patch.

In some embodiments, a minimum distance between an edge of the outer insulating film and the first post terminal is greater than or equal to 3 mm. In this technical solution, a creepage distance between the first post terminal and the housing may be greater than or equal to 3 mm, which is conducive to improving the insulation and voltage resistance performance between the first post terminal and the housing.

In a second aspect, the embodiments of the present application provide a battery, which includes the battery cell described above.

In the above technical solution, by locating the first welding part of the battery cell at least partially on the side of the post terminal body away from the active substance-coated part, the first welding part can be kept away from the active substance-coated part. When the post terminal body and the conductive part are welded at high temperature to form the first welding part, since the first welding part is kept away from the active substance-coated part as a high-temperature heat source, the influence of the high temperature generated by the welding on the active substance-coated part can be reduced, and the probability of damage to the active substance-coated part can be reduced, thereby improving the reliability of the battery cell. In addition, after the post terminal body is welded to the conductive part inside the housing, when the battery cell is welded to the busbar component, the first cover plate can play a protective role by shielding the first welding part, which reduces the influence of the high temperature generated when the post terminal body is welded to the busbar component on the first welding part, thereby improving the reliability of the first welding part between the post terminal body and the conductive part. It can be seen that by providing the battery including the battery cell described above, the reliability of the battery can be improved.

In some embodiments, the battery further includes: a plurality of battery cells; and a busbar component, the busbar component being electrically connected to the first post terminals of at least two battery cells, the first post terminals of the same polarity of each of the battery cells being electrically connected to the busbar component through a second welding part, and the second welding part being formed on the first cover plate. The housing includes a first wall, a mounting hole is formed on the first wall, and the post terminal body is provided in the mounting hole; on the cross-section of the mounting hole, an orthographic projection area of the second welding part is greater than or equal to 0.2% of an orthographic projection area of the first wall.

In the above technical solution, by setting the orthographic projection area of the second welding part between the busbar component and the corresponding first post terminal on the cross-section of the mounting hole to be greater than or equal to 0.2% of the orthographic projection area of the first wall, the effective current passage area between the busbar component and the corresponding first post terminal is greater than or equal to 0.2% of the orthographic projection area of the first wall, so as to increase the effective current passage area of the busbar component and the first post terminal, increase the current passage area of the first post terminal, and increase the current passage capacity of the first post terminal, which is conducive to increasing the charging speed of the battery cell, and also conducive to increasing the thermal diffusion capacity of the first post terminal to a certain extent, reducing the current passage temperature of the first post terminal, and thus helping to reduce the risk of loss of control of the battery cell.

In some embodiments, in a direction perpendicular to the cross-section of the mounting hole, a part of the busbar component overlapping with the post terminal body of the same polarity is a weldable region of the busbar component, and an orthographic projection area of the second welding part on the cross-section of the mounting hole is greater than or equal to 0.2 of the weldable region of the busbar component.

In the above technical solution, the weldable region of the busbar component is stacked with the post terminal body in the direction perpendicular to the projection plane, or in other words, in the direction perpendicular to the projection plane, the projection of the weldable region of the conductive part on the cross-section of the mounting hole overlaps with at least a part of the projection of the post terminal body on the cross-section of the mounting hole. As such, the weldable region of the busbar component can be understood as a region provided by the busbar component that can be welded to the post terminal body, and therefore the area of the weldable region must be greater than or equal to the orthographic projection area of the second welding part on the projection plane. As such, the projection area of the second welding part on the projection plane accounts for an appropriate proportion, so as to facilitate the welding operation between the busbar component and the post terminal body under the premise of appropriately increasing the current passage capacity and thermal diffusion capacity of the post terminal body.

In some embodiments, in a direction perpendicular to the cross-section of the mounting hole, a part of the busbar component overlapping with the first post terminal of the same polarity is a weldable region of the busbar component, and the area of the weldable region of the busbar component is greater than or equal to 20% of the orthographic projection area of the busbar component on the cross-section of the mounting hole.

In the above technical solution, the weldable region of the busbar component overlaps with the first post terminal of the same polarity in the direction perpendicular to the cross-section of the mounting hole, or in other words, in the direction perpendicular to the cross-section of the mounting hole, the orthographic projection of the weldable region of the busbar component on the cross-section of the mounting hole overlaps with at least a part of the orthographic projection of the first post terminal of the same polarity on the cross-section of the mounting hole. As such, the weldable region of the busbar component can be understood as a region provided by the busbar component that can be welded to the first post terminal, and therefore the area of the weldable region of the busbar component must be greater than or equal to the orthographic projection area of the second welding part on the cross-section of the mounting hole. The area of the weldable region of the busbar component is greater than or equal to 20% of the orthographic projection area of the busbar component on the cross-section of the mounting hole. In this way, the busbar component can provide a sufficient weldable region, so as to lay a foundation for improving the current passage capacity and thermal diffusion capacity of the first post terminal.

In some embodiments, the area of the weldable region of the busbar component is less than or equal to 50% of the orthographic projection area of the busbar component on the cross-section of the mounting hole.

In the above technical solution, by setting the area of the weldable region of the busbar component to be greater than or equal to 50% of the orthographic projection area of the busbar component on the cross-section of the mounting hole, it is conducive to further taking into account the current passage capacity of the first post terminal and the convenience of the welding operation.

In a third aspect, the embodiments of the present application provide an electrical apparatus, which includes the battery described above.

### BRIEF DESCRIPTION OF THE DRAWINGS

In order to more clearly illustrate the technical solutions in embodiments of the present disclosure, the drawings required for use in the embodiments will be briefly described below. It should be understood that the following drawings only illustrate some embodiments of the present disclosure and therefore shall not be considered as limiting the scope of the present disclosure, and other related drawings can be derived from these drawings by those of ordinary skill in the art without creative efforts.
FIG. 1 is a schematic structural diagram of a vehicle provided according to some embodiments of the present application;
FIG. 2 is an exploded view of the structure of a battery according to some embodiments of the present application;
FIG. 3 is a schematic structural diagram of a battery cell according to some embodiments of the present application;
FIG. 4 is an orthographic projection view of a battery cell according to some embodiments of the present application;
FIG. 5 is a cross-sectional view along the line A-A in FIG. 4;
FIG. 6 is a schematic structural diagram of a battery cell according to some embodiments of the present application;
FIG. 7 is an assembly diagram of a second post terminal, a battery cell assembly, and a housing according to some embodiments of the present application;
FIG. 8 is a partial cross-sectional schematic diagram of a battery cell according to some embodiments of the present application;
FIG. 9 is a partial cross-sectional schematic diagram of a battery cell according to some embodiments of the present application;
FIG. 10 is a partial cross-sectional schematic diagram of a battery cell according to some embodiments of the present application;
FIG. 11 is a partial cross-sectional schematic diagram of a battery cell assembly according to some embodiments of the present application;
FIG. 12 is a diagram of various tab gathering solutions of a battery cell assembly according to some embodiments of the present application;
FIG. 13 is a partial cross-sectional schematic diagram of a battery cell according to some embodiments of the present application;
FIG. 14 is a partial cross-sectional schematic diagram of a battery cell according to some embodiments of the present application;
FIG. 15 is a partial cross-sectional schematic diagram of a battery cell according to some embodiments of the present application;
FIG. 16 is a partial cross-sectional schematic diagram of a battery cell according to some embodiments of the present application;
FIG. 17 is a partial cross-sectional schematic diagram of a battery cell according to some embodiments of the present application;
FIG. 18 is a partial enlarged view of the portion B in FIG. 3;
FIG. 19 is an orthographic projection view of various first post terminals according to some embodiments of the present application;
FIG. 20 is a partial cross-sectional schematic diagram of a battery cell according to some embodiments of the present application;
FIG. 21 is a partial cross-sectional schematic diagram of a battery cell according to some embodiments of the present application;
FIG. 22 is a partial cross-sectional schematic diagram of a battery cell according to some embodiments of the present application;
FIG. 23 is an exploded view of the structure of a battery cell according to some embodiments of the present application;
FIG. 24 is a partial cross-sectional schematic diagram of a housing assembly according to some embodiments of the present application;
FIG. 25 is an exploded view of the structure of the housing assembly shown in FIG. 24;
FIG. 26 is an exploded view of the structure of the first cover plate shown in FIG. 25;
FIG. 27 is a partial cross-sectional schematic diagram of a battery cell according to some embodiments of the present application;
FIG. 28 is an exploded view of the structure of the battery cell shown in FIG. 27;
FIG. 29 is a partial cross-sectional schematic diagram of a battery cell according to some embodiments of the present application;
FIG. 30 is a partial cross-sectional schematic diagram of a battery cell according to some embodiments of the present application;
FIG. 31 is a partial cross-sectional schematic diagram of a battery cell according to some embodiments of the present application;
FIG. 32 is a partial cross-sectional schematic diagram of a battery cell according to some embodiments of the present application;
FIG. 33 is a partial cross-sectional schematic diagram of a battery cell according to some embodiments of the present application;
FIG. 34 is a schematic diagram of the fit between a battery cell assembly and a support according to some embodiments of the present application;
FIG. 35 is a cross-sectional view along the line C-C in FIG. 34;
FIG. 36 is a schematic structural diagram of an integrated support according to some embodiments of the present application;
FIG. 37 is a schematic structural diagram of a split-type support according to some embodiments of the present application;
FIG. 38 is a partial cross-sectional schematic diagram of a battery cell assembly and a support according to some embodiments of the present application;
FIG. 39 is an exploded view of the structure of a battery cell assembly, a support, and a housing assembly according to some embodiments of the present application;
FIG. 40 is an exploded view of the structure of a first post terminal, a housing, and a sealing gasket according to some embodiments of the present application;
FIG. 41 is an assembly diagram of the first post terminal, the housing, and the sealing gasket shown in FIG. 40;
FIG. 42 is a schematic structural diagram of a first post terminal according to some embodiments of the present application;
FIG. 43 is an assembly diagram of a first post terminal, a housing, and a sealing gasket according to some embodiments of the present application;
FIG. 44 is an exploded view of the structure of the first post terminal shown in FIG. 43;
FIG. 45 is an orthographic projection view of a battery cell according to some embodiments of the present application;
FIG. 46 is an orthographic projection view of a battery cell according to some embodiments of the present application;
FIG. 47 is a cross-sectional view along the line D-D in FIG. 46;
FIG. 48 is a cross-sectional schematic diagram of a housing assembly according to some embodiments of the present application;
FIG. 49 is a cross-sectional schematic diagram of a housing assembly according to some embodiments of the present application;
FIG. 50 is an orthographic projection view of a battery cell according to some embodiments of the present application;
FIG. 51 is a cross-sectional view along the line E-E in FIG. 50;
FIG. 52 is a partial cross-sectional schematic diagram of a battery cell according to some embodiments of the present application;
FIG. 53 is a schematic structural diagram of a housing cover according to some embodiments of the present application;
FIG. 54 is a first partial schematic diagram of a battery cell according to some embodiments of the present application;
FIG. 55 is a second partial schematic diagram of a battery cell according to some embodiments of the present application;
FIG. 56 is a schematic diagram of a battery cell according to an embodiment of the present application;
FIG. 57 is a schematic diagram of the electrical connection between a battery cell and a busbar component according to an embodiment of the present application;
FIG. 58 is a schematic diagram of the electrical connection between a busbar component and a post terminal according to an embodiment of the present application;
FIG. 59 is a schematic diagram of the connection between the first polarity post terminal and the conductive part of the battery cell shown in FIG. 56;
FIG. 60 is a schematic diagram of the mounting of a first polarity post terminal according to an embodiment of the present application;
FIG. 61 is a schematic diagram of the mounting of a first polarity post terminal according to an embodiment of the present application;
FIG. 62 is a schematic diagram of the mounting of a first polarity post terminal according to an embodiment of the present application;
FIG. 63 is a schematic diagram of the mounting of a first polarity post terminal according to an embodiment of the present application;
FIG. 64 is a schematic diagram of the mounting of a first polarity post terminal according to an embodiment of the present application;
FIG. 65 is a schematic diagram of the mounting of a first polarity post terminal according to an embodiment of the present application;
FIG. 66 is a schematic diagram of a battery cell assembly according to an embodiment of the present application;
FIG. 67 is a schematic diagram of the arrangement of a first polarity post terminal and a second polarity post terminal according to an embodiment of the present application;
FIG. 68 is a schematic diagram of the arrangement of a first polarity post terminal and a second polarity post terminal according to an embodiment of the present application;
FIG. 69 is a schematic diagram of the arrangement of a first polarity post terminal and a second polarity post terminal according to an embodiment of the present application;
FIG. 70 is a schematic diagram of the arrangement of a first polarity post terminal and a second polarity post terminal according to an embodiment of the present application;
FIG. 71 is a schematic diagram of the arrangement of a first polarity post terminal and a second polarity post terminal according to an embodiment of the present application;
FIG. 72 is a schematic diagram of the arrangement of a first polarity post terminal and a second polarity post terminal according to an embodiment of the present application;
FIG. 73 is a schematic diagram of the mounting of a first polarity post terminal according to an embodiment of the present application;
FIG. 74 is a schematic diagram of a battery cell according to an embodiment of the present application;
FIG. 75 is a schematic diagram of the connection between the outer insulating member and the patch shown in FIG. 74.

### Reference

numerals:
electrical apparatus 1000; battery 100; controller 200; motor 300;
first direction Z; second direction X; third direction Y;
axial direction R of the first post terminal;
battery cell 10; case 20; first case 201; second case 202; busbar component 30;
housing assembly 1;
housing 11; first wall 110; second wall 120; housing body 111; housing cover 112; mounting hole 113; sub-hole 1131; second mounting hole 114;
first post terminal 12; first polarity post terminal 12A; second polarity post terminal 12B;
first accommodating part 121;
first accommodating groove 12110; first end wall 12111; first recess 12112; first side wall 12113;
second accommodating groove 12120; second end wall 12121; second recess 12122; second side wall 12123;
first groove segment 12124; second groove segment 12125; inclined guiding surface 12126; step surface 12127;
first perforation 12130; third accommodating groove 12140; fourth accommodating groove 12150;
second perforation 12160; third perforation 12170;
post terminal inner end surface 122; post terminal outer end surface 123;
first post terminal part 124; second post terminal part 125;
first groove 126; spacer part 127;
stopper part 1281; penetration part 1282; flange part 1283; post terminal body 1201; post terminal body part 12a; first limiting stage part 12b; second limiting stage part 12c; first part 128; second part 129;
first part 1291; second part 1292;
first cover plate 13; first conductive member 131; second groove 1311; second conductive member 132; stress relief groove 133; second accommodating part 134; fifth accommodating groove 1341; third end wall 13411; third side wall 13412;
second cover plate 14; second post terminal 15; pressure relief part 16; clearance groove 18;
first sealing gasket 191; second sealing gasket 192;
battery cell assembly 2; electrode assembly 2a;
active substance-coated part 21; current collector 211; active substance layer 212; conductive part 22;
tab part 221; tab plate 2211; first gathering part 2212; second gathering part 2213; adapting piece 222;
support 3; clearance hole 31; first hole segment 311; second hole segment 312;
guiding part 32; first support 33; second support 34; housing entry guiding surface 35;
body part 36; extending part 37; third groove 38; positioning groove 39;
inner insulating member 4; body part 41; connecting part 42; outer insulating member 5; outer insulating film 52; connecting part 51;
sealing member 6; first welding part 71; second welding part 72; insulating and sealing component 8; insulating member 81; sealing member 82; patch 9.

### DETAILED DESCRIPTION

To make the objectives, technical solutions, and advantages of the embodiments of the present application clearer, the technical solutions in the embodiments of the present application will be clearly and completely described below with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those of ordinary skill in the art to which the present application belongs. The terms used in the specification of the present application are only used to describe specific embodiments and are not intended to limit the present application. The terms "include", "comprise", "have", and any variants thereof in the specification and claims of the present application and the descriptions of the above drawings are intended to cover a non-exclusive inclusion. The terms "first", "second", and the like in the specification and claims of the present application and the above drawings are defined to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "connect", "connection", and "attachment" shall be construed broadly and may be, for example, fixed connection, detachable connection, or integrated connection, or direct connection, indirect connection via an intermediate, or internal communication between two elements. For those of ordinary skill in the art, the specific meanings of the aforementioned terms in the present application can be understood according to specific conditions.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not impose any limitation on the present application.

The term "plurality" used in the present application refers to two or more (including two).

In the present application, battery cells may include lithium-ion secondary batteries, lithium-ion primary batteries, lithium-sulfur batteries, sodium-lithium-ion batteries, sodium-ion batteries, magnesium-ion batteries, etc. This is not limited in the embodiments of the present application. The battery cell may be cylindrical, flat, rectangular parallelepiped-shaped, or in other shapes, which is also not limited in the embodiments of the present application. According to the packaging method, battery cells are typically divided into three types: cylindrical battery cells, square battery cells, and soft-pack battery cells, which are not limited in the embodiments of the present application.

The battery mentioned in the embodiments of the present application refers to a single physical module including one or more battery cells to provide higher voltage and capacity. For example, the battery mentioned in the present application may be a battery module, a battery pack, or the like. A battery module generally includes a plurality of battery cells. A battery pack generally includes a case used for encapsulating one or more battery cells or one or more battery modules. The case can prevent liquid or other foreign substances from affecting the charging or discharging of the battery cells.

Illustratively, a battery cell may generally include a housing, a battery cell assembly and an electrolytic solution. The housing is configured to accommodate the battery cell assembly and the electrolytic solution, and at least one positive electrode post terminal and at least one negative electrode post terminal are provided on the housing. The battery cell assembly includes one or more electrode assemblies, and the electrode assembly is formed by stacking or winding a positive electrode plate, a negative electrode plate, and a separation film.

The positive electrode plate may generally include a positive electrode current collector and a positive electrode active substance layer. The positive electrode current collector is directly or indirectly coated with the positive electrode active substance layer, the positive electrode current collector not coated with the positive electrode active substance layer protrudes from the positive electrode current collector coated with the positive electrode active substance layer, the positive electrode current collector not coated with the positive electrode active substance layer serves as a positive electrode tab plate, and a plurality of positive electrode tab plates are stacked together and electrically connected to the positive electrode post terminal. Illustratively, the plurality of positive electrode tab plates stacked together may be directly welded to the positive electrode post terminal to form an electrical connection. Alternatively, the battery cell assembly may further include a positive electrode adapting piece, the plurality of positive electrode tab plates stacked together are welded to one end of the positive electrode adapting piece, and the other end of the positive electrode adapting piece is welded to the positive electrode post terminal to form an electrical connection between the positive electrode tab plates and the positive electrode post terminal.

The negative electrode plate may generally include a negative electrode current collector and a negative electrode active substance layer. The negative electrode current collector is directly or indirectly coated with the negative electrode active substance layer, the negative electrode current collector not coated with the negative electrode active substance layer protrudes from the negative electrode current collector coated with the negative electrode active substance layer, the negative electrode current collector not coated with the negative electrode active substance layer serves as a negative electrode tab plate, and a plurality of negative electrode tab plates are stacked together and electrically connected to the negative electrode post terminal. Illustratively, the plurality of negative electrode tab plates stacked together may be directly welded to the negative electrode post terminal to form an electrical connection. Alternatively, the battery cell assembly may further include a negative electrode adapting piece, the plurality of negative electrode tab plates stacked together are welded to one end of the negative electrode adapting piece, and the other end of the negative electrode adapting piece is welded to the negative electrode post terminal to form an electrical connection between the negative electrode tab plates and the negative electrode post terminal. The material of the separation film is not limited, such as polypropylene or polyethylene.

Meanwhile, a battery cell primarily works by the movement of metal ions between the positive electrode plate and the negative electrode plate. Taking lithium-ion batteries as an example, the material of the positive electrode current collector may be aluminum, the material of the positive electrode active substance layer may be lithium cobaltate, lithium iron phosphate, ternary lithium, or lithium manganate, etc., the material of the negative electrode current collector may be copper, and the material of the negative electrode active substance layer may be carbon or silicon, etc. During the charging and discharging processes, Li+ is intercalated or deintercalated back and forth between the two electrodes: during charging, Li+ is deintercalated from the positive electrode, and intercalated into the negative electrode through the electrolyte, and the negative electrode is in a lithium-rich state; during discharging, the process is reversed.

In recent years, new energy vehicles have developed by leaps and bounds. In the field of electric vehicles, power batteries, as the power source of electric vehicles, play an irreplaceable and important role. The battery consists of a case and a plurality of battery cells accommodated in the case. Batteries, as core components of new energy vehicles, have high requirements both in terms of safety and service life.

In the related art, during the manufacturing of a battery cell, an active substance layer is coated on a current collector and then the current collector is cut to obtain an electrode plate consisting of a current collector coated with an active substance layer (referred to as an active substance-coated part) and a current collector not coated with an active substance layer (referred to as a tab plate). Then, the positive and negative electrode plates and a separation film are stacked or wound in sequence to obtain an electrode assembly. In the electrode assembly, a plurality of tab plates are stacked to form a tab part. The tab part itself forms a conductive part, or the tab part is connected to an adapting piece to form a conductive part. The active substance-coated part and the conductive part form a battery cell assembly. The housing of the battery cell is provided with a post terminal, and a surface of the post terminal on a side facing the active substance-coated part is a post terminal inner end surface. In the related art, the conductive part is generally welded to the post terminal inner end surface.

The inventors find that in the assembly process of the battery cell, the tab is first welded to the post terminal inner end surface; since a first welding part is located on the post terminal inner end surface, and proximal to the interior of the battery cell, it is difficult to completely clean metal residues in the welding process, which causes the residual metal residues to fall into the active substance-coated part and overlap the electrode plate of opposite polarity, thereby causing an internal short circuit in the battery cell and reducing the reliability of the battery cell; moreover, high temperature will be generated in welding process of the tab to the post terminal, which will cause the high temperature when the tab forms a weld mark to burn the active substance-coated part in the housing, resulting in loss of the active substance coating on the active substance-coated part, thereby reducing the performance of the battery cell and failing to extend the service life of the battery cell. In another aspect, in the assembly process of the battery cell into a battery, the post terminal of the battery cell needs to be connected to a post terminal of another battery cell by welding through a busbar component; since high temperature is also generated in the welding process, the high temperature formed when the post terminal is welded to the external busbar component will affect the welding part of the tab and the post terminal, which is likely to cause the welding part to be melted again and loosened, thereby reducing the performance of the battery cell.

Based on the above considerations, in order to solve the internal short circuit problem caused by metal residues produced during welding, the problem of damage to the active substance-coated part due to the high temperature formed during the welding of the tab, and the problem of affecting the welding part of the tab and the post terminal when the post terminal of the battery cell is welded to the busbar component during the assembly of the battery cell into a battery, the inventors have designed a battery cell after in-depth research, which includes a housing assembly and a battery cell assembly. The housing assembly includes a housing and a first post terminal, the first post terminal includes a post terminal body and a first cover plate, the post terminal body is mounted in the housing, and the first cover plate is provided in the post terminal body. The battery cell assembly includes an active substance-coated part and a conductive part connected to the active substance-coated part. The active substance-coated part is accommodated in the housing, and the conductive part is connected to the post terminal body through a first welding part. By locating the first welding part at least partially on a side of the post terminal body away from the active substance-coated part, the metal residues generated in the welding process can be reduced from entering the battery cell, and to a certain extent, the metal residues can be prevented from overlapping the positive and negative electrode plates, thereby reducing the possibility of internal short circuit in the battery cell. By allowing the first welding part to be distant from the active substance-coated part, the influence of the high temperature generated by the welding on the active substance-coated part can be reduced, thereby reducing the probability of damage to the active substance-coated part. In addition, after the post terminal body is welded to the conductive part inside the housing, when the battery cell is welded to the busbar component, the first cover plate can play a protective role by shielding the first welding part, which reduces the influence of the high temperature generated when the post terminal body is welded to the busbar component on the first welding part, thereby improving the reliability of the first welding part between the post terminal body and the conductive part.

The battery disclosed in the embodiments of the present application may, but is not limited to, be used in electrical apparatus such as vehicles, ships, or aircraft. The power system of the electrical apparatus may be composed of the battery disclosed in the present application, and the like.

The embodiments of the present application provide an electrical apparatus using a battery as a power source. The electrical apparatus may be, but not limited to, a mobile phone, a tablet, a laptop computer, an electric toy, an electric tool, an electric bicycle, an electric vehicle, a ship, a spacecraft, or the like. The electric toy may include a stationary or mobile electric toy, such as a game console, an electric car toy, an electric ship toy, and an electric airplane toy, and the spacecraft may include an airplane, a rocket, a space shuttle, a spaceship, and the like.

For ease of explanation in the following embodiments, the structures of the electrical apparatus 1000, the battery 100 and the battery cell 10 of the present application will be described by taking the electrical apparatus as a vehicle 1000 as an example.

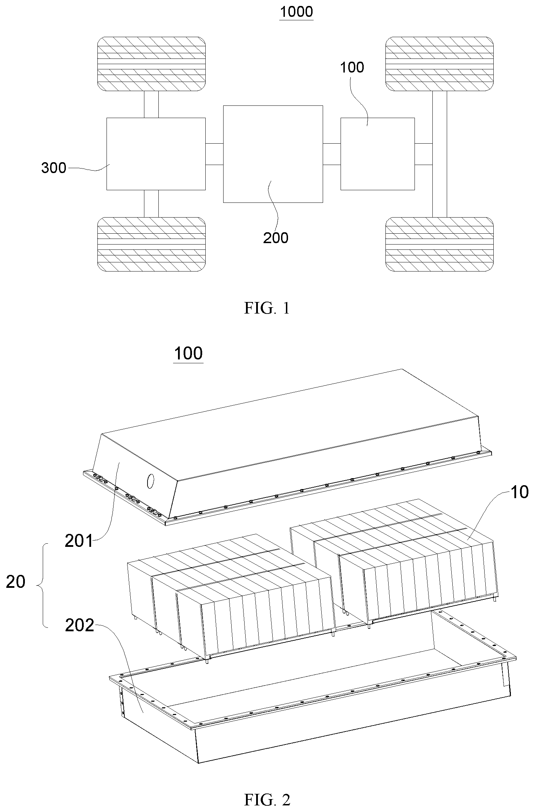

Referring to FIG. 1, FIG. 1 is a schematic structural diagram of a vehicle 1000 according to some embodiments of the present application. The vehicle 1000 may be a fuel vehicle, a gas vehicle or a new energy vehicle. The new energy vehicle may be a pure electric vehicle, a hybrid vehicle, an extended-range vehicle, or the like. A battery 100 is provided inside the vehicle 1000, and the battery 100 may be provided at a bottom, a head, or a tail of the vehicle 1000. The battery 100 may be configured to power the vehicle 1000. For example, the battery 100 may serve as an operation power source of the vehicle 1000. The vehicle 1000 may further include a controller 200 and a motor 300. The controller 200 is used for controlling the battery 100 to power the motor 300, e.g., for operation power needed by the vehicle 1000 for start-up, navigation, and driving.

In some embodiments of the present application, the battery 100 may not only serve as an operation power source for the vehicle 1000, but also as a driving power source for the vehicle 1000 to, instead of or in part instead of fuel or natural gas, provide driving power for the vehicle 1000.

Referring to FIG. 2, FIG. 2 is an exploded view of the structure of a battery 100 according to some embodiments of the present application. The battery 100 includes a case 20 and a plurality of battery cells 10. The battery cells 10 are configured to be accommodated in the case 20. The case 20 is configured to provide an assembly space for the battery cell 10, and the case 20 may be in various structures. In some embodiments, the case 20 may include a first case body 201 and a second case body 202. The first case body 201 and the second case body 202 are mutually lidded onto each other. The first case body 201 and the second case body 202 jointly define an assembly space for accommodating the battery cells 10. The second case body 202 may be of a hollow structure with one end open, and the first case body 201 may be of a plate-shaped structure. The first case body 201 is lidded onto the open side of the second case body 202, such that the first case body 201 and the second case body 202 jointly define an assembly space; the first case body 201 and the second case body 202 may also both be of a hollow structure with one side open, and the open side of the first case body 201 is lidded onto the open side of the second case body 202. Certainly, the case 20 formed by the first case body 201 and the second case body 202 may be in various shapes, such as a cylinder and a rectangular parallelepiped.

In the battery 100, a plurality of battery cells 10 may be connected in series, in parallel, or in series-parallel. The series-parallel connection means that both series connection and parallel connection are present for the connection among the plurality of battery cells 10. The plurality of battery cells 10 may be directly connected in series, in parallel, or in series-parallel, and then the whole formed by the plurality of battery cells 10 is accommodated in the case 20. Certainly, it may be that in the battery 100, the plurality of battery cells 10 are first connected in series, in parallel, or in series-parallel to form battery modules, and then the plurality of battery cell modules are connected in series, in parallel, or in series-parallel to form a whole and accommodated in the case 20. The battery 100 may further include other structures. For example, the battery 100 may further include a busbar component for achieving electrical connection between the plurality of battery cells 10.

Referring to FIG. 2, FIG. 2 is a schematic partial structure diagram of a battery 100 according to some embodiments of the present application. The battery 100 includes a plurality of rows of battery cells 10. The plurality of rows of battery cells 10 are arranged in a first direction X. Each row of battery cells 10 includes a plurality of battery cells 10 arranged in a second direction Y. The first direction X and the second direction Y are the length direction of the case 20 and the width direction of the case 20, respectively, and the first direction X and the second direction Y are perpendicular to each other.

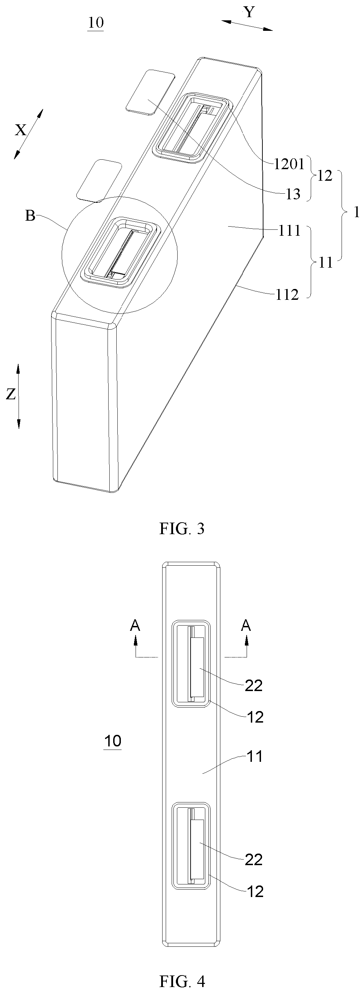

Each battery cell 10 may be a secondary battery or a primary battery; it may also be a lithium-sulfur battery, a sodium-ion battery, or a magnesium-ion battery, but is not limited thereto. The battery cell 10 may be cylindrical, flat, rectangular, or in other shapes. Illustratively, in FIG. 3, the battery cell 10 is in the shape of a rectangular parallelepiped. In the related art, a battery cell may generally include a housing and a battery cell assembly. A positive electrode post terminal and a negative electrode post terminal are provided on the housing, and the battery cell assembly is provided in the housing. The battery cell assembly may generally include at least two electrode plates, and a part of the electrode plates are positive electrode plates, and the rest are negative electrode plates. A positive electrode tab is provided on the positive electrode plate, a negative electrode tab is provided on the negative electrode plate, and a separating film is provided between the positive electrode plate and the negative electrode plate. The positive electrode tab is electrically connected to the positive electrode post terminal, and the negative electrode tab is electrically connected to the negative electrode post terminal. The housing is filled with an electrolytic solution.

Referring to FIGs. 3-5, the embodiments of the present application provide a battery cell 10, which includes a housing assembly 1 and a battery cell assembly 2. The housing assembly 1 includes a housing 11 and a first post terminal 12. The first post terminal 12 includes a post terminal body 1201 and a first cover plate 13. The post terminal body 1201 is mounted in the housing 11, and the first cover plate 13 is provided on the post terminal body 1201. The battery cell assembly 2 includes an active substance-coated part 21 and a conductive part 22 connected to the active substance-coated part 21. The active substance-coated part 21 is accommodated in the housing 11, and the conductive part 22 is connected to the post terminal body 1201 through a first welding part 71. The shape of the housing 11 is adjusted according to the type of the battery cell 10, and the type of the battery cell 10 in the embodiments of the present application is not limited. For example, when the battery cell 10 is a square battery, the housing 11 is square, and when the battery cell 10 is a cylindrical battery, the housing 11 is cylindrical. The embodiments of the present application are all described by taking the housing 11 as a square as an example.

The housing 11 is provided with post terminals for electrical connection to the battery cell assembly 2 to ensure normal charging and discharging operations of the battery cell 10. Generally, the number of post terminals is at least two, specifically including at least one positive electrode post terminal and at least one negative electrode post terminal. For example, when the number of post terminals is two, one is a positive electrode post terminal and the other is a negative electrode post terminal, and the two are electrically connected to positive and negative output positions of the battery cell assembly 2, separately. For another example, when the number of post terminals is four, two may be positive electrode post terminals and two may be negative electrode post terminals. In this case, the two positive electrode post terminals are both electrically connected to a positive output position of the battery cell assembly 2, and the two negative electrode post terminals are both electrically connected to a negative output position of the battery cell assembly 2.

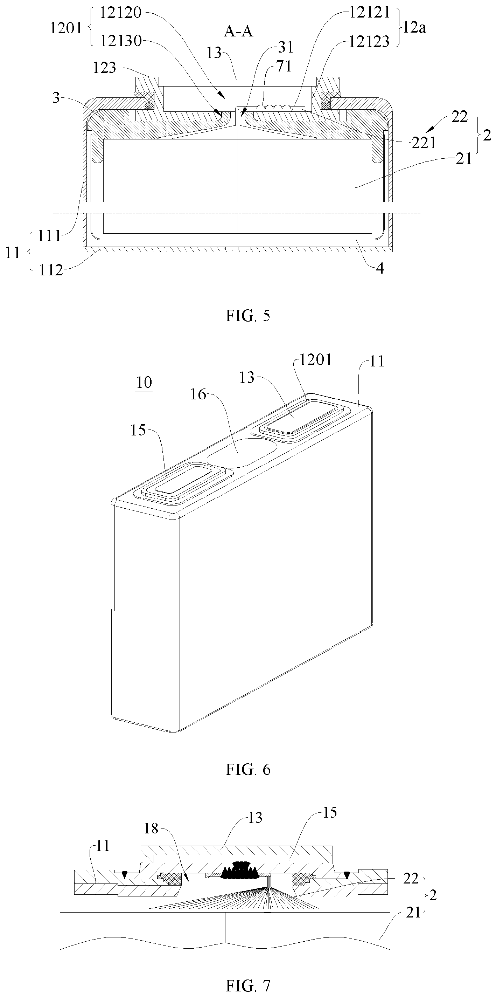

Meanwhile, FIG. 6 is a schematic structural diagram of a battery cell 10 according to some embodiments of the present application; FIG. 7 is an assembly diagram of a second post terminal 15, a battery cell assembly 2, and a housing 11 according to some embodiments of the present application. Referring to FIGs. 1-7, in the embodiments of the present application, at least one of the plurality of post terminals is a first post terminal 12, and the first post terminal 12 may be used as both a positive electrode post terminal and a negative electrode post terminal.

Regardless of whether the post terminal on the housing 11 is the first post terminal 12 or the second post terminal 15, the first post terminal 12 and the second post terminal 15 can be both electrically connected to the battery cell assembly 2 to ensure the normal charging and discharging processes of the battery cell 10. Certainly, in other embodiments of the present application, the housing assembly 1 may be provided with only one post terminal, which is the first post terminal 12. The first post terminal 12 includes two parts, which are connected in an insulating manner and serve separately as a positive electrode post terminal and a negative electrode post terminal. In order to simplify the description, the following description is mainly made with all the post terminals on the housing 11 being the first post terminals 12 which have the accommodating parts 121 formed therein as an example.

It should be noted that, referring to FIGs. 6 and 7, when the housing 11 is provided with a second post terminal 15, a clearance groove 18 may be provided between the second post terminal 15 and the housing 11 as required, such that at least a part of the conductive part 22 is received in the clearance groove 18. As such, the space occupied by the conductive part 22 in the housing 11 can also be reduced to a certain extent, which is conducive to improving the energy density and mitigating the problems such as short circuit caused by the redundancy of the conductive part 22.

Referring to FIGs. 3-7 again, in the embodiments of the present application, the battery cell assembly 2 includes an active substance-coated part 21 and a conductive part 22, the active substance-coated part 21 is accommodated in the housing 11, the active substance-coated part 21 is a part of the battery cell assembly 2 coated with an active substance, which can assist in the deintercalation of metal ions during the charging and discharging processes of the battery cell 10, the conductive part 22 is a metal structure that electrically connects the active substance-coated part 21 and the post terminal, which is not coated with an active substance, and the post terminal is electrically connected to the active substance-coated part 21 through the conductive part 22 to enable the charging and discharging operations of the battery cell 10.

It should be noted that, in the embodiments of the present application, the active substance-coated part 21 is divided into a positive electrode active substance-coated part and a negative electrode active substance-coated part. The positive electrode active substance-coated part includes a part in which the positive electrode current collector is coated with a positive electrode active substance layer, and the negative electrode active substance-coated part includes a part in which the negative electrode current collector is coated with a negative electrode active substance layer. The conductive part 22 is divided into a positive electrode conductive part and a negative electrode conductive part. The positive electrode conductive part electrically connects the positive electrode active substance-coated part and the positive electrode post terminal, and the negative electrode conductive part electrically connects the negative electrode active substance-coated part and the negative electrode post terminal. It should be noted that the formation method of the first welding part 71 is not limited, and may be, for example, laser welding, friction welding, or ultrasonic welding. Moreover, depending on factors such as the position, angle or structure of the welding part, vertical welding or inclined welding, and overlap welding or edge sealing welding can be selected. Illustratively, the first welding part 71 may be a long strip-shaped weld mark, so as to improve the welding reliability and increase the current passage performance.

In some embodiments, the conductive part 22 and the post terminal body 1201 are welded together from the outside to form the first welding part 71 therebetween. The conductive part 22 may be located on the inner side of the post terminal body 1201, or may pass through a via hole on the post terminal body 1201 to be overlapped on the outer side of the post terminal body 1201. When the conductive part 22 is located on the inner side of the post terminal body 1201, the first welding part 71 penetrates the post terminal body 1201 to connect to the conductive part 22; when the conductive part 22 is overlapped on the outer side of the post terminal body 1201, the first welding part 71 penetrates the conductive part 22 to connect to the post terminal body 1201. The first welding part 71 is exposed outside the post terminal body 1201, which may affect the reliability of the weld mark and a subsequent connection to the busbar component. Therefore, the first cover plate 13 is provided to be fitted to the post terminal body 1201 to cover the first welding part 71.

In some other embodiments, the conductive part 22 and the post terminal body 1201 are welded together from the inside to form the first welding part 71 therebetween. The conductive part 22 may be located on the inner side of the post terminal body 1201, or may pass through a via hole on the post terminal body 1201 to be overlapped on the outer side of the post terminal body 1201. When the conductive part 22 is located on the inner side of the post terminal body 1201, the first welding part 71 penetrates the conductive part 22 to connect to the post terminal body 1201; when the conductive part 22 is overlapped on the outer side of the post terminal body 1201, the first welding part 71 penetrates the post terminal body 1201 to connect to the conductive part 22. In order to ensure the reliability of welding, the first welding part 71 is provided to penetrate the post terminal body 1201 during welding to increase the welding strength. At this time, the first welding part 71 is exposed outside the post terminal body 1201, which may affect the reliability of the weld mark and a subsequent connection to the busbar component. Therefore, the first cover plate 13 is provided to be fitted to the post terminal body 1201 to cover the first welding part 71.

In the above technical solution, by locating the first welding part 71 at least partially on the side of the post terminal body 1201 away from the active substance-coated part 21, in one aspect, the metal residues generated in the welding process can be reduced from entering the interior of the battery cell 10, and to a certain extent, the metal residues can be prevented from overlapping the positive and negative electrode plates, thereby reducing the possibility of internal short circuit in the battery cell 10. In another aspect, the first welding part 71 can be kept away from the active substance-coated part 21. When the post terminal body 1201 and the conductive part 22 are welded at high temperature to form the first welding part 71, since the first welding part 71 is kept away from the active substance-coated part 21 as a high-temperature heat source, the influence of the high temperature generated by the welding on the active substance-coated part 21 can be reduced, and the probability of damage to the active substance-coated part 21 can be reduced, thereby improving the reliability of the battery cell 10. In addition, after the post terminal body 1201 is welded to the conductive part 22 inside the housing 11, when the battery cell 10 is welded to the busbar component 30, the first cover plate 13 can play a protective role by shielding the first welding part 71, which reduces the influence of the high temperature generated when the post terminal body 1201 is welded to the busbar component 30 on the first welding part 71, thereby improving the connection reliability between the post terminal body 1201 and the conductive part 22.

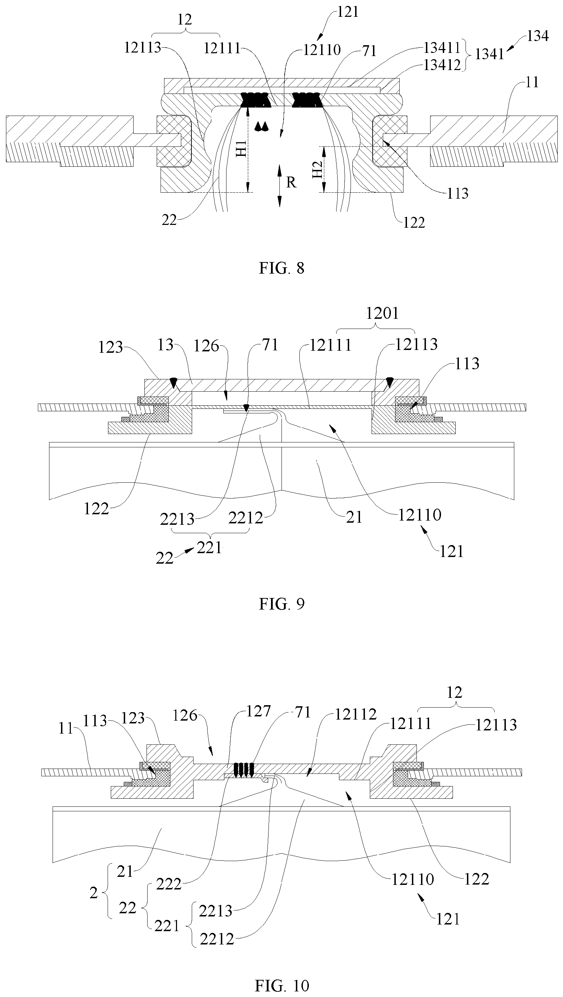

For example, there is a certain probability that the high temperature generated when the post terminal body 1201 is welded to the busbar component 30 will cause the first welding part 71 to melt again. At this time, due to the blocking of the first cover plate 13, the high temperature generated when the post terminal body 1201 is welded to the busbar component 30 is weakened when it is transmitted to the first welding part 71, thereby making the first welding part 71 between the post terminal body 1201 and the conductive part 22 not easy to be melted again, thereby improving the reliability of the battery cell 10 in the manufacturing process. In some embodiments, referring to FIGs. 8 and 9, the post terminal body 1201 is provided with a first accommodating groove 12110, a surface of the first post terminal body 12 on a side facing the active substance-coated part 21 is a post terminal inner end surface 122, an opening of the first accommodating groove 12110 is formed on the post terminal inner end surface 122, and the first accommodating groove 12110 is provided with a first end wall 12111 and a first side wall 12113; the first end wall 12111 is located on a side of the first side wall 12113 distal to the active substance-coated part 21, at least a part of the conductive part 22 is accommodated in the first accommodating groove 12110, the first welding part 71 is provided on the first end wall 12111, and the first cover plate 13 is fitted to the post terminal body 1201 and covers the first welding part 71.

Illustratively, the first accommodating groove 12110 is a groove body, and the groove body is a groove-shaped structure having a certain depth. For example, when the first post terminal 12 is provided on the upper end wall of the housing 11 and the post terminal inner end surface 122 is the lower surface of the first post terminal 12, the first accommodating groove 12110 is formed as an accommodating groove with an opening open downward and a groove wall recessed upward. For another example, when the first post terminal 12 is provided on the lower end wall of the housing 11 and the post terminal inner end surface 122 is the upper surface of the first post terminal 12, the first accommodating groove 12110 is formed as an accommodating groove with an opening open upward and a groove wall recessed downward.

In the above technical solution, in one aspect, the provision of the first accommodating groove 12110 on the first post terminal 12 can reduce the weight of the first post terminal 12 to a certain extent, so as to improve the gravimetric energy density of the battery cell 10 and the battery 100. In another aspect, as the opening of the first accommodating groove 12110 is formed on the post terminal inner end surface 122 and the post terminal inner end surface 122 is the surface of the first post terminal 12 on a side proximal to the active substance-coated part 21, the first accommodating groove 12110 can be open toward the active substance-coated part 21, thereby facilitating the conductive part 22 to extend into the first accommodating groove 12110 and improving the assembly efficiency. Moreover, the first accommodating groove 12110 in this type facilitates processing and thus improves production efficiency.

Furthermore, the first accommodating groove 12110 is easy to be processed to have a relatively large volume, so as to accommodate more conductive parts 22. Meanwhile, since the first accommodating groove 12110 is open toward the active substance-coated part 21, the first accommodating groove 12110 can also be used as a buffering and temporary storage structure for an electrolytic solution, such that a larger amount electrolytic solution can be accommodated in the housing 11; since the electrolytic solution will be consumed during the charging and discharging processes of the battery cell 10, the service life of the battery cell 10 can be prolonged when there is a larger amount of electrolytic solution. Also, since the first accommodating groove 12110 is open toward the active substance-coated part 21, the first accommodating groove 12110 can also be used as an accommodating and buffering structure for gas generated inside the battery cell assembly 2, so as to reduce the expansion of the battery cell 10, thereby improving the reliability and stability of the battery cell 10.

In addition, since the first accommodating groove 12110 is located on the inner side of the first post terminal 12, external foreign substances and impurities are not easy to enter the first accommodating groove 12110, thereby reducing the influence of external foreign substances and impurities on the battery cell assembly 2, improving the stability and reliability of the battery cell assembly 2, and further improving the stability and reliability of the battery cell 10 and the battery 100.

Secondly, by providing the first welding part 71 between the post terminal body 1201 and the conductive part 22 on the first end wall 12111, in one aspect, the first welding part 71 can be further far away from the active substance-coated part 21 when in the first accommodating groove 12110, thereby further reducing the influence of the high temperature generated when the post terminal body 1201 and the conductive part 22 are welded to form the first welding part 71 on the active substance-coated part 21; in another aspect, not only the first accommodating groove 12110 has the function of accommodating at least a part of the conductive part 22, but also the wall of the first accommodating groove 12110 has the function of realizing an electrical connection to the conductive part 22, such that the structure of the first post terminal 12 can be simplified, thereby facilitating the processing of the first post terminal 12, and the structure of the conductive part 22 can also be simplified, thereby reducing the redundancy of the conductive part 22 and lowering the cost of the conductive part 22. Furthermore, by utilizing the welding of the first end wall 12111 to the conductive part 22, the welding region formed by the first welding part 71 can be set relatively large, which can not only reduce the difficulty of welding, but also improve the reliability and stability of welding, thereby improving the performance of the battery cell 10.

In addition, since the first welding part 71 is located in the first accommodating groove 12110, not only can the first welding part 71 be prevented from protruding outside the first post terminal 12 and occupying the space outside the first post terminal 12, but also the first welding part 71 can be protected by the first cover plate 13, thereby improving the welding reliability and stability of the conductive part 22 and the first post terminal 12.

In addition, in the embodiments of the present application, the first end wall 12111 is configured as a closed structure without any perforations, such that the first accommodating groove 12110 is isolated from the space outside the housing 11, avoiding the problem of leakage of the electrolytic solution in the housing 11 from the first accommodating groove 12110.

Referring to FIGs. 8 and 9, in some optional embodiments, a part of the conductive part 22 matches a part of the first end wall 12111 in shape and is provided in a fitting manner to achieve an electrical connection, such that the first welding part 71 between the conductive part 22 and the first end wall 12111 can extend in the length or width direction of the first end wall 12111. For example, when the first end wall 12111 is a plane, a part of the conductive part 22 may also be a plane and fitted to the first end wall 12111, and the fitted position is welded. As such, the welding area can be increased, thereby improving the reliability and stability of welding.

It is worth noting that the shape of the first end wall 12111 is not limited. For example, the first end wall may be in a flat-plate shape, an arc-plate shape or the like. When the first end wall 12111 is of a flat plate structure, the first end wall 12111 is provided at an included angle to an axial direction R of the first post terminal 12. For example, the first end wall may be of a flat plate structure perpendicular to the axial direction R of the first post terminal 12, or an inclined plate structure that is not perpendicular to the axial direction R of the first post terminal 12, but the inclination direction is not limited.

Certainly, in other embodiments of the present application, the first welding part 71 between the conductive part 22 and the first end wall 12111 may not extend in a length or width direction of the first end wall 12111, and for example, may also be a plurality of discretely arranged welding spots. For example, the conductive part 22 has a plurality of portions that are spaced from each other and separately welded to the first end wall 12111, which will not be described in detail herein.

In some embodiments, referring to FIG. 10, the first end wall 12111 is provided with a first recess 12112, and at least a part of the first welding part 71 is located in the first recess 12112. It can be understood that a sinking direction of the first recess 12112 is a direction away from the active substance-coated part 21. Illustratively, at least a part of the conductive part 22 may be provided in the first groove 12112 and connected to a portion of the first end wall 12111 used for defining the first groove 12112.

In the above technical solution, in one aspect, the first recess 12112 can be used to pre-position and limit the first welding part 71, which is not only conducive to accurately locating the position for welding and improving the production efficiency, but also conducive to improving the stability and reliability of the conductive part 22 and ensuring the stability and reliability of the battery cell 10 in the charging and discharging processes; in another aspect, by providing the first recess 12112 on the first end wall 12111, the wall thickness of a part of the first end wall 12111 can be locally reduced, which is not only conducive to welding, but also conducive to reducing the weight of the first post terminal 12 and improving the gravimetric energy density of the battery cell 10.

In some optional embodiments, a part of the conductive part 22 matches the first side wall 12113 in shape and is provided in a fitting manner. For example, when the first side wall 12113 is a curved surface, a part of the conductive part 22 may also be a curved surface and fitted to the first side wall 12113, and the fitted position is welded, such that the first welding part 71 between the conductive part 22 and the first side wall 12113 extends along the first side wall 12113. As such, the welding area can be increased, and thus the reliability and stability of welding are improved.

Certainly, the present application is not limited to this. In other embodiments of the present application, the first welding part 71 between the conductive part 22 and the first side wall 12113 may not extend along the first side wall 12113, and for example, may also be a plurality of discretely arranged welding spots. For example, the conductive part 22 has a plurality of portions that are spaced from each other and separately welded to the first side wall 12113, which will not be described in detail herein.

It should be noted that the number of first side walls 12113 is not limited and may be determined according to the shape of the first accommodating groove 12110, as long as one end of each first side wall 12113 distal to the opening of the first accommodating groove 12110 is connected to the first end wall 12111. Illustratively, when the cross-sectional shape of the first accommodating groove 12110 is circular or elliptical, the first end wall 12111 is circular or elliptical. The number of the first side wall 12113 is one, and the first side wall is annular and provided around the circumferential edge of the first end wall 12111. Further illustratively, when the cross-sectional shape of the first accommodating groove 12110 is rectangular or track-shaped, the first end wall 12111 is rectangular or track-shaped. The number of the first side walls 12113 is four, and the first side walls are separately connected to four sides of the first end wall 12111.

It should be further noted that the first accommodating groove 12110 is not limited to the form defined by the first end wall 12111 and the first side wall 12113. For example, in some embodiments, the first end wall 12111 may not exist. In this case, one end of each first side wall 12113 distal to the opening of the first accommodating groove 12110 converges together, such that the first accommodating groove 12110 is defined only by a plurality of first side walls 12113. In this case, the conductive part 22 may be electrically connected to the first side wall 12113 to ensure normal charging and discharging processes of the battery cell 10.

In addition, it is worth noting that in other embodiments of the present application, the first welding part 71 between the conductive part 22 and the first post terminal 12 may not be located in the first accommodating groove 12110. For example, the first welding part 71 between the conductive part 22 and the first post terminal 12 may also be located on a post terminal inner end surface 122. At this time, a part of the conductive part 22 is accommodated in the first accommodating groove 12110, which can also save space to a certain extent, thereby improving the energy density of the battery cell 10.

Referring to FIGs. 9 and 10, in some embodiments, the first post terminal 12 is provided with a first groove 126, a surface of the first post terminal 12 on a side distal to the active substance-coated part 21 is a post terminal outer end surface 123, an opening of the first groove 126 is formed on the post terminal outer end surface 123, and the first cover plate 13 covers the opening of the first groove 126.

It can be understood that the first groove 126 is a groove body, and the groove body is a groove-shaped structure having a certain depth. Furthermore, when the first post terminal 12 is provided on an upper end wall of the housing 11 and the post terminal outer end surface 123 is an upper surface of the first post terminal 12, the first groove 126 is formed as a groove with an opening open upward and a wall recessed downward (that is, recessed toward a square proximal to the battery cell assembly 2). For another example, when the first post terminal 12 is provided on a lower end wall of the housing 11 and the post terminal outer end surface 123 is a lower surface of the first post terminal 12, the first groove 126 is formed as a groove with an opening downward and a wall recessed upward (that is, recessed toward a square proximal to the battery cell assembly 2).

In the above technical solution, in one aspect, since the first post terminal 12 is provided with the first groove 126, the weight of the first post terminal 12 can be further reduced, so as to improve the gravimetric energy density of the battery cell 10 and the battery 100; in another aspect, the first groove 126 is located on an outer side of the first post terminal 12, that is, the first groove is open to a side of the first post terminal 12 away from the interior of the housing 11, and the first groove 126 can be used to accommodate or mount structural components of the battery 100 that electrically connect various battery cells 10, so as to make full use of the space in the first post terminal 12, thereby improving the space utilization and volumetric energy density of the battery 100; by providing the first groove 126 and enabling the first cover plate 13 to cover the opening of the first groove 126, the welding of the first cover plate 13 is facilitated, thereby improving the assembly efficiency.

In addition, since the first post terminal 12 is provided with both the first accommodating groove 12110 and the first groove 126, the first groove 126 is located on a side of the first accommodating groove 12110 distal to the active substance-coated part 21, and the first groove 126 is open in a direction away from the first accommodating groove 12110, it is conducive to laser welding the conductive part 22 to the first end wall 12111 through the first groove 126 from the outside of the first post terminal 12, that is, a side of the first post terminal 12 distal to the active substance-coated part 21, so as to facilitate the electrical connection between the conductive part 22 and the first post terminal 12 through external welding. That is, by the above structural arrangement, external welding of the first post terminal 12 to the conductive part 22 through the first groove 126 can be facilitated, which facilitates processing and manufacture of the battery cell 10 and can save processing and manufacturing costs.

Further, in order to conveniently and effectively weld the conductive part 22 to the wall of the first accommodating groove 12110 through the first groove 126, and improve the welding reliability of the conductive part 22 to the wall of the first accommodating groove 12110, in the embodiments of the present application, a part between the first groove 126 and the first accommodating groove 12110 can be laser welded to the conductive part 22, that is, a spacer part 127 shown in FIG. 10 can be laser welded to the conductive part 22 to achieve an electrical connection between the battery cell assembly 2 and the first post terminal 12. The spacer part 127 of the first post terminal 12 located between the first groove 126 and the first accommodating groove 12110 is thin. The spacer part 127 isolates the first groove 126 from the first accommodating groove 12110. A wall surface of the spacer part 127 on a side proximal to the active substance-coated part 21 can be used as the first end wall 12111. When the conductive part 22 needs to be welded to the first end wall 12111, since the spacer part 127 is thin, the welding of the conductive part 22 to the first end wall 12111 can be achieved through the first groove 126, thereby improving the convenience and reliability of welding.

In some embodiments, the first accommodating groove 12110 can be configured as a shape in which the length of the cross-section is greater than the width, such as a rectangle, an ellipse, and a track shape. The first welding part 71 formed by welding the conductive part 22 to the first post terminal 12 may be a long strip-shaped weld mark parallel to the length direction of the first accommodating groove 12110, so as to improve the welding reliability and increase the current passage performance. Illustratively, when the conductive part 22 is welded to the first end wall 12111 to form a first welding part 71 as a long strip-shaped weld mark, the width of the weld mark can be greater than or equal to 6 mm, and the distance between the weld mark and the first side wall 12113 can be greater than or equal to 1 mm, so as to ensure the current passage capacity of the battery cell 10 while ensuring the convenience and reliability of welding.

Referring to FIG. 9, by providing a first cover plate 13 that covers the first groove 126, the first post terminal 12 can be indirectly electrically connected to the busbar component 30 through the first cover plate 13, and the electrical connection between the first cover plate 13 and the busbar component 30 can be more convenient and the electrical connection area can be larger by adjusting the position and structure of the first cover plate 13. Therefore, by providing the first cover plate 13, the electrical connection between adjacent battery cells 10 in the battery 100 can be facilitated, and since the position where the battery cells 10 are electrically connected to each other is at the first cover plate 13, the first welding part 71 between the conductive part 22 and the first post terminal 12 can be separated by the first groove 126, and there is less interference between the two, which can further improve the stability and reliability of the battery cells 10.

It should be noted that, the specific structure of the battery cell assembly 2 in the embodiments of the present application is not limited. For example, the battery cell assembly may include but is not limited to the following two embodiments.

In some embodiments, referring to FIGs. 9-11, the active substance-coated part 21 includes a current collector 211 and an active substance layer 212 provided on the current collector 211, the conductive part 22 includes a tab part 221 electrically connected to the current collector 211, the tab part 221 includes a plurality of tab plates 2211, parts of the plurality of tab plates 2211 proximal to the current collector 211 converge (that is, get together in a direction towards each other) to form a first gathering part 2212, parts of the plurality of tab plates 2211 distal to the current collector 211 converge and are connected to form a second gathering part 2213, the first gathering part 2212 connects the second gathering part 2213 and the active substance-coated part 21, at least a part of the second gathering part 2213 is accommodated in the first accommodating groove 12110, and the second gathering part 2213 is connected to the first end wall 12111 through the first welding part 71.

In the above technical solution, the plurality of tab plates 2211 only converge (that is, get together in a direction towards each other) and gather but are not connected when forming the first gathering part 2212, while the plurality of tab plates 2211 not only converge and gather but are also connected into an integrated structure when forming the second gathering part 2213. For example, the plurality of tab plates 2211 may be connected into an integrated plate structure by welding (such as ultrasonic welding) to form the second gathering part 2213, but the present application is not limited thereto. For example, the plurality of tab plates 2211 may also converge and be connected to form the second gathering part 2213 by conductive adhesive bonding, etc., which will not be described in detail herein.

It should be noted that in the embodiments of the present application, the tab plates 2211 are divided into positive electrode tab plates 2211 and negative electrode tab plates 2211. The positive electrode tab plates 2211 that need to gather together are stacked together and ultrasonically pre-welded to form a second gathering part 2213 of the positive electrode, which can reduce the gap between layers and enable the plurality of fluffy positive electrode tab plates 2211 to form a plate structure of a certain rigidity. Similarly, the negative electrode tab plates 2211 that need to gather together are stacked together and ultrasonically pre-welded to form a second gathering part 2213 of the negative electrode, which can reduce the gap between layers and enable the plurality of fluffy negative electrode tab plates 2211 to form a plate structure of a certain rigidity.

In the above technical solution, "parts of the plurality of tab plates 2211 proximal to the current collector 211 converge to form a first gathering part 2212, and parts of the plurality of tab plates 2211 distal to the current collector 211 converge and are connected to form a second gathering part 2213" is intended to illustrate that: in the extension direction of the tab plates 2211, the first gathering part 2212 and the second gathering part 2213 are sequentially provided in a direction away from the current collector 211, and the specific positions of the first gathering part 2212 and the second gathering part 2213 are not limited, that is, it is not required how close the first gathering part 2212 is to the current collector 211, or how far the second gathering part 2213 is from the current collector 211. In some optional examples, the current collector 211 and the tab plates 2211 may be an integrated member, such as an integrally formed aluminum foil for the positive electrode plates, and an integrally formed copper foil for the negative electrode plates.

In the above technical solution, since the tab part 221 includes the second gathering part 2213 formed by converging and connecting the plurality of tab plates 2211, at least a part of the second gathering part 2213 is accommodated in the first accommodating groove 12110, which facilitates the connection between the conductive part 22 and the first post terminal 12, and can make full use of the space of the first post terminal 12, thereby improving the volumetric energy density of the battery cell 10.

Referring to FIGs. 9-11, in a first embodiment, at least a part of the second gathering part 2213 is accommodated in the first accommodating groove 12110, such that the space in the first post terminal 12 can be more fully utilized, and the space occupied by the tab part 221 in the housing 11 can be further reduced, so as to accommodate an active substance-coated part 21 of a larger size, thereby improving the volumetric energy density of the battery cell 10; moreover, the redundancy of the tab part 221 in the housing 11 can be better reduced, thereby further reducing the probability of short circuit between the tab part 221 and the active substance-coated part 21.

In this embodiment, the second gathering part 2213 is connected to the first end wall 12111 through the first welding part 71. For example, referring to FIG. 9, when the second gathering part 2213 is welded to the first end wall 12111 through the first welding part 71, such as when the second gathering part 2213 is welded (for example, laser welded) to the first end wall 12111, the composition of the battery cell assembly 2 can be simplified, thereby reducing the number of components, simplifying the assembly process, and improving the assembly efficiency. The first welding part 71 between the second gathering part 2213 and the first end wall 12111 can extend in the length direction or the width direction of the first end wall 12111. Furthermore, the first end wall 12111 is provided with a first recess 12112, the first welding part 71 between the second gathering part 2213 and the first end wall 12111 can also be located in the first recess 12112, and the like. The corresponding technical effects can refer to the introduction of the above embodiments and will not be described in detail herein.

Referring to FIG. 10, in some embodiments, the active substance-coated part 21 includes a current collector 211 and an active substance layer 212 provided on the current collector 211, the conductive part 22 includes a tab part 221 and an adapting piece 222, the tab part 221 includes a plurality of tab plates 2211, parts of the plurality of tab plates 2211 proximal to the current collector 211 converge to form a first gathering part 2212, parts of the plurality of tab plates 2211 distal to the current collector 211 converge and are connected to form a second gathering part 2213, the first gathering part 2212 connects the second gathering part 2213 and the active substance-coated part 21, the adapting piece 222 is connected to the second gathering part 2213, at least a part of the adapting piece 222 is accommodated in the first accommodating groove 12110, and the adapting piece 222 is connected to the first end wall 12111 through the first welding part 71.

In the above technical solution, the active substance-coated part 21 can be electrically connected to the first post terminal 12 through the first gathering part 2212, the second gathering part 2213, and the adapting piece 222 in sequence. The electrical connection position of the conductive part 22 and the first post terminal 12 is located on the adapting piece 222. For example, the electrical connection can be achieved by welding (for example, laser welding) the adapting piece 222 to the first post terminal 12. In addition, the adapting piece 222 and the tab plate 2211 are two separate components and are connected by welding (such as ultrasonic welding) or the like.

In the above technical solution, in one aspect, by accommodating at least a part of the adapting piece 222 in the first accommodating groove 12110, the space in the first post terminal 12 can be more fully utilized, and the space occupied by the conductive part 22 in the housing 11 can be further reduced, so as to improve the volumetric energy density of the battery cell 10. In another aspect, by using the adapting piece 222 and the first welding part 71 to achieve an indirect electrical connection between the second gathering part 2213 and the first post terminal 12, the adapting piece 222 can be welded to the first post terminal 12 at a part avoiding the second gathering part 2213, such that the welding between the adapting piece 222 and the first post terminal 12 is firm, the risk of welding cracking is low, and the reliability and stability of the battery cell 10 can be further improved; meanwhile, by electrically connecting the first post terminal 12 and the tab plates 2211 through the adapting piece 222, the configuration of the tab plates 2211 can also be simplified.

The connection mode and position of the first welding part 71 between the adapting piece 222 and the first post terminal 12 are not limited. For example, the first welding part 71 between the adapting piece 222 and the first post terminal 12 can be located on the first end wall 12111 and/or the first side wall 12113. Further, the first welding part 71 between the adapting piece 222 and the first end wall 12111 can extend in the length direction or the width direction of the first end wall 12111. Furthermore, the first end wall 12111 is provided with a first recess 12112, the first welding part 71 between the adapting piece 222 and the first end wall 12111 can be located in the first recess 12112, and the like. The corresponding technical effects can refer to the introduction of the above embodiments and will not be described in detail herein. When the first welding part 71 between the adapting piece 222 and the first post terminal 12 is located on the first end wall 12111 and/or the first side wall 12113, since at least a part of the adapting piece 222 is accommodated in the first accommodating groove 12110, the structure of the adapting piece 222 can be simplified, thereby reducing the redundancy and lowering the costs.

Referring to FIGs. 9-11, in some embodiments, at least a part of the first gathering part 2212 is accommodated in the first accommodating groove 12110. In the above technical solution, at least a part of the first gathering part 2212 of the tab plate 221 is accommodated in the first accommodating groove 12110, such that the space in the first post terminal 12 can be more fully utilized, and the space occupied by the tab part 221 in the housing 11 can be further reduced, so as to accommodate an active substance-coated part 21 of a larger size, thereby improving the volumetric energy density of the battery cell 10; moreover, the redundancy of the tab part 221 in the housing 11 can be better reduced, thereby further reducing the probability of short circuit between the tab part 221 and the active substance-coated part 21.

Referring to FIGs. 10-11, in a second embodiment, the active substance-coated part 21 includes a current collector 211 and an active substance layer 212 provided on the current collector 211, the conductive part 22 includes a tab part 221 and an adapting piece 222, the tab part 221 includes a plurality of tab plates 2211 electrically connected to the current collector 211, parts of the plurality of tab plates 2211 proximal to the current collector 211 converge to form a first gathering part 2212, parts of the plurality of tab plates 2211 distal to the current collector 211 converge and are connected to form a second gathering part 2213, and the adapting piece 222 is electrically connected to the second gathering part 2213. When the accommodating part 121 is provided with the first accommodating groove 12110, at least a part of the adapting piece 222 may be accommodated in the first accommodating groove 12110 and electrically connected to the first post terminal 12.

In the above technical solution, compared with the solution including the adapting piece 222 in the first embodiment, in the second embodiment, at least a part of the adapting piece 222 is accommodated in the first accommodating groove 12110, but the relative positions of the tab part 221 and the first accommodating groove 12110 are not limited, that is, at least a part of the tab part 221 may be accommodated in the first accommodating groove 12110, and the tab part 221 may also be completely located outside the first accommodating groove 12110, thereby meeting different structural design requirements.

In the above technical solution, by accommodating at least a part of the adapting piece 222 in the first accommodating groove 12110, the adapting piece 222 can occupy the space in the first post terminal 12, such that the space occupied by the adapting piece 222 in the housing 11 can be reduced, so as to accommodate an active substance-coated part 21 of a larger size, thereby improving the volumetric energy density of the battery cell 10; moreover, the probability of short circuit between the adapting piece 222 and the active substance-coated part 21 can be reduced, and the risk of short circuit of the battery cell assembly 2 can be reduced, thereby improving the stability and reliability of the battery cell 10. In addition, by accommodating at least a part of the conductive part 22 in the accommodating part 121, it is also conducive to stabilizing and limiting the conductive part 22, so as to improve the stability of the conductive part 22, thereby facilitating welding of the conductive part 22 with the first post terminal 12 to improve the assembly efficiency.

In addition, by using the adapting piece 222 to achieve an indirect electrical connection between the second gathering part 2213 and the first post terminal 12, the adapting piece 222 can be welded to the first post terminal 12 at a part avoiding the second gathering part 2213, such that the welding between the adapting piece 222 and the first post terminal 12 is secure, the risk of welding cracking is low, and the reliability and stability of the battery cell 10 can be further improved. Meanwhile, by electrically connecting the first post terminal 12 and the tab plates 2211 through the adapting piece 222, the configuration of the tab plates 2211 can also be simplified.

For example, in some optional embodiments, for example, Embodiment I above or the third embodiment below, when the second gathering part 2213 is directly electrically connected to the first post terminal 12, the conductive part 22 may consist only of the positive electrode tab and the negative electrode tab in each electrode assembly 2a. For example, in other embodiments, for example, in the first or second embodiment above or a third or fourth embodiment below, when the second gathering part 2213 is electrically connected to the first post terminal 12 indirectly through the adapting piece 222, the conductive part 22 may be composed simultaneously of the positive electrode tab and the negative electrode tab in each electrode assembly 2a and each adapting piece 222.

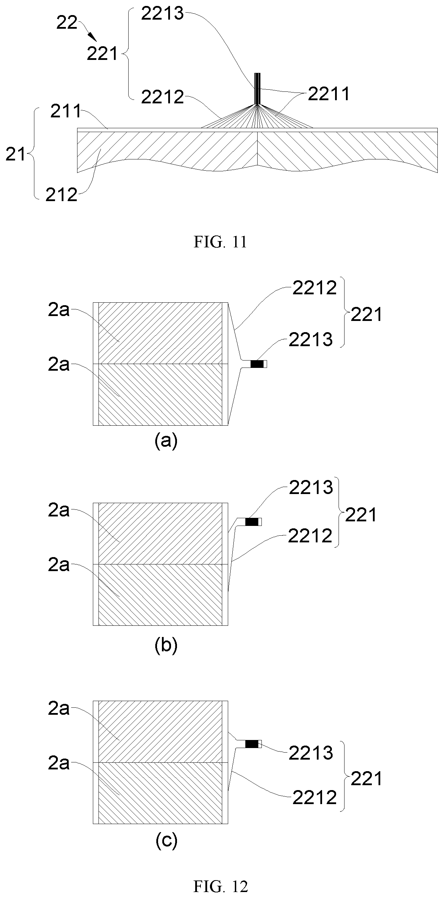

In some embodiments, when the battery cell assembly 2 includes two electrode assemblies 2a, the tab plates 2211 of the two electrode assemblies 2a may be gathered together, and the gathering part is located at the center position between the two electrode assemblies 2a to form a symmetrical gathering form (for example, as shown in FIGs. 11 and 12(a)). Alternatively, in other embodiments, when the tab plates 2211 of the two electrode assemblies 2a are gathered together, the gathering position may also be closer to one of the electrode assemblies 2a to form an asymmetrical gathering form (for example, as shown in FIGs. 12(b) and 12(c)). In addition, the electrode assembly 2a may be in a full-tab form (for example, as shown in FIG. 12(a)) or a half-tab form (for example, as shown in FIGs. 11, 12(b), and 12(c)).

Certainly, the present application is not limited thereto, and the tab plates 2211 of the same polarity of the two electrode assemblies 2a may not be gathered together. For example, the tab plates 2211 of each electrode assembly 2a are gathered individually according to the positive and negative electrodes, that is, the positive electrode tabs of one electrode assembly 2a are gathered individually, and the positive electrode tabs of another electrode assembly 2a are also gathered individually, which will not be described in detail herein.

It should be noted that the accommodating part 121 in the embodiments of the present application is not limited to having the form of the first accommodating groove 12110. For example, other optional embodiments will be given later.

Referring to FIG. 8, in some embodiments, the housing 11 is provided with a mounting hole 113, and the first post terminal 12 is mounted in the mounting hole 113; in an axial direction of the first post terminal 12, a depth H1 of the first accommodating groove 12110 is greater than or equal to a minimum distance H2 from the post terminal inner end surface 122 to the mounting hole 113.

It should be noted that the specific shape of the first accommodating groove 12110 is not limited, and may be a regular shape or an irregular shape, for example, a columnar groove of constant cross-section with a rectangular, elliptical, or track-shaped cross-section, a trapezoidal groove with a rectangular cross-section and a gradually changing cross-sectional size, a hemispherical groove with a circular cross-section and a gradually changing cross-sectional size, a semi-ellipsoidal groove with an elliptical cross-section and a gradually changing cross-sectional size, or the like. Therefore, the depth H1 of the first accommodating groove 12110 refers to: the maximum depth of the first accommodating groove 12110 in the axial direction R of the first post terminal 12.

Since in the axial direction R of the first post terminal 12, the depth H1 of the first accommodating groove 12110 is greater than or equal to the minimum distance H2 from the post terminal inner end surface 122 to the mounting hole 113, a volume of the first post terminal 12 can be fully utilized, such that the first accommodating groove 12110 has a larger depth, which is conducive to accommodating more conductive parts 22, and then can reduce the space occupied by the conductive parts 22 in the housing 11 to a greater extent, further improve the energy density of the battery cell 10, and further reduce the redundancy of the conductive part 22 in the housing 11. Meanwhile, since the first accommodating groove 12110 has a larger depth, gases produced by the battery cell assembly 2 can also be accommodated, which ensures the reliability and stability of the battery cell 10, and can also accommodate a larger amount of electrolytic solution to ensure the service life of the battery cell 10.

It should be noted that the volume of the first accommodating groove 12110 is not limited. For example, in some specific examples, the volume of the first accommodating groove 12110 that can be used for accommodating the conductive part 22 (referred to as a first volume V1) may be greater than or equal to 298 mm³, such that the first accommodating groove 12110 may have sufficient space to accommodate the conductive part 22 and facilitate welding of the conductive part 22 to the first post terminal 12. However, when the first volume V1 of the first accommodating groove 12110 is less than 298 mm³, the accommodating capacity of the first accommodating groove 12110 for the conductive part 22 is relatively weakened, and the welding difficulty of the conductive part 22 with the first post terminal 12 is increased.

It is worth noting that the first volume V1 of the first accommodating groove 12110 is: the difference between a total volume V2 of the first accommodating groove 12110 and a volume of other components required to be accommodated in the first accommodating groove 12110 except the conductive part 22 (recorded as a second volume V3), that is, V1 = V2 - V3. It can be understood that when the first accommodating groove 12110 does not need to accommodate other components except the conductive part 22, the second volume V3 may be 0 mm³. For example, the first volume V1 of the first accommodating groove 12110 may be 300 mm³-1500 mm³, for example, 300 mm³, 400 mm³, 500 mm³, 600 mm³, 700 mm³, 800 mm³, 1000 mm³, 1200 mm³, 1400 mm³, 1500 mm³, or the like.

Optionally, referring to FIG. 8, the first accommodating groove 12110 can be provided corresponding to the position of the mounting hole 113, or in other words, on a projection plane perpendicular to an axial direction R of the first post terminal 12, an orthographic projection of the first accommodating groove 12110 is located within the range of an orthographic projection of the mounting hole 113, such that the first accommodating groove 12110 can have a relatively great depth to accommodate more conductive part 22, thereby reducing the space occupied by the conductive part 22 in the housing 11 to a greater extent.

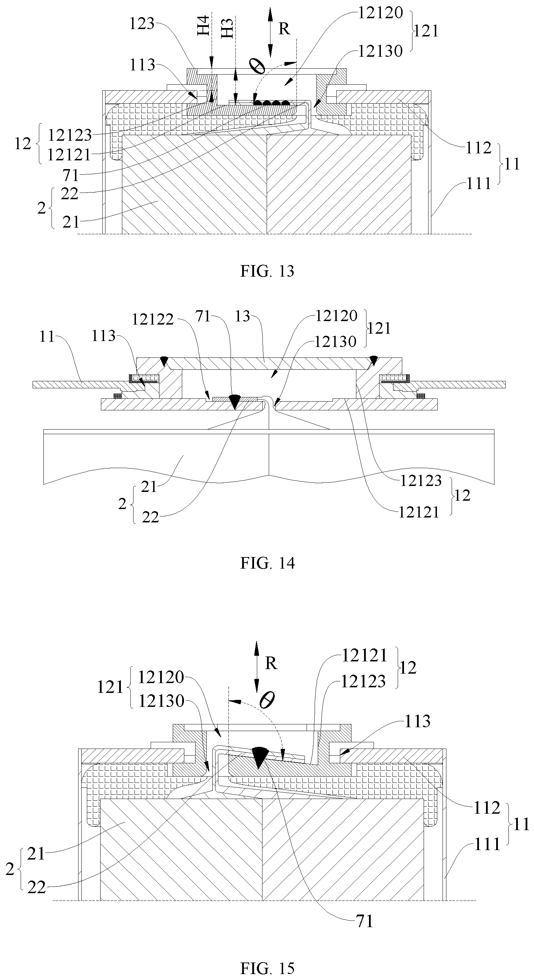

In some embodiments, referring to FIG. 13, the post terminal body 1201 is provided with a second accommodating groove 12120, a surface of the post terminal body 1201 on a side distal to the active substance-coated part 21 is a post terminal outer end surface 123, an opening of the second accommodating groove 12120 is formed on the post terminal outer end surface 123, the second accommodating groove 12120 is provided with a second end wall 12121 proximal to the active substance-coated part 21, the first welding part 71 is provided on the second end wall 12121, and the first cover plate 13 is fitted to the post terminal body 1201 and covers the opening of the second accommodating groove 12120.

It can be understood that the second accommodating groove 12120 is a groove body, and the groove body is a groove-shaped structure of a certain depth. For example, when the first post terminal 12 is provided on the upper end wall of the housing 11 and the post terminal outer end surface 123 is the upper surface of the first post terminal 12, the second accommodating groove 12120 is formed as an accommodating groove with an opening open upward and a groove wall recessed downward. For another example, when the first post terminal 12 is provided on the lower end wall of the housing 11 and the post terminal outer end surface 123 is the lower surface of the first post terminal 12, the second accommodating groove 12120 is formed as an accommodating groove with an opening open downward and a groove wall recessed upward.

In the above technical solution, referring to FIG. 13, in one aspect, by providing the second accommodating groove 12120 on the first post terminal 12, the weight of the first post terminal 12 can be reduced to a certain extent, so as to improve the gravimetric energy density of the battery cell 10 and the battery 100; in another aspect, since the opening of the second accommodating groove 12120 is formed on the post terminal outer end surface 123, and the post terminal outer end surface 123 is a surface of the first post terminal 12 on a side distal to the active substance-coated part 21, the second accommodating groove 12120 can be open in a direction away from the active substance-coated part 21. In this way, when at least a part of the conductive part 22 is accommodated in the second accommodating groove 12120, the accommodation and arrangement of the conductive part 22 can be easily realized through the opening of the second accommodating groove 12120, the electrical connection operation between the conductive part 22 and the first post terminal 12 can be easily realized through the opening of the second accommodating groove 12120, and the like, thereby reducing the production difficulty of the battery cell 10 and improving the production efficiency of the battery cell 10.

The first welding part 71 is provided on the second end wall 12121, that is, not only the second accommodating groove 12120 has the function of accommodating at least a part of the conductive part 22, but also the wall of the second accommodating groove 12120 has the function of welding to the conductive part 22, such that the structure of the first post terminal 12 can be simplified, thereby facilitating the processing of the first post terminal 12. Furthermore, the opening direction of the opening of the second accommodating groove 12120 enables the welding operation between the conductive part 22 and the wall of the second accommodating groove 12120 to be easily performed through the opening of the second accommodating groove 12120, such that the difficulty of welding can be reduced. Furthermore, by utilizing the wall of the second accommodating groove 12120 to achieve a welding connection to the conductive part 22, the welding region formed by the first welding part 71 between the conductive part 22 and the first post terminal 12 can be relatively large, thereby improving the reliability and stability of the electrical connection, and further improving the performance of the battery cell 10.

In addition, since the first welding part 71 between the conductive part 22 and the first post terminal 12 is located in the second accommodating groove 12120, not only can the first welding part 71 be prevented from protruding outside the first post terminal 12 and occupying the space outside the first post terminal 12, but also the first welding part 71 can be protected by the first post terminal 12, thereby improving the reliability and stability of the electrical connection between the conductive part 22 and the first post terminal 12.

Referring to FIGs. 13 and 14, in some embodiments, a part of the conductive part 22 matches a part of the second end wall 12121 in shape and is provided in a fitting manner to achieve an electrical connection, such that the first welding part 71 between the conductive part 22 and the second end wall 12121 can extend in the length or width direction of the second end wall 12121. For example, when the second end wall 12121 is a plane, a part of the conductive part 22 may also be a plane and fitted to the second end wall 12121, and the fitted position is welded. As such, the area of the first welding part 71 can be increased, thereby improving the reliability and stability of welding.

It is worth noting that the shape of the second end wall 12121 is not limited. For example, the second end wall may be of a flat plate structure or an arc plate structure. When the second end wall 12121 is of a flat plate structure, the second end wall 12121 is provided at an included angle to an axial direction R of the first post terminal 12. For example, the second end wall may be of a flat plate structure perpendicular to the axial direction R of the first post terminal 12, or an inclined flat plate structure that is not perpendicular to the axial direction R of the first post terminal 12, but the inclination direction is not limited.

In the above technical solution, since the conductive part 22 is connected to the post terminal body 1201 through the first welding part 71, there is welding slag at the first welding part 71. By providing the first welding part 71 on the second end wall 12121, the welding slag can be kept away from the active substance-coated part 21, thereby reducing the amount of welding slag entering the housing 11. In another aspect, by shielding the first welding part 71 through the first cover plate 13, the first welding part 71 can be protected. In this way, the welding slag or part of the welding slag falling from the first welding part 71 can be blocked by the first cover plate 13, thereby further reducing the amount of welding slag entering the housing 11. By reducing the amount of welding slag entering the housing 11 twice, the risk of short circuit inside the battery cell 10 due to the presence of welding slag can be greatly reduced, thereby improving the reliability of the battery cell 10.

In addition, when the battery cell 10 transmits electricity to the outside, the post terminal body 1201 needs to be electrically connected to the busbar component 30. At this time, the post terminal body 1201 is welded to the busbar component 30. In this case, since the first cover plate 13 can shield the first welding part 71, the busbar component 30 can be prevented from contacting the first welding part 71, or it can be understood that the busbar component 30 and the first welding part 71 can be isolated from each other, which can also reduce the influence of the first welding part 71 on other welding positions on the post terminal body 1201.

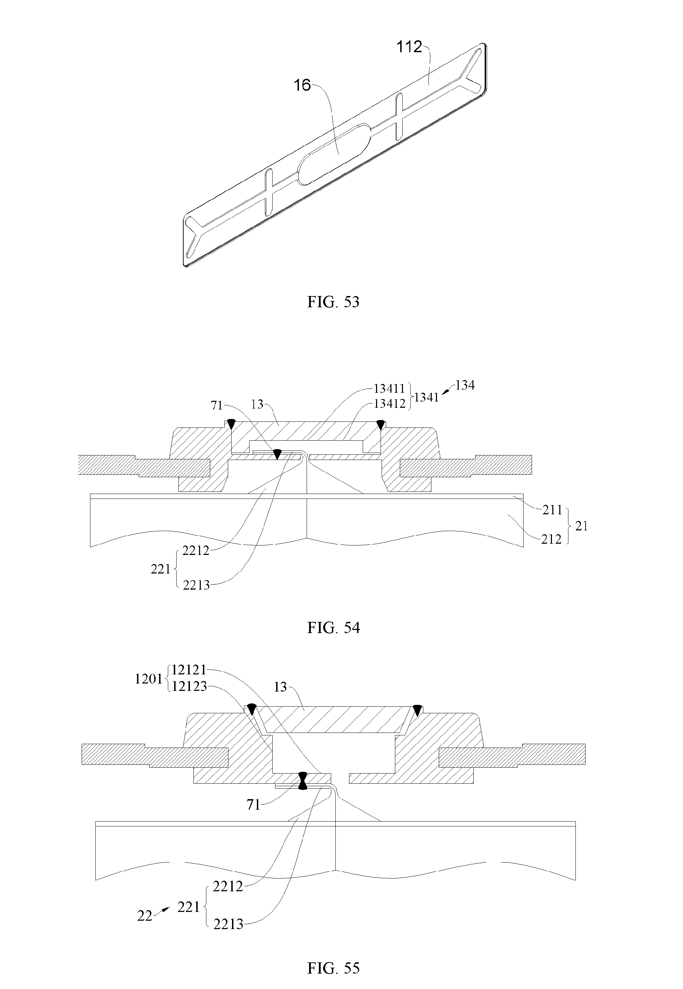

In some embodiments, referring to FIG. 55, the conductive part 22 is located on a side of the second end wall 12121 facing the active substance-coated part 21. In this case, the first welding part 71 is provided on the side of the second end wall 12121 facing the active substance-coated part 21. At this time, a distance between the first welding part 71 and the surface of the post terminal body 1201 located on an outer side of the housing 11 is relatively long, which can reduce the influence of the high temperature generated when the post terminal body 1201 is welded to the busbar component 30 on the first welding part 71.

Referring to FIG. 13, in some embodiments, the second accommodating groove 12120 is in communication with the interior of the housing 11 through a first perforation 12130, the conductive part 22 is provided in the first perforation 12130 in a penetrating manner and is at least partially accommodated in the second accommodating groove 12120, and the conductive part 22 is at least partially provided on a side of the second end wall 12121 away from the active substance-coated part 21.

It can be understood that, since the second accommodating groove 12120 can be in communication with the interior of the housing 11 through the first perforation 12130, the second accommodating groove 12120 can also be used as a buffering and temporary storage structure for an electrolytic solution, such that a larger amount of electrolytic solution can be accommodated in the housing 11; since the electrolytic solution will be consumed during the charging and discharging processes of the battery cell 10, the service life of the battery cell 10 can be prolonged when there is a larger amount of electrolytic solution. Also, since the second accommodating groove 12120 can be in communication with the interior of the housing 11 through the first perforation 12130, the second accommodating groove 12120 can also be used as an accommodating and buffering structure for gas generated inside the battery cell assembly 2, so as to reduce the expansion of the battery cell 10, thereby improving the reliability and stability of the battery cell 10.

It is worth noting that when the accommodating part 121 is provided with a second accommodating groove 12120 and the conductive part 22 is provided in the first perforation 12130 in a penetrating manner and is at least partially accommodated in the second accommodating groove 12120, the welding position of the conductive part 22 and the first post terminal 12 is not limited.

Illustratively, when the conductive part 22 is provided in the first perforation 12130 in a penetrating manner and is at least partially accommodated in the second accommodating groove 12120, in some embodiments of the present application, the first welding part 71 between the conductive part 22 and the first post terminal 12 is located on the wall of the first perforation 12130 formed by the first post terminal 12.

In the above technical solution, by providing the first welding part 7 between the conductive part 22 and the first post terminal 12 on the wall of the first perforation 12130, it is convenient to perform the welding operation on the conductive part 22 and the first post terminal 12 through the second accommodating groove 12120, and when the welding area between the conductive part 22 and the first post terminal 12 is relatively large, the welding of the conductive part 22 to the first post terminal 12 can be utilized to realize the sealing of the first perforation 12130, so as to save sealing cost, reduce the leakage of the electrolytic solution, and save sealing parts.

Specifically, the conductive part 22 may be welded to the wall of the first perforation 12130 at a position of the first perforation 12130 connected to the second accommodating groove 12120, so as to facilitate the operation. In addition, by controlling a weld mark, the first perforation 12130 can be sealed by utilizing the weld mark and the conductive part 22, so as to alleviate the problem of leakage of the electrolytic solution in the housing 11 from the first perforation 12130.

Further illustratively, when the conductive part 22 is provided in the first perforation 12130 in a penetrating manner and is at least partially accommodated in the second accommodating groove 12120, in some other embodiments of the present application, the first welding part 71 between the conductive part 22 and the first post terminal 12 can also be located on the wall of the second accommodating groove 12120 formed by the first post terminal 12. As such, the electrical connection operation is facilitated. For example, when the conductive part 22 is welded to the groove wall of the second accommodating groove 12120 formed on the first post terminal 12, the conductive particles generated by welding can be prevented from entering the housing 11, which may otherwise cause short circuit and other problems.

In some embodiments, referring to FIGs. 13 and 14, the second accommodating groove 12120 is further provided with a second side wall 12123, the second side wall 12123 is located on a side of the second end wall 12121 distal to the active substance-coated part 21, and the second side wall 12123 and the second end wall 12121 define, in an enclosing manner, to form the second accommodating groove 12120; the first perforation 12130 is formed on the second end wall 12121, the second end wall 12121 is provided with a second recess 12122, and at least a part of the first welding part 71 is located in the second recess 12122.

In the above technical solution, in one aspect, since the first perforation 12130 is formed on the second end wall 12121, it is convenient for the conductive part 22 to extend into the second accommodating groove 12120 through the first perforation 12130, which can simplify the structure of the conductive part 22, reduce the redundancy of the conductive part 22, and lower the cost of the conductive part 22.

In another aspect, a part of the first welding part 71 located in the second recess 12122 is configured to match the second recess 12122 in shape and is provided in a fitting manner to achieve welding, such that the second recess 12122 can be used to pre-position and limit the first welding part 71 on the conductive part 22, which is conducive to accurately locating the position for welding, thereby improving the production efficiency and improving the stability and reliability of the welding position, so as to ensure the reliability and stability of the charging and discharging operations of the battery cell 10.

Referring to FIGs. 13 and 14, the second end wall 12121 may be of a flat plate structure, and an included angle θ between the second end wall 12121 and the axial direction R of the first post terminal 12 is equal to 90°, that is, in a direction from the first perforation 12130 to the second side wall 12123, the second end wall 12121 is equally spaced from the active substance-coated part 21 are equidistant. As such, the welding of the conductive part 22 to the second end wall 12121 can be facilitated.

For another example, referring to FIG. 15, the included angle θ between the second end wall 12121 and the axial direction R of the first post terminal 12 is greater than 90°, that is, in the direction from the first perforation 12130 to the second side wall 12123, the second end wall 12121 extends obliquely toward a direction close to the active substance-coated part 21. As such, the extension distance of the conductive part 22 along the second end wall 12121 can be increased, so as to improve the reliability of the electrical connection. Illustratively, the included angle θ between the second end wall 12121 and the axial direction R of the first post terminal 12 may be 90°-145°, for example, 100°, 110°, 120°, 130°, 140°, such that in one aspect, the second end wall 12121 can be easy to process and convenient to be electrically connected to the conductive part 22, and in another aspect, the space in the first post terminal 12 can be more fully utilized to accommodate the conductive part 22.

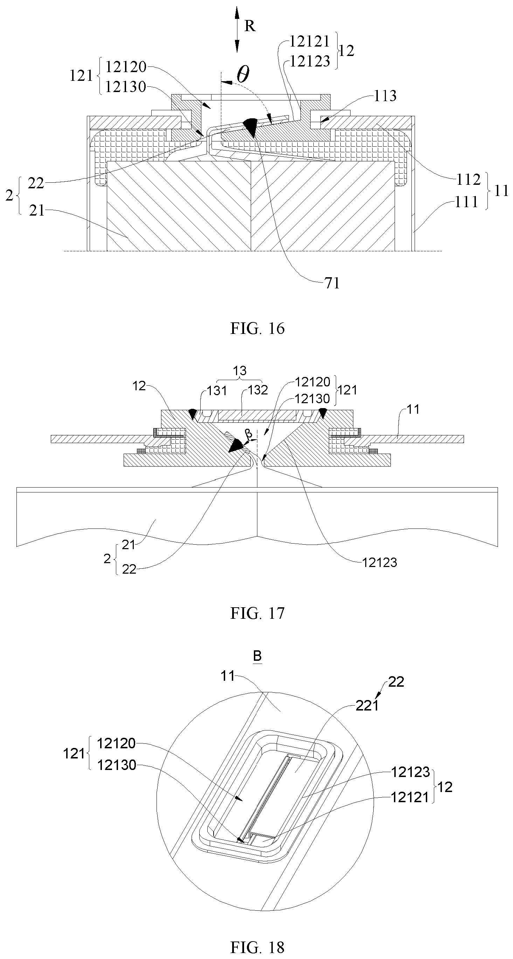

For another example, referring to FIG. 16, the included angle θ between the second end wall 12121 and the axial direction R of the first post terminal 12 is less than 90°, that is, in the direction from the first perforation 12130 to the second side wall 12123, the second end wall 12121 extends obliquely in a direction away from the active substance-coated part 21. As such, the extension distance of the conductive part 22 along the second end wall 12121 can be increased, so as to improve the reliability of the electrical connection. Illustratively, the included angle θ between the second end wall 12121 and the axial direction R of the first post terminal 12 may be 45°-90°, for example, 50°, 60°, 70°, 80°, or the like, such that in one aspect, the second end wall 12121 can be easy to process and convenient to weld to the conductive part 22, and in another aspect, the space in the first post terminal 12 can be more fully utilized to accommodate the conductive part 22.

Certainly, the present application is not limited to this. In other embodiments of the present application, the first welding part 71 between the conductive part 22 and the second end wall 12121 may not extend in the length or width direction of the second end wall 12121, and may also be a plurality of discretely arranged spots. For example, the conductive part 22 has a plurality of portions that are spaced from each other and separately welded to the second end wall 12121, which will not be described in detail herein.

Referring to FIG. 14 again, regardless of the specific value of the included angle θ between the second end wall 12121 and the axial R of the first post terminal 12, in the embodiments of the present application, when the conductive part 22 is welded to the second end wall 12121, a second recess 12122 may be provided on the second end wall 12121 as required. The second recess 12122 is a groove formed by a part of the second end wall 12121 sinking toward an end proximal to the active substance-coated part. The first welding part 71 between the conductive part 22 and the second end wall 12121 is at least partially located in the second recess 12122.

In the above technical solution, the part of the conductive part 22 located in the second groove 12122 is configured to match the second groove 12122 in shape and is provided in a fitting manner to achieve welding, such that the second recess 12122 can be used to pre-position and limit the welding position of the conductive part 22, which is conducive to accurately locating the position for welding, thereby improving the production efficiency and improving the stability and reliability of the electrical connection position, so as to ensure the reliability and stability of the charging and discharging operations of the battery cell 10.

It should be noted that in the embodiments of the present application, a part of the conductive part 22 may also be configured to match the second side wall 12123 in shape and provided in a fitting manner. For example, when the second side wall 12123 is a curved surface, the part of the conductive part 22 may also be a curved surface and fitted to the second side wall 12123, and the fitted position is welded, such that the first welding part 71 between the conductive part 22 and the second side wall 12123 extends along the second side wall 12123. As such, the area of the first welding part 71 can be increased, thereby improving the reliability and stability of welding.

It should also be noted that, in other embodiments of the present application, the first welding part 71 between the conductive part 22 and the second side wall 12123 may not extend along the second side wall 12123, and for example, may be a plurality of discretely arranged points. For example, the conductive part 22 has a plurality of portions that are spaced from each other and separately welded to the second side wall 12123, which will not be described in detail herein.

It can be understood that the number of second side walls 12123 is not limited and may be determined according to the shape of the second accommodating groove 12120, as long as an end of each second side wall 12123 distal to the opening of the second accommodating groove 12120 is connected to the second end wall 12121. Illustratively, when the cross-sectional shape of the second accommodating groove 12120 is circular or elliptical, the second end wall 12121 is circular or elliptical. The number of the second side wall 12123 is one, and the second side wall is annular and provided around the circumferential edge of the second end wall 12121. Further illustratively, when the cross-sectional shape of the second accommodating groove 12120 is rectangular or track-shaped, the second end wall 12121 is rectangular or track-shaped. The number of the second side walls 12123 is four, and the second side walls are separately connected to four sides of the second end wall 12121.

It should also be noted that the second accommodating groove 12120 is not limited to the form defined by the second end wall 12121 and the second side wall 12123. For example, in some embodiments, referring to FIG. 17, an end of the opening of each second side wall 12123 distal to the second accommodating groove 12120 extends to the first perforation 12130, such that the second accommodating groove 12120 is defined only by a plurality of second side walls 12123. At this time, the conductive part 22 can be electrically connected to the second side wall 12123.

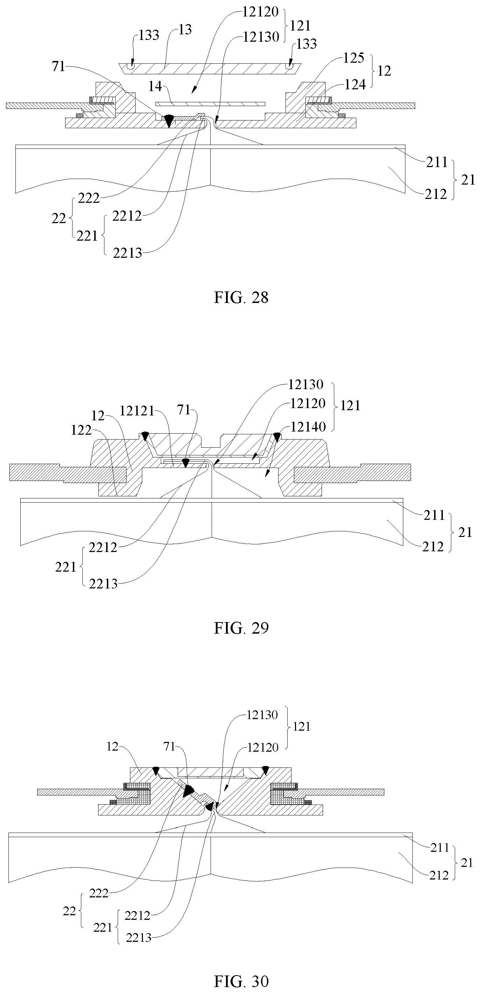

In some embodiments, referring to FIG. 29, the active substance-coated part 21 includes a current collector 211 and an active substance layer 212 provided on the current collector 211, the conductive part 22 includes a tab part 221 electrically connected to the current collector 211, the tab part 221 includes a plurality of tab plates 2211, parts of the plurality of tab plates 2211 proximal to the current collector 211 converge to form a first gathering part 2212, parts of the plurality of tab plates 2211 distal to the current collector 211 converge and are connected to form a second gathering part 2213, the first gathering part 2212 connects the second gathering part 2213 and the active substance-coated part 21, at least a part of the second gathering part 2213 is accommodated in the second accommodating groove 12120, and the second gathering part 2213 is connected to the second end wall 12121 through the first welding part 71.

In the above technical solution, since the tab part 221 includes the second gathering part 2213 formed by converging and connecting parts of the plurality tab plates 2211, at least a part of the second gathering part 2213 can be easily accommodated in the second accommodating groove 12120, which facilitates the assembly of the conductive part 22 and the first post terminal 12. Secondly, by accommodating at least a part of the second gathering part 2213 in the second accommodating groove 12120, the space in the first post terminal 12 can be utilized, so as to reduce the space occupied by the conductive part 22 in the housing 11, thereby improving the volumetric energy density of the battery cell 10.

In some optional examples, referring to FIG. 29, the position where the first gathering part 2212 is connected to the second gathering part 2213 can be provided corresponding to the first perforation 12130, that is, on a projection plane perpendicular to an axial direction R of the first post terminal 12, an orthographic projection of the position where the first gathering part 2212 is connected to the second gathering part 2213 is located within the range of an orthographic projection of the first perforation 12130, such that the second gathering part 2213 extends into the first perforation 12130 at a relatively short distance and enter the second accommodating groove 12120, thereby reducing the redundancy and reducing costs.

It can be understood that the gathering position of the tab plates 2211 may be designed according to the position of the first perforation 12130, for example, by adopting the symmetrical gathering form or the asymmetrical gathering form described above, such that the position where the first gathering part 2212 is connected to the second gathering part 2213 is provided corresponding to the first perforation 12130, which will not be described in detail herein. In addition, referring to the above description, when the second gathering part 2213 forms a plate structure by ultrasonic pre-welding, it is convenient for the second gathering part 2213 to pass through the first perforation 12130.

In some embodiments, referring to FIG. 30, the active substance-coated part 21 includes a current collector 211 and an active substance layer 212 provided on the current collector 211, the conductive part 22 includes a tab part 221 and an adapting piece 222, the tab part 221 is electrically connected to the current collector 211, the tab part 221 includes a plurality of tab plates 2211, parts of the plurality of tab plates 2211 proximal to the current collector 211 converge to form a first gathering part 2212, parts of the plurality of tab plates 2211 distal to the current collector 211 converge and are connected to form a second gathering part 2213, the first gathering part 2212 connects the second gathering part 2213 and the active substance-coated part 21, the adapting piece 222 is connected to the second gathering part 2213, at least a part of the adapting piece 222 is accommodated in the second accommodating groove 12120, and the adapting piece 222 is connected to the second end wall 12121 through the first welding part 71.

In the above technical solution, by accommodating at least a part of the adapting piece 222 in the second accommodating groove 12120, the adapting piece 222 can occupy the space in the first post terminal 12, such that the space occupied by the adapting piece 222 in the housing 11 can be reduced, so as to accommodate a larger active substance-coated part 21, thereby improving the energy density of the battery cell 10. Moreover, the probability of short circuit between the adapting piece 222 and the active substance-coated part 21 can be reduced, and the risk of short circuit of the battery cell assembly 2 can be reduced, thereby improving the stability and reliability of the battery cell 10.

In addition, by using the adapting piece 222 to achieve an indirect electrical connection between the second gathering part 2213 and the first post terminal 12, the adapting piece 222 can be welded to the first post terminal 12 at a part avoiding the second gathering part 2213, such that the welding between the adapting piece 222 and the first post terminal 12 is secure, the risk of welding cracking is low, and the reliability and stability of the battery cell 10 can be further improved. Meanwhile, by electrically connecting the first post terminal 12 and the tab plates 2211 through the adapting piece 222, the configuration of the tab plates 2211 can also be simplified.

In some embodiments, referring to FIG. 30, at least a part of the first gathering part 2212 is accommodated in the second accommodating groove 12120.

In the above technical solution, by accommodating at least a part of the first gathering part 2212 and the adapting piece 222 in the second accommodating groove 12120, the space in the first post terminal 12 can be more fully utilized, and the space occupied by the conductive part 22 in the housing 11 can be further reduced, so as to further improve the volumetric energy density of the battery cell 10. Furthermore, by providing the adapting piece 222 of the plate structure, it is convenient for the adapting piece 222 to pass through the first perforation 12130 and extend into the second accommodating groove 12120.

Referring to FIG. 29, in some embodiments, the post terminal body 1201 is provided with a first accommodating part 121, the first accommodating part 121 is provided with a third accommodating groove 12140, a surface of the first post terminal 12 on a side facing the active substance-coated part 21 is a post terminal inner end surface 122, the third accommodating groove 12140 is located on a side of the second accommodating groove 12120 proximal to the active substance-coated part 21, and an opening of the third accommodating groove 12140 is formed on the post terminal inner end surface 122; the third accommodating groove 12140 is connected to the second accommodating groove 12120 through the first perforation 12130, and at least a part of the first gathering part 2212 is accommodated in the third accommodating groove 12140.

At this time, a part of the conductive part 22 is located in the third accommodating groove 12140, and meanwhile, the conductive part 22 is provided in the first perforation 12130 in a penetrating manner, and the rest of the conductive part 22 is located in the second accommodating groove 12120, such that the space in the first post terminal 12 can be more fully utilized, and the space occupied by the conductive part 22 in the housing 11 can be reduced.

It is worth noting that when the conductive part 22 is connected to the second end wall 12121 or the second side wall 12123 by laser welding, referring to FIG. 17, an included angle β between a part of the conductive part 22 used for welding and an axis of the first perforation 12130 can be set to be greater than 5°, so as to reduce the problem of laser entering the housing 11 through the first perforation 12130, and it is beneficial to the welding operation. In addition, when the included angle β between the part of the conductive part 22 used for welding and the axis of the first perforation 12130 is close to 5°, edge sealing welding may be used, and overlap welding may be used for the rest.

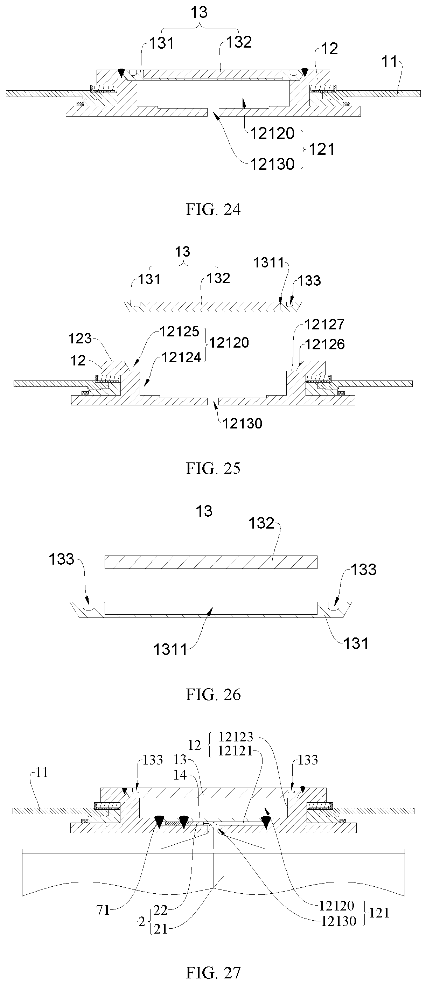

In some embodiments, referring to FIGs. 27-28, the housing assembly 1 further includes a second cover plate 14, and the second cover plate 14 lids the first perforation 12130 and is located outside the conductive part 22 in the second accommodating groove 12120.

It is worth noting that when the housing assembly 1 includes the second cover plate 14, the housing assembly 1 may also include the first cover plate 13, or may not include the first cover plate 13. Further, when the housing assembly 1 includes both the second cover plate 14 and the first cover plate 13, the first cover plate 13 may be in the composite form made of a plurality of materials, or may be in the non-composite form made of the same material.

In the above technical solution, at least a part of the conductive part 22 is located in the second accommodating groove 12120, and the second cover plate 14 lids the part of the conductive part 22. The second cover plate 14 also lids the first perforation 12130, such that when the electrolytic solution enters the second accommodating groove 12120 from the first perforation 12130, the problem of the part of the electrolytic solution overflowing from the first post terminal 12 can be alleviated through the second cover plate 14, thereby improving the reliability of the battery cell 10.

For example, as shown in FIGs. 27-28, when a part of the conductive part 22 is sandwiched between the second cover plate 14 and the second end wall 12121, the part of the conductive part 22, the second cover plate 14, and the second end wall 12121 can be welded together by using laser welding, so as to improve the reliability of the connection between the first post terminal 12 and the conductive part 22. Furthermore, since the second cover plate 14 can press the conductive part 22, the second cover plate 14 may be used to improve the stability of the conductive part 22 accommodated in the second accommodating groove 12120.

Referring to FIG. 13 again, in some embodiments, the housing 11 is provided with a mounting hole 113, and the first post terminal 12 is mounted in the mounting hole 113; in an axial direction of the first post terminal 12, a depth H3 of the second accommodating groove 12120 is greater than or equal to a minimum distance H4 from the post terminal outer end surface 123 to the mounting hole 113.

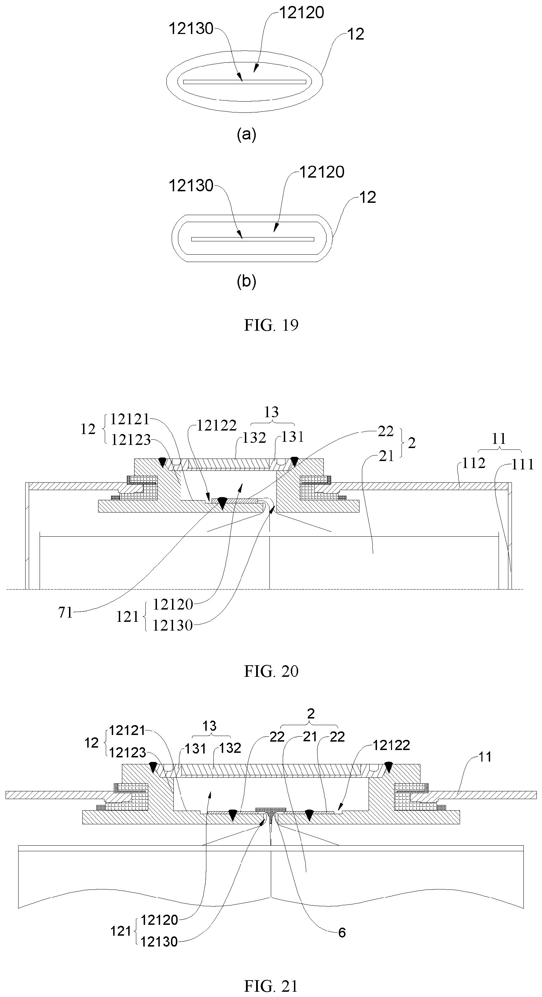

It should be noted that the specific shape of the second accommodating groove 12120 is not limited, and may be a regular shape or an irregular shape, for example, a columnar groove of constant cross-section with a rectangular, elliptical, or track-shaped cross-section, a trapezoidal groove with a rectangular cross-section and a gradually changing cross-sectional dimension, a hemispherical groove with a circular cross-section and a gradually changing cross-sectional dimension, a semi-ellipsoidal groove with an elliptical cross-section and a gradually changing cross-sectional dimension, or the like. It is worth noting that the "track-shaped" described herein refers to a shape in which the two short sides of a rectangle are replaced by convex curves, such as the shape shown in FIG. 19(b).

Therefore, the depth H3 of the second accommodating groove 12120 refers to: the maximum depth of the second accommodating groove 12120 in the axial direction R of the first post terminal 12. Since in the axial direction R of the first post terminal 12, the depth H3 of the second accommodating groove 12120 is greater than or equal to the minimum distance H4 from the post terminal outer end surface 123 to the mounting hole 113, a volume of the first post terminal 12 can be fully utilized, such that the second accommodating groove 12120 has a larger depth, which is conducive to accommodating more conductive parts 22, and then can reduce the space occupied by the conductive parts 22 in the housing 11 to a greater extent, further improve the energy density of the battery cell 10, and further reduce the redundancy of the conductive part 22 in the housing 11. Meanwhile, since the second accommodating groove 12120 has a larger depth, gases produced by the battery cell assembly 2 can also be accommodated, which ensures the reliability and stability of the battery cell 10, and can also accommodate a larger amount of electrolytic solution to ensure the service life of the battery cell 10.

It should be noted that the volume of the second accommodating groove 12120 is not limited. For example, in some specific examples, the volume of the second accommodating groove 12120 that can be used for accommodating the conductive part 22 (referred to as a third volume V4) may be greater than or equal to 298 mm³, such that the second accommodating groove 12120 may have sufficient space to accommodate the conductive part 22 and facilitate welding of the conductive part 22 to the first post terminal 12. However, when the third volume V4 of the second accommodating groove 12120 is less than 298 mm³, the accommodating capacity of the second accommodating groove 12120 for the conductive part 22 is relatively weakened, and the welding difficulty of the conductive part 22 with the first post terminal 12 is increased. For example, the third volume V4 of the second accommodating groove 12120 may be 300 mm³, 400 mm³, 500 mm³, 600 mm³, 700 mm³, 800 mm³, 1000 mm³, or the like.

It is worth noting that the third volume V4 of the second accommodating groove 12120 is: the difference between a total volume V5 of the second accommodating groove 12120 and a volume of other components (such as the first cover plate 13 and the second cover plate 14 described herein) required to be accommodated by the second accommodating groove 12120 except the conductive part 22 (referred to as a fourth volume V6), that is, V4 = V5 - V6. For example, in some specific examples, the total volume V5 of the second accommodating groove 12120 may be 1400 mm³-1500 mm³, such that the second accommodating groove 12120 may have more sufficient space to accommodate the conductive part 22 and other components. For example, the total volume V5 of the second accommodating groove 12120 may be 1420 mm³, 1440 mm³, 1460 mm³, 1480 mm³, 1490 mm³, or the like.

Optionally, referring to FIG. 13, the second accommodating groove 12120 can be provided corresponding to the position of the mounting hole 113, or in other words, on a projection plane perpendicular to an axial direction R of the first post terminal 12, an orthographic projection of the second accommodating groove 12120 is located within the range of an orthographic projection of the mounting hole 113, such that the second accommodating groove 12120 can have a relatively great depth to accommodate more conductive part 22, thereby reducing the space occupied by the conductive part 22 in the housing 11 to a greater extent.

In the embodiments of the present application, the shape of the first perforation 12130, the number of the first perforation 12130, and the relative positional relationship between the first perforation 12130 and the second accommodating groove 12120 are not limited.

Illustratively, with respect to the shape of the first perforation 12130, referring to FIGs. 18 and 19, in the embodiments of the present application, the first perforation 12130 may be in a long strip shape to be adapted to a plate-shaped part of the conductive part 22 in shape, thereby facilitating the plate-shaped part of the conductive part 22 to pass through. Meanwhile, when the first perforation 12130 is long strip-shaped, the second accommodating groove 12120 may also be configured as a shape in which the length of the cross-section is greater than the width, such as a rectangle, an ellipse, and a track shape. In this case, the length direction of the first perforation 12130 may be set to be consistent with the length direction of the cross-section of the second accommodating groove 12120, such that the space can be fully utilized. In addition, the weld mark formed by welding the conductive part 22 to the first post terminal 12 may be a long strip-shaped weld mark parallel to the length direction of the first perforation 12130, so as to improve the welding reliability and increase the current passage performance. Illustratively, when the conductive part 22 is welded to the second end wall 12121 to form a weld mark as a long strip-shaped weld mark, the width of the weld mark may be greater than or equal to 6 mm, and the distance between the weld mark and the second side wall 12123 may be greater than or equal to 1 mm, so as to ensure the current passage capacity of the battery cell 10 while ensuring the convenience and reliability of welding.

With regard to the dimension and number of the first perforations 12130, in the embodiments of the present application, the formation dimension and specific position of the first perforations 12130 on the second accommodating groove 12120 are not limited and may be designed according to the number of the formed first perforations 12130. For example, the width of the first perforation 12130 may be greater than or equal to 2 mm, which facilitates the conductive part 22 to pass through. For example, when there is only one first perforation 12130 formed on the second accommodating groove 12120, in some examples, referring to FIGs. 18 and 19, the first perforation 12130 can be provided in a centered position relative to the second accommodating groove 12120. In some other examples, referring to FIG. 20, the first perforation 12130 can also be provided in an offset position relative to the center of the second accommodating groove 12120. For example, in some embodiments, referring to FIG. 20, the first perforation 12130 can be formed at the edge of the second end wall 12121 to be provided proximal to the second side wall 12123, such that the available area of the second end wall 12121 can be increased, thereby increasing the welding area between the conductive part 22 and the second end wall 12121.

It can be understood that after passing through the first perforation 12130, the conductive part 22 will be folded to be fitted to the second end wall 12121, but the folding direction is not limited. For example, when the first perforation 12130 is provided in a centered position relative to the second accommodating groove 12120, after passing through the first perforation 12130, the conductive part 22 can be folded toward any side of the first perforation 12130 (referring to FIG. 18), such that the size of the second accommodating groove 12120 can be appropriately reduced, thereby enhancing the compactness and strength of the structure; or, after passing through the first perforation 12130, the conductive part 22 can also be folded toward opposite sides at the same time (referring to FIG. 21), so as to reduce the thickness at the welding position and reduce the welding heat input, thereby reducing problems such as particle splashing.

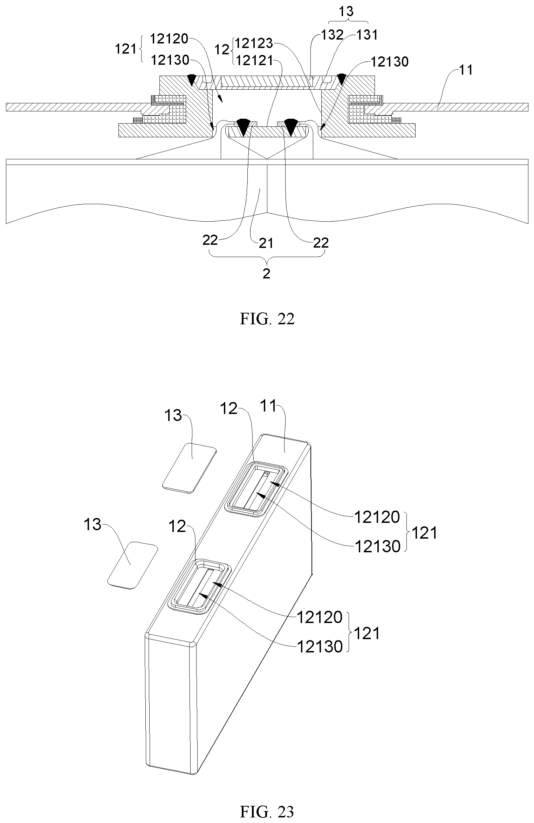

For example, when a plurality of first perforations 12130 are formed on the second accommodating groove 12120, the length directions of the plurality of first perforations 12130 are provided in parallel or substantially in parallel to make full use of the space. In this case, the folding direction of the conductive part 22 after passing through the first perforation 12130 may be set according to the relative positional relationship of the plurality of first perforations 12130. For example, when two first perforations 12130 are formed on the second accommodating groove 12120 and are distal to each other (referring to FIG. 22), the two conductive parts 22 passing through the two first perforations 12130 may be folded in a direction close to each other; when two first perforations 12130 are formed on the second accommodating groove 12120 and are proximal to each other, the two conductive parts 22 passing through the two first perforations 12130 may be folded in a direction away from each other.

It can be understood that when a plurality of first perforations 12130 are formed on the second accommodating groove 12120, the number of first post terminals 12 may be appropriately reduced, so as to reduce costs and processes.

In addition, in some embodiments, referring to FIGs. 20 and 21, the first perforation 12130 may be provided in a centered position relative to the active substance-coated part 21, but the position of the first perforation 12130 relative to the second accommodating groove 12120 is not limited, and may be centered or offset. Since the first perforation 12130 is provided in a centered position relative to the active substance-coated part 21, the conductive part 22 may be gathered corresponding to the midline position of the active substance-coated part 21.

In some embodiments, referring to FIG. 21, a sealing member 6 may be provided at the first perforation 12130 to alleviate the problem of leakage of the electrolytic solution in the housing 11 from the first perforation 12130. The material, shape and connection mode at the first perforation 12130 for the sealing member 6 are not limited. Illustratively, the sealing member 6 may be a metal member made of the same material as that of the first post terminal 12 or the conductive part 22, which may be fitted to the wall surface of the first post terminal 12 at the first perforation 12130 by welding to seal the first perforation 12130. Further illustratively, the sealing member 6 may be a plastic member, which is in insertion fit to the first perforation 12130 to seal the first perforation 12130. In the embodiments of the present application, the sealing may be designed according to actual requirements without limitation.

FIG. 23 is an exploded view of the structure of the battery cell 10 according to some embodiments of the present application; FIG. 24 is a partial cross-sectional schematic diagram of the housing assembly 1 according to some embodiments of the present application; FIG. 25 is an exploded view of the structure of the housing assembly 1 shown in FIG. 24. Referring to FIGs. 23 and 24, in some embodiments of the present application, when the accommodating part 121 is provided with the second accommodating groove 12120 according to any one of the above embodiments, optionally, the housing assembly 1 may further include a first cover plate 13. The first cover plate 13 is fitted to the first post terminal 12 and closes the opening of the second accommodating groove 12120, and the first cover plate 13 is electrically connected to the first post terminal 12.

In the above technical solution, by providing the first cover plate 13 to close the opening of the second accommodating groove 12120, the electrolytic solution in the housing 11 can be prevented from leaking from the opening of the second accommodating groove 12120. Moreover, since the first cover plate 13 closes the opening of the second accommodating groove 12120 and is electrically connected to the first post terminal 12, an indirect electrical connection between the first post terminal 12 and a busbar component can be easily achieved by using the first cover plate 13, and the connection area of the electrical connection can also be increased, thereby helping reduce the resistance of the electrical connection.

It is worth noting that the fitting manner and fitting position of the first cover plate 13 and the first post terminal 12 are not limited, as long as the first cover plate 13 can close the opening of the second accommodating groove 12120. For example, in some embodiments, referring to FIG. 22, the first cover plate 13 may be welded to the first post terminal 12. During processing, the conductive part 22 may be first passed through the first perforation 12130 and welded to the wall of the second accommodating groove 12120, and then the first cover plate 13 is welded to the first post terminal 12 to close the opening of the second accommodating groove 12120.

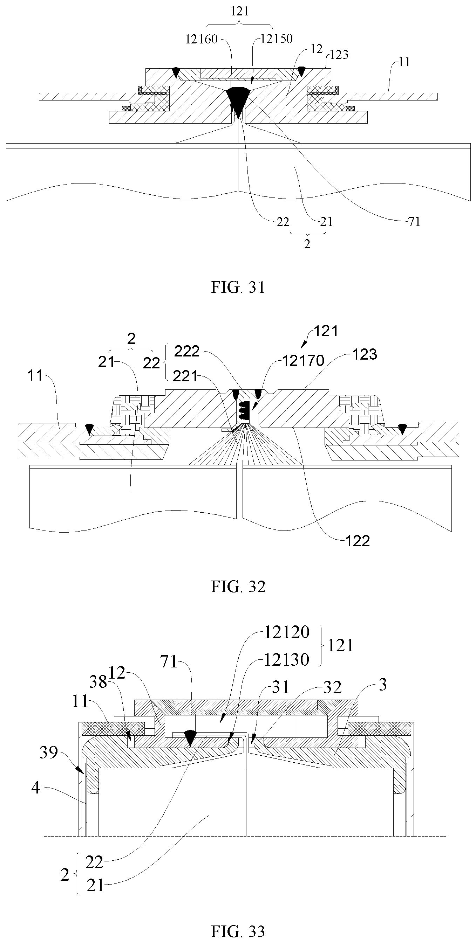

Referring to FIG. 31, in some embodiments, the post terminal body 1201 is provided with a first accommodating part 121, the first accommodating part 121 is provided with a fourth accommodating groove 12150, the fourth accommodating groove 12150 is a groove body, the groove body is of a groove-shaped structure having a certain depth, a surface of the post terminal body 1201 on a side distal to the active substance-coated part 21 is a post terminal outer end surface 123, an opening of the fourth accommodating groove 12150 is formed on the post terminal outer end surface 123, the fourth accommodating groove 12150 is in communication with the interior of the housing 11 through a second perforation 12160, the conductive part 22 may not be accommodated in the fourth accommodating groove 12150, for example, the conductive part 22 is provided in the second perforation 12160 in a penetrating manner, the first welding part 71 is provided on the wall of the second perforation 12160 formed in the first accommodating part 121, and the first cover plate 13 is fitted to the post terminal body 1201 and covers the second perforation 12160.

In the above embodiment, by providing the fourth accommodating groove 12150, the welding of the conductive part 22 to the wall of the second perforation 12160 can be easily realized. Furthermore, in some cases, the sealing of the second perforation 12160 can be realized by the welding of the conductive part 22 to the first post terminal 12. For example, the conductive part 22 may be welded to the wall of the second perforation 12160 at a position of the second perforation 12160 connected to the fourth accommodating groove 12150, so as to facilitate the operation. In addition, by controlling a weld mark, the second perforation 12160 can be sealed by utilizing the weld mark and the conductive part 22, so as to alleviate the problem of leakage of the electrolytic solution in the housing 11 from the second perforation 12160.

It should be noted that the specific shape of the fourth accommodating groove 12150 is not limited, and may be a regular shape or an irregular shape, for example, a columnar groove of constant cross-section with a rectangular, elliptical, or track-shaped cross-section, a trapezoidal groove with a rectangular cross-section and a gradually changing cross-sectional dimension, a hemispherical groove with a circular cross-section and a gradually changing cross-sectional dimension, a semi-ellipsoidal groove with an elliptical cross-section and a gradually changing cross-sectional dimension, or the like.

In the embodiments of the present application, the shape of the second perforation 12160 may be a long strip shape, so as to match the shape of the plate-shape part of the conductive part 22, thereby facilitating the plate-shape part of the conductive part 22 to pass through. Meanwhile, when the second perforation 12160 is long strip-shaped, the fourth accommodating groove 12150 may also be configured into a shape in which the length of the cross-section is greater than the width, such as a rectangle, an ellipse, and a track shape. In this case, the length direction of the second perforation 12160 may be set to be consistent with the length direction of the cross-section of the fourth accommodating groove 12150, such that the space can be fully utilized.

It should be noted that the first accommodating part 121 of the embodiments of the present application is not limited to the above forms in which at least one accommodating groove must be provided. For example, in some other embodiments of the present application, referring to FIG. 32, the first accommodating part 121 may be provided with only a third perforation 12170, a surface of the first post terminal 12 on a side facing the active substance-coated part 21 is a post terminal inner end surface 122, a surface of the first post terminal 12 distal to the active substance-coated part 21 is a post terminal outer end surface 123, the third perforation 12170 is in the form of a through hole and passes through the post terminal inner end surface 122 and the post terminal outer end surface 123, and at least a part of the conductive part 22 is provided in the third perforation 12170 in a penetrating manner. The electrical connection position of the conductive part 22 and the first post terminal 12 is not limited. For example, the electrical connection position may be located on the wall of the third perforation 12170 formed on the first post terminal 12, or the conductive part 22 may pass through the third perforation 12170, such that the electrical connection position is located on the post terminal outer end surface 123 outside the third perforation 12170. In addition, the shape of the third perforation 12170 is not limited. The third perforation may be a regular-shaped hole of constant cross-section, or a hole of variable cross-section. Furthermore, the cross-sectional shape of the third perforation 12170 is not limited, for example, a long strip shape, such as a rectangle, an ellipse, or a track shape, so as to match the shape of the plate-shape part of the conductive part 22, thereby facilitating the plate-shaped part of the conductive part 22 to be provided in the third perforation 12170 in a penetrating manner, which will not be described in detail herein.

In the embodiments of the present application, the first post terminal 12 may be an integrally formed post terminal, or a separately formed composite post terminal. Referring to FIGs. 27-28, in some embodiments, the post terminal body 1201 includes a first post terminal part 124 and a second post terminal part 125 made of different materials and electrically connected, the second post terminal part 125 is located on a side of the first post terminal part 124 distal to the active substance-coated part 21, the first accommodating part 121 is provided on the first post terminal part 124 or on the first post terminal part 124 and the second post terminal part 125, and the first welding part 71 is provided on the first post terminal part 124.

In the above technical solution, by configuring the first post terminal 12 as a composite form composed of different materials, the first post terminal part 124 located on the inner side is fitted in a receiving manner and electrically connected to the conductive part 22, and the second post terminal part 125 located on the outer side is electrically connected to the busbar component 30 and the like, which is conducive to realizing the assembly and electrical connection of the first post terminal 12 to related components, reducing the mutual interference between the welding position of the first post terminal 12 and the conductive part 22, and the welding position of the first post terminal 12 and the busbar component 30 of the battery 100, and improving the reliability and stability of the battery cell 10.

For example, when the material of the conductive part 22 is different from that of the busbar component 30, the first post terminal part 124 can be set to have the same material as the conductive part 22, and the second post terminal part 125 can be set to have the same material as the busbar component 30, which is conducive to realizing the welding of the second post terminal part 125 to the busbar component 30, and the welding of the first post terminal part 124 to the conductive part 22, improving the reliability and stability of the electrical connection between the conductive part 22 and the first post terminal 12, and the reliability and stability of the electrical connection between the first post terminal 12 and the busbar component 30.

Further, when the first post terminal 12 is in the composite form of the above embodiments and is provided with the second accommodating groove 12120 and the first perforation 12130 of any one of the above embodiments, in some embodiments, the housing assembly 1 may also include the second cover plate 14 of any one of the above embodiments. In this case, the second cover plate 14 may be set to be made of the same material as that of the first post terminal part 124, and the first post terminal part 124 may be electrically connected to the second cover plate 14, so as to improve the reliability and stability of the electrical connection between the first post terminal part 124 and the second cover plate 14. For example, the first post terminal part 124 and the second cover plate 14 may be connected by welding.

For example, referring to FIGs. 27-28, when the first post terminal 12 is a negative electrode post terminal, the first post terminal part 124 is made of copper, the second post terminal part 125 is made of aluminum, and the conduit component 30 is an aluminum sheet, the second cover plate 14 can be set to be made of copper, and the first cover plate 13 can be set to be made of aluminum. At this time, the second cover plate 14 and the first post terminal part 124 are made of the same material and can be effectively welded, the second post terminal part 125 and the first cover plate 13 are made of the same material and can be effectively welded, and the first cover plate 13 and the busbar component 30 are made of the same material and can be effectively welded.

In the embodiments of the present application, when the first accommodating part 121 is provided with a second accommodating groove 12120, depending on different compositions of the battery cell assembly 2, the fitting condition between the battery cell assembly 2 and the second accommodating groove 12120 is not limited, and for example, may include, but are not limited to the following third and fourth embodiments.

In some embodiments, referring to FIGs. 8 and 54, the first cover plate 13 is provided with a second accommodating part 134, the second accommodating part 134 is provided with a fifth accommodating groove 1341, an opening of the fifth accommodating groove 1341 is formed on an end surface of the first cover plate 13 on a side facing the active substance-coated part 12, and the fifth accommodating groove 1341 is provided with a third end wall 13411 and a third side wall 13412; the third end wall 13411 is located on a side of the third side wall 13412 distal to the active substance-coated part 21, and at least a part of the first welding part 71 is accommodated in the fifth accommodating groove 1341.

Illustratively, when no accommodating groove is formed on the first post terminal outer end surface 123 of the first post terminal 12, the first post terminal outer end surface 123 is a plane. At this time, the first welding part 71 protrudes from the first post terminal outer end surface 123. The first cover plate 13 is provided with a fifth accommodating groove 1341 to accommodate the first welding part 71, so as to so as to protect the first welding part 71 and facilitate a subsequent connection to the busbar component.

Certainly, the post terminal body 1201 is provided with a second accommodating groove 12120. When an opening of the second accommodating groove 12120 is formed on the post terminal outer end surface 123, the first cover plate 13 can also be provided with a fifth accommodating groove 1341 to be fitted to the second accommodating groove 12120 to accommodate the first welding part 71, so as to protect the first welding part 71 and facilitate a subsequent connection to the busbar component.

In the above technical solution, in one aspect, by providing the fifth accommodating groove 1341 on the first cover plate 13, the weight of the first post terminal 12 can be reduced to a certain extent, so as to improve the gravimetric energy density of the battery cell 10 and the battery 100; in another aspect, since the opening of the fifth accommodating groove 1341 is formed on the end surface of the first cover plate 13 on the side facing the active substance-coated part 12, and the third end wall 13411 is located on the side of the third side wall 13412 distal to the active substance-coated part 21, the fifth accommodating groove 1341 can be open in a direction away from the active substance-coated part 21. In this way, when at least a part of the conductive part 22 is accommodated in the fifth accommodating groove 1341, the accommodation and arrangement of the first welding part 71 can be easily realized through the opening of the fifth accommodating groove 1341, thereby reducing the production difficulty of the battery cell 10 and improving the production efficiency of the battery cell 10.

In some embodiments, the first cover plate 13 is electrically connected to the post terminal body 1201; or, the first cover plate 13 is provided to be insulated from the post terminal body 1201. That is, the first cover plate 13 can be electrically connected to the post terminal body 1201, and at this time, the first cover plate 13 can also participate in the electrical connection to the busbar component 30, which can increase the area of the weldable region, thereby facilitating the welding of the first post terminal 12 to the busbar component 30. The first cover plate 13 may also not be electrically connected to the post terminal body 1201, that is, the two are insulated with each other. In this case, the first cover plate 13 mainly serves to protect the first welding part 71.

In some embodiments, as shown in FIG. 26, the first cover plate 13 includes a first conductive member 131 and a second conductive member 132 made of different materials, the first conductive member 131 is fitted to and electrically connected to the post terminal body 1201, and the second conductive member 132 is fitted to and electrically connected to the first conductive member 131.

In the above technical solution, the first cover plate 13 is provided in a composite form, and the first conductive member 131 is set to be made of the same material as that of the first post terminal 12, so as to facilitate the electrical connection between the first conductive member 131 and the first post terminal 12. For example, the first conductive member 131 can be easy to be reliably and stably connected to the first post terminal 12 through welding. Furthermore, since the second conductive member 132 is made of a different material from that of the first conductive member 131, the electrical connection between the second conductive member 132 and a busbar component and the like made of a different material from that of the first post terminal 12 is facilitated. For example, the second conductive member 132 can be easy to be reliably and stably connected to a busbar component made of the same material as that of the second conductive member 132 through welding.

For example, when the first post terminal 12 is a negative electrode post terminal, the first post terminal 12 is a copper column, and when the busbar component is an aluminum sheet, the first conductive member 131 may be set to be made of copper, and the second conductive member 132 may be set to be made of aluminum. In this case, the first post terminal 12 and the first conductive member 131 are made of the same material and can be effectively welded, and the second conductive member 132 and the busbar component are made of the same material and can be effectively welded, thereby effectively achieving an indirect electrical connection between the first post terminal 12 and the busbar component through the first cover plate 13. Moreover, the welding of the first post terminal 12 to the first conductive member 131 is welding between the copper materials, which has good fluidity and is not prone to cracks, thereby helping improve the sealing effect of the welding position.

It is worth noting that the fitting manner of the first conductive member 131 and the second conductive member 132 is not limited. In some embodiments, referring to FIGs. 24-26, the first conductive member 131 is provided with a second groove 1311, the second conductive member 132 is embedded in the second groove 1311, an opening of the second groove 1311 is formed on a surface of the first conductive member 131 on a side distal to the active substance-coated part 21, such that the second conductive member 132 is exposed from the opening of the second groove 1311. Alternatively, in other embodiments, the connection mode between the first conductive member 131 and the second conductive member 132 may also be a fastening connection, a snap connection, and the like.

It should be further noted that "exposed" mentioned in the second conductive member 132 being exposed from the opening of the second groove 1311 means that the first conductive member 131 does not block the second conductive member 132 at the opening position of the second groove 1311, and the second conductive member 132 is not required to protrude from the opening of the second groove 1311. For example, the second conductive member 132 may be flush with the surface of the first conductive member 131 on a side distal to the second accommodating groove 12120, or the second conductive member 132 may protrude from the surface of the first conductive member 131 on a side distal to the second accommodating groove 12120.

In the above technical solution, in one aspect, by embedding the second conductive member 132 in the first conductive member 131, the difficulty in assembling the first conductive member 131 and the second conductive member 132 can be reduced, such that the stability and convenience of the fit of the first conductive member 131 and the second conductive member 132 are improved, and the thickness of the first cover plate 13 can be reduced, such that the space occupied by the first cover plate 13 can be reduced, so as to improve the space utilization of the battery cell 10. In another aspect, since the second conductive member 132 can be exposed from the surface of the first conductive member 131 on the side distal to the second accommodating groove 12120 through the opening of the second groove 1311, it is conducive to realizing the electrical connection between the second conductive member 132 and the busbar component outside the first post terminal 12.

In addition, since the opening of the second groove 1311 is formed on the surface of the first conductive member 131 on a side distal to the second accommodating groove 12120, it means that the second groove 1311 is open in a direction away from the active substance-coated part 21, such that the part of the first conductive member 131 configured to define the groove wall of the second groove 1311 is located between the second accommodating groove 12120 and the second conductive member 132, so as to separate the second accommodating groove 12120 from the second conductive member 132, thereby preventing the electrolytic solution entering the second groove 1311 from contacting the second conductive member 132 and reducing leakage of the electrolytic solution.

Certainly, in other embodiments, the first cover plate 13 may not be in a composite form composed of multiple materials. For example, in other embodiments of the present application, referring to FIG. 27, the first cover plate 13 as a whole can also be set to be in a non-composite form made of the same material, for example, for adapting to the positive electrode post terminal, which will not be described in detail herein.

Referring to FIGs. 24-26 again, in some embodiments, the first cover plate 13 is also embedded in the opening of the second accommodating groove 12120. In the above technical solution, by embedding the first cover plate 13 in the second accommodating groove 12120, the difficulty in assembling the first cover plate 13 and the first post terminal 12 can be reduced, such that the stability of assembly of the first cover plate 13 and the first post terminal 12 and the reliability and convenience of the connection are improved, and the space occupied by the first cover plate 13 outside the first post terminal 12 is reduced. Moreover, since the first cover plate 13 is embedded in the opening of the second accommodating groove 12120, there is sufficient space in the second accommodating groove 12120 to accommodate the conductive part 22.

Certainly, in other embodiments of the present application, the fitting manner of the first cover plate 13 and the first post terminal 12 is not limited to being embedded in the second accommodating groove 12120. The first cover plate 13 may also be directly provided outside the first post terminal 12 as a covering, that is, directly lids the opening of the second accommodating groove 12120, as long as it is conducive to the fit to the busbar component of the battery 100, which is not limited in the embodiments.

Referring to FIGs. 24-26 again, optionally, in the embodiments of the present application, at least a part of the wall surface at the opening of the second accommodating groove 12120 formed by the first post terminal 12 is an inclined guiding surface 12126, and the inclined guiding surface 12126 is configured to guide the first cover plate 13 to fit to the opening of the second accommodating groove 12120. In the above technical solution, by processing the wall surface at the opening of the second accommodating groove 12120 into an inclined surface with guidance functionality, the difficulty in assembling the first cover plate 13 and the second accommodating groove 12120 can be reduced, thereby improving the assembly efficiency of the first cover plate 13 and the second accommodating groove 12120. Moreover, when the first cover plate 13 is welded to the inclined guiding surface 12126, the area at the welding position can be increased, thereby improving the reliability of the welding connection between the first cover plate 13 and the first post terminal 12 and mitigating the problem of weld pool collapse or laser penetration into the first post terminal 12 during welding.

Specifically, referring to FIGs. 24-26, the second accommodating groove 12120 includes a first groove segment 12124 and a second groove segment 12125 located on a side of the first groove segment 12124 proximal to the post terminal outer end surface 123. The cross-sectional area of the second groove segment 12125 is greater than the cross-sectional area of the first groove segment 12124, such that the second accommodating groove 12120 is in the shape of a stepped groove, and a step surface 12127 is formed at the connection position of the first groove segment 12124 and the second groove segment 12125, such that when the first cover plate 13 is embedded in the second accommodating groove 12120, the first cover plate can be specifically embedded in the second groove segment 12125 and supported by the step surface 12127.

In the above technical solution, by providing the second accommodating groove 12120 in a stepped groove form, the first cover plate 13 can be stably fitted at the opening position of the second accommodating groove 12120, thereby improving the connection stability between the first cover plate 13 and the first post terminal 12. In addition, by defining the groove depth of the first groove segment 12124, the second accommodating groove 12120 is provided with sufficient space to accommodate the conductive part 22.

Further, when the wall surface at the opening of the second accommodating groove 12120 formed by the first post terminal 12 is the inclined guiding surface 12126, the cross-sectional area of the second groove segment 12125 may be set to gradually increase in a direction close to the post terminal outer end surface 123, such that the side wall of the second groove segment 12125 is formed as the inclined guiding surface 12126, which facilitates processing and can easily and effectively meet the guidance requirements.

Referring to FIGs. 24-26 again, in some embodiments, the first cover plate 13 is provided with a stress relief groove 133, and the stress relief groove 133 is located in an outer peripheral region of the first cover plate 13 to assist the first cover plate 13 in stress relief.

In the above technical solution, by providing the stress relief groove 133 on the first cover plate 13, the stress generated during the processing of the first cover plate 13 itself or the electrical connection between the first cover plate 13 and the first post terminal 12 can be relieved, so as to alleviate the related problems such as deformation or damage of the first cover plate 13 caused by stress.

Specifically, when the first cover plate 13 and the second accommodating groove 12120 are embedded and welded, the stress generated by welding can be relieved by utilizing the stress relief groove 133, thereby improving the lateral heat conduction and reducing the probability of damage or deformation of the first cover plate 13. Meanwhile, when the first cover plate 13 is in the above composite form including the first conductive member 131 and the second conductive member 132, the stress relief groove 133 may be provided on the first conductive member 131 and located in the outer peripheral region of the second conductive member 132. When the first conductive member 131 and the second accommodating groove 12120 are embedded and welded, the stress generated by welding can be relieved by utilizing the stress relief groove 133, thereby improving the lateral heat conduction and reducing the probability of damage or deformation of the second conductive member 132. Moreover, when the second conductive member 132 and the first conductive member 131 are embedded and welded, the stress generated by welding can be relieved by utilizing the stress relief groove 133, thereby improving the lateral heat conduction and reducing the probability of causing the first conductive member 131 to deform that may cause the first conductive member 131 to be unable to be embedded with the second accommodating groove 12120.

Referring to FIGs. 27-28, in the embodiments of the present application, the housing assembly 1 may further be provided with a second cover plate 14 as required. The second cover plate 14 lids the first perforation 12130 and is located outside of the conductive part 22 in the second accommodating groove 12120.

It is worth noting that when the housing assembly 1 includes the second cover plate 14, the housing assembly 1 may also include the first cover plate 13, or may not include the first cover plate 13. Further, when the housing assembly 1 includes both the second cover plate 14 and the first cover plate 13, the first cover plate 13 may be in the composite form made of a plurality of materials, or may be in the non-composite form made of the same material.

In the above technical solution, at least a part of the conductive part 22 is located in the second accommodating groove 12120, and the second cover plate 14 lids the part of the conductive part 22. The second cover plate 14 also lids the first perforation 12130, such that when the electrolytic solution enters the second accommodating groove 12120 from the first perforation 12130, the problem of the part of the electrolytic solution overflowing from the first post terminal 12 can be alleviated through the second cover plate 14, thereby improving the reliability of the battery cell 10.

For example, as shown in FIGs. 27-28, when a part of the conductive part 22 is sandwiched between the second cover plate 14 and the second end wall 12121, the part of the conductive part 22, the second cover plate 14, and the second end wall 12121 can be welded together by using laser welding, so as to improve the reliability of the connection between the first post terminal 12 and the conductive part 22. Furthermore, since the second cover plate 14 can press the conductive part 22, the second cover plate 14 may be used to improve the stability of the conductive part 22 accommodated in the second accommodating groove 12120.

Referring to FIGs. 33-35, in some embodiments, the battery cell 10 further includes a support 3, the support 3 is located in the housing 11 and on a side of the active substance-coated part 21 proximal to the first post terminal 12, the support 3 is provided with a clearance hole 31 configured to provide clearance for the conductive part 22, the conductive part 22 is suitable for extending to a side of the support 3 distal to the active substance-coated part 21 through the clearance hole 31 to be welded to the first post terminal 12, thereby ensuring the normal charging and discharging operations of the battery cell 10.

In the above technical solution, by providing the support 3 on the side of the active substance-coated part 21 proximal to the first post terminal 12, the active substance-coated part 21 can be separated from the housing 11 by utilizing the support 3, thereby improving the reliability of the battery cell 10. Furthermore, by providing the clearance hole 31 on the support 3, the conductive part 22 can be guided and constrained to be fitted to the first post terminal 12 by passing through the clearance hole 31, thereby eliminating the need for the conductive part 22 to bypass the edge of the support 3 to approach the first post terminal 12, which can not only simplify the arrangement of the conductive part 22, save the material of the conductive part 22, and reduce the cost, but also reduce the risk of short circuit connection between the conductive part 22 and the active substance-coated part 21 by the support 3 supporting and guiding the conductive part 22 to be fitted to the first post terminal 12, so as to further improve the reliability of the battery cell 10.

In some embodiments, the post terminal body 1201 is provided with a first accommodating part 121, the support 3 is provided with a guiding part 32, the guiding part 32 defines, in an enclosing manner, at least a part of the clearance hole 31, and at least a part of the guiding part 32 extends to the first accommodating part 121.

It is worth mentioning that the guiding part 32 protrudes from the support 3 and extends into the first accommodating part 121, and at least a part of the clearance hole 31 is formed in the guiding part 32, such that when the conductive part 22 is provided in the clearance hole 31 in a penetrating manner, at least a part of the conductive part 22 can be easily accommodated in the first accommodating part 121, thereby improving the assembly efficiency of the conductive part 22; meanwhile, by providing the guiding part 32, the fits between the support 3 and the first post terminal 12, and between the support 3 and the conductive part 22 are tighter and more reliable, such that the structure of the battery cell 10 becomes more compact, which is more conducive to improving the energy density of the battery cell 10.

Referring to FIGs. 33-35, optionally, the support 3 is provided with a third groove 38. At least a part of the first post terminal 12 located in the housing 11 is accommodated in the third groove 38.

In the above technical solution, by providing the third groove 38 on the support 3, at least a part of the part of the first post terminal 12 located in the housing 11 is accommodated in the third groove 38 of the support 3, such that the compactness of the structure can be improved. In one aspect, it is conducive to reducing the space occupied by the support 3 in the housing 11, and in another aspect, it is also conducive to improving the stability and reliability of the first post terminal 12, so as to ensure the reliability and stability of the electrical connection between the first post terminal 12 and the battery cell assembly 2, thereby improving the reliability and stability of the charging and discharging operations of the battery cell 10.

In addition, in some embodiments, the guiding part 32 may be configured to participate in defining the third groove 38, so as to simplify the structure of the support 3 and reduce the design and processing difficulties of the support 3, which is conducive to increasing the wall thickness of the guiding part 32 and improving the guiding reliability of the conductive part 32. Furthermore, it is also conducive to improving the stability and reliability of the first post terminal 12, so as to ensure the reliability and stability of the electrical connection between the first post terminal 12 and the battery cell assembly 2, and improve the reliability and stability of the charging and discharging operations of the battery cell 10.

Referring to FIGs. 33-35, in some embodiments, the clearance hole 31 includes a first hole segment 311 and a second hole segment 312, the second hole segment 312 is located on a side of the first hole segment 311 proximal to the active substance-coated part 21, and the cross-sectional area of the second hole segment 312 gradually increases in a direction distal to the first hole segment 311. The active substance-coated part 21 includes a current collector 211 and an active substance layer 212 provided on the current collector 211, the conductive part 22 includes a tab part 221 electrically connected to the current collector 211, the tab part 221 includes a plurality of tab plates 2211, parts of the plurality of tab plates 2211 proximal to the current collector 211 converge to form a first gathering part 2212, parts of the plurality of tab plates 2211 distal to the current collector 211 converge and are connected to form a second gathering part 2213, the first gathering part 2212 connects the second gathering part 2213 and the active substance-coated part 21, at least a part of the first gathering part 2212 is accommodated in the second hole segment 312, and the second gathering part 2213 is provided in the first hole segment 311 in a penetrating manner.

In the above technical solution, by providing the clearance hole 31 to include the second hole segment 312 that gradually expands in the direction toward the active substance-coated part 21, it is convenient for the second hole segment 312 to accommodate more first gathering parts 2212, so as to improve the compactness of the fit between the support 3 and the battery cell assembly 2, such that the overall volume of the battery cell 10 is smaller, and the battery 100 can accommodate a greater number of battery cells 10, thereby improving the volumetric energy density of the battery 100. In addition, in the above technical solution, the specific explanations of the first gathering part 2212 and the second gathering part 2213 have been provided in the previous embodiments and will not be repeated herein.

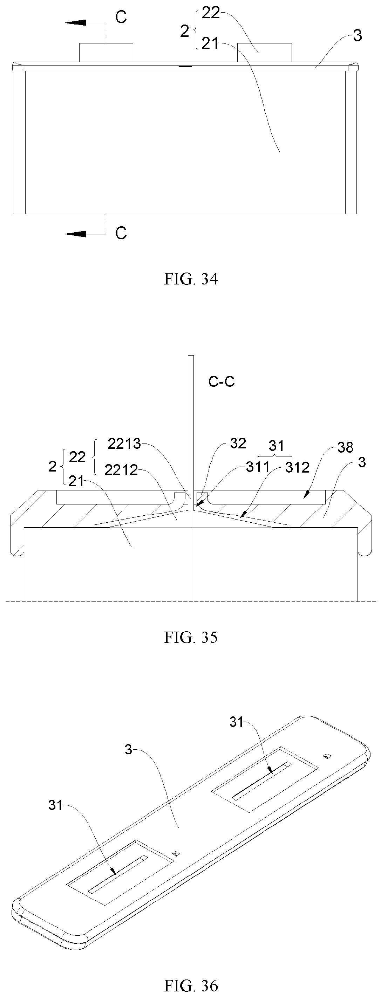

In some embodiments, the support 3 is of an integrated structure; or, referring to FIG. 36, the support 3 is of a split-type structure and includes a first support 33 and a second support 34 that are separable, and a clearance hole 31 is defined between the first support 33 and the second support 34.

In the above technical solution, the clearance hole 31 is formed in the form of a through hole penetrating the support 3. As such, the support 3 of the integrated structure is convenient to process, the support 3 has good reliability, and the support 3 can be conveniently assembled with the housing assembly 1, thereby improving the assembly efficiency and fitting stability. It can be understood that how to process the support 3 can be specifically selected according to the material of the support 3. For example, when the support 3 is an insulating plastic member, the support 3 of an integrated structure may be obtained by injection molding.

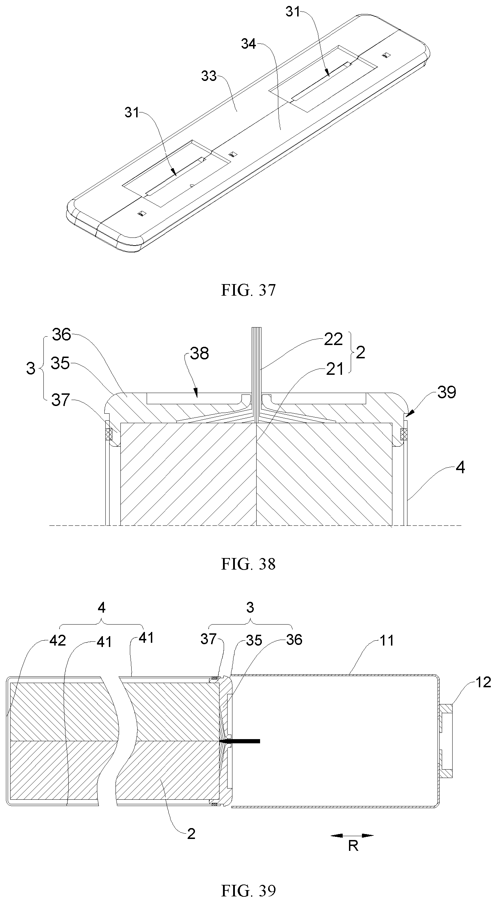

Referring to FIG. 37, when the support 3 is of a split-type structure, the support 3 includes a first support 33 and a second support 34 that are separable. The first support 33 and the second support 34 are both of a long-stripped plate-shaped structure and can be detachably connected, for example, in insertion fit or snap fit, to facilitate the assembly. Meanwhile, a half-hole structure is provided on a side of the first support 33 proximal to the second support 34, and another half-hole structure of a matched shape is correspondingly provided on a side of the second support 34 proximal to the first support 33. The half-hole structure of the first support 33 and the half-hole structure of the second support 34 together define, in an enclosing manner, the annular clearance hole 31. That is, the clearance hole 31 is defined between the first support 33 and the second support 34.

In the above technical solution, the clearance hole 31 is defined through the cooperation of the first support 33 and the second support 34. When the support 3 and the battery cell assembly 2 are assembled, it is not necessary to pass the conductive part 22 from one end of the clearance hole 31 to the other end. Instead, the first support 33 and the second support 34 can be assembled at the position of the conductive part 22 to clamp the conductive part 22, such that the clearance hole 31 surrounds the conductive part 22, thereby facilitating the assembly of the support 3 and the battery cell assembly 2 and improving the assembly efficiency.

As an optional solution, when the cross-section of the clearance hole 31 is long strip-shaped, the first support 33 and the second support 34 are separately provided on two sides of the clearance hole 31 in the width direction. For example, if the width direction of the clearance hole 31 is a left-right direction, the first support 33 and the second support 34 are located on the left and right sides of the clearance hole 31, so as to facilitate the fit of the first support 33, the second support 34, and the conductive part 22.

Referring FIGs. 33, 38 and 39, in the embodiments of the present application, the composition of the support 3 is not limited to this. For example, the edge of the support 3 can also be provided with a housing entry guiding surface 35. The housing entry guiding surface 35 can be an inclined surface or a curved surface, and is projected in the axial direction R of the first post terminal 12. The orthographic projection of the active substance-coated part 21 is completely located within the range of the orthographic projection of the support 3, and the orthographic projection of the support 3 exceeds the range of the orthographic projection of the active substance-coated part 21. During assembly, the support 3 and the battery cell assembly 2 may be pre-assembled together, and then the pre-assembled assembly is mounted into the housing 11. During the mounting, the support 3 is located at the front end of the active substance-coated part 21, that is, the support 3 enters the housing 11 before the active substance-coated part 21, such that the difficulty of the support 3 entering the housing 11 can be reduced by utilizing the housing entry guiding surface 35, and the active substance-coated part 21 can be protected by utilizing the relatively large projection area of the support 3, thereby reducing the probability of scratching and damaging the active substance-coated part 21 and the housing 11, and improving the assembly efficiency and the success rate. Moreover, the contact area between the support 3 and the active substance-coated part 21 can be increased, such that the stress concentration problem can be alleviated, and other structural members can be saved.

Referring to FIG. 38, in some embodiments of the present application, the battery cell 10 may further include an inner insulating member 4. The inner insulating member 4 is located in the housing 11 and wrapped around the active substance-coated part 21, and the inner insulating member 4 is connected to the support 3. In the above embodiments, in one aspect, by wrapping the active substance-coated part 21 with the inner insulating member 4, the insulation reliability between the active substance-coated part 21 and the housing 11 can be improved, the corrosion of the housing 11 caused by the contact between the active substance-coated part 21 and the housing 11 can be reduced or prevented, and the leakage of the electrolytic solution caused by the corrosion of the housing 11 can be reduced, thereby improving the reliability of the battery cell 10. In another aspect, connecting the inner insulating member 4 to the support 3 can reduce the difficulty of fixing the inner insulating member 4 and improve the reliability of the inner insulating member 4 wrapped outside the active substance-coated part 21.

Referring to FIG. 38, in the embodiments of the present application, the support 3 includes a body part 36 and an extending part 37. The body part 36 is located on a side of the active substance-coated part 21 proximal to the first post terminal 12, and the extending part 37 is connected to the body part 36 and is located in the outer peripheral region of the active substance-coated part 21. For example, the extending part 37 can be connected to the circumferential edge of the body part 36 to form an annular extending structure connected to the body part 36, or can extend from a part of the circumference of the main body part 36 to form a block structure protruding relative to the body part 36. In one aspect, by the arrangement of the extending part 37, a limiting fit to the active substance-coated part 21 can be realized, so as to alleviate the problem of corrosion caused by carbon powder falling off the edge of the active substance-coated part 21 overlapping the housing 11. In another aspect, by the arrangement of the extending part 37, the inner insulating member 4 can also be fixed, thereby improving the connection reliability between the inner insulating member 4 and the support 3 and realizing a better insulation effect.

Illustratively, referring to FIG. 38, the body part 36 and the extending part 37 can define a positioning groove 39 located on a side of the extending part 37 distal to the active substance-coated part 21, and an end part of the inner insulating member 4 is embedded in the positioning groove 39 to prevent the inner insulating member 4 from protruding from the edge of the body part 36. In this way, when entering the housing, the body part 36 can be used to protect the inner insulating member 4, thereby the probability of scratching and damaging the inner insulating member 4 and the housing 11.

Specifically, referring to FIG. 39, the inner insulating member 4 may be an integrated film, and is provided with a body part 41 located on both sides of the active substance-coated part 21 in the thickness direction and a connecting part 42 connecting the two body part parts 41. The connecting part 42 is located on a side of the active substance-coated part 21 distal to the first post terminal 12, and an edge of the body part 41 on a side distal to the connecting part 42 extends to the extending part 37 and is connected to the extending part 37, thereby realizing better insulation performance and facilitating the connection.

In the embodiments of the present application, the specific method for providing the first post terminal 12 on the housing 11 is not limited, for example, by riveting or by welding, which will be separately described below.

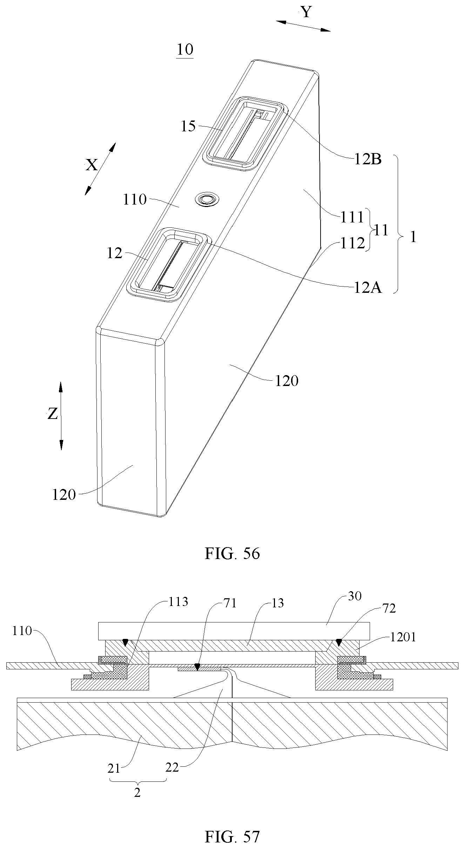

In some embodiments, referring to FIGs. 56 and 57, the housing 11 is provided with a first wall 110, a mounting hole 113 is formed on the first wall 110, and the post terminal body 1201 is provided in the mounting hole 113; taking a plane where the cross-section of the mounting hole 113 is located as a projection plane, in a direction perpendicular to the projection plane, a ratio of a projection area of the first welding part 71 on the projection plane to a projection area of the first wall 110 on the projection plane is in a range of 0.1%-1%.

The cross-section of the mounting hole 113 is perpendicular to the axial direction (a third direction Z) of the mounting hole 113, and the projection direction in the above conditions is parallel to the axial direction of the mounting hole 113. As such, the orthographic projection area of the first welding part 71 can be understood as an orthographic projection area of the connection region between the conductive part 22 and the post terminal body 1201 on the cross-section of the mounting hole 113, and thus the orthographic projection area of the first welding part 71 on the cross-section of the mounting hole 113 can reflect the area of the connection area between the conductive part 22 and the post terminal body 1201. If the orthographic projection area of the first welding part 71 on the cross-section of the mounting hole 113 meets the above conditions, then the equivalent resistance between the conductive part 22 and the post terminal body 1201 can be reduced to a certain extent, the current passage area of the first post terminal 12 can be increased, and the current passage capacity of the first post terminal 12 can be increased, which is conducive to increasing the charging speed of the battery cell 10 and the fast charging performance of the battery cell 10, and also conducive to increasing the thermal diffusion capacity of the first post terminal 12 to a certain extent.

In the above technical solution, by setting the ratio of the projection area of the first welding part 71 on the projection plane to the projection area of the first wall 110 on the projection plane to be in the range of 0.1%-1%, the effective current passage area between the conductive part 22 and the post terminal body 1201 is increased, the current passage area of the first post terminal 12 is increased, and the current passage capacity of the first post terminal 12 is increased, which is conducive to increasing the charging speed of the battery cell 10, and also conducive to increasing the thermal diffusion capacity of the first post terminal 12 to a certain extent and reducing the current passage temperature of the first post terminal 12, and thus helping to reduce the risk of loss of control of the battery cell 10.

In some embodiments, referring to FIG. 57, the housing 11 is provided with a mounting hole 113, the post terminal body 1201 includes a post terminal body part 12a, a first limiting stage part 12b, and a second limiting stage part 12c that are integrally formed, the post terminal body part 12a is provided in the mounting hole 113 of the housing 11 in a penetrating manner, the first limiting stage part 12b and the second limiting stage part 12c are provided at both ends of the post terminal body part 12a in an axial direction of the mounting hole 113, the first limiting stage part 12b is in limiting fit to an outer side of the housing 11, and the second limiting stage part 12c is in limiting fit to an inner side of the housing 11, such that the post terminal body 1201 is riveted to the housing 11.

It can be seen that the first limiting stage part 12b and the second limiting stage part 12c separately extend in a radial direction of the mounting hole 113 to the radial outer side of the peripheral wall of the mounting hole 113. The first limiting stage part 12b can limit the movement of the first post terminal 12 relative to the housing 11 in a direction toward the inner side of the housing 11, whereas the second limiting stage part 12c can limit the movement of the first post terminal 12 relative to the housing 11 in a direction toward the outside of the housing 11, such that the first post terminal 12 is easy to be reliably mounted at the mounting hole 113 through the first limiting stage part 12b and the second limiting stage part 12c, so as to realize the fixed connection between the first post terminal 12 and the housing 11 and facilitate the assembly of the first post terminal 12 and the housing 11; moreover, there is no need to adopt other connection modes between the first post terminal 12 and the housing 11, that is, it is convenient to achieve a reliable connection between the first post terminal 12 and the housing 11, which is conducive to simplifying the structure of the housing assembly 1 and simplifying the assembly process of the housing assembly 1.

Moreover, since the post terminal body part 12a, the first limiting stage part 12b, and the second limiting stage part 12c are integrally formed, components can be saved and costs can be reduced. Meanwhile, it is convenient to ensure the strength of the first post terminal 12, such that the first post terminal 12, after being fitted to the housing 11, is not easy to separate from the housing 11 due to vibration or external pulling during the charging and discharging processes of the battery cell 10, and also not easy to crack or be damaged due to vibration or external pulling, which can improve the stability and reliability of the housing assembly 1, thereby improving the stability and reliability of the battery cell 10.

Illustratively, the axial direction of the mounting hole 113 is the third direction Z, the through mounting hole 113 is formed on the side wall of the housing 11 in the third direction Z, and the first limiting stage part 12b and the second limiting stage part 12c are provided at both ends of the post terminal body part 12a along the third direction Z.

It should be noted that in the above technical solution, the post terminal of the housing assembly 1 may be one or more. At least one post terminal is a first post terminal 12 including a post terminal body part 12a, a first limiting stage part 12b and a post terminal body part 12a, a first limiting stage part 12b, and a second limiting stage part 12c that are integrally formed, or a part of the post terminals on the housing 11 is a first post terminal 12 including a post terminal body part 12a, a first limiting stage part 12b and a second limiting stage part 12c that are integrally formed, and the other part of the post terminals are other structures.

It can be understood that, in the present application, the first post terminal 12 can be used as a positive electrode post terminal or a negative electrode post terminal, which is not limited here.

For example, referring to FIG. 57. FIG. 57 is a schematic diagram of an assembly process of the first post terminal 12 and the first wall 110 according to some embodiments of the present application. The first limiting stage part 12b, the second limiting stage part 12c and the post terminal body part 12a are an integrated member. Before the first post terminal 12 is riveted to the housing 11, one of the first limiting stage part 12b and the second limiting stage part 12c can extend in the axial direction of the mounting hole 113, and the other can extend in the radial direction of the mounting hole 113. After the post terminal body part 12a is provided in the mounting hole 113 in a penetrating manner, the above one of the first limiting stage part 12b and the second limiting stage part 12c can be riveted to extend in the radial direction of the mounting hole 113 using tools and the like, so as to realize the riveting fixation of the first post terminal 12 and the housing 11.

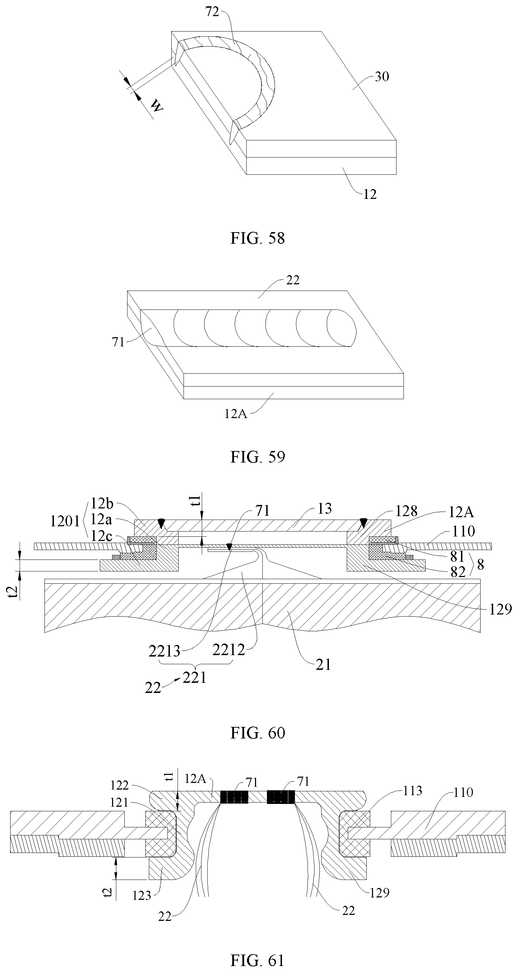

In some embodiments, as shown in FIGs. 60, 61 and 65, in the axial direction, a thickness of the first limiting stage part 12b is t1, where 2 mm ≤ t1 ≤ 3.2 mm, so as to take into account the riveting strength of the first post terminal 12 at the first limiting stage part 12b and the volumetric energy density of the battery cell 10 at the same time, thereby avoiding reducing the volumetric energy density of the battery cell 10 resulting from the thickness of the first limiting stage part 12b being set to be relatively large due to considering the riveting strength of the first post terminal 12 and meanwhile avoiding poor riveting strength of the first post terminal 12 at the first limiting stage part 12b resulting from the thickness·of the first limiting stage part 12b being set to be relatively small due to considering the volumetric energy density of the battery·cell 10.

For example, t1 may be 2 mm, 2.2 mm, 2.5 mm, 2.7 mm, 2.9 mm, 3 mm, 3.2 mm, or the like.

In some embodiments, as shown in FIGs. 60, 61 and 62, in the radial direction of the mounting hole 113, a width of the first limiting stage part 12b is x1, where x1 ≥ 1mm, so as to enhance the limiting effect of the first limiting stage part 12b on the first post terminal 12, thereby improving the riveting reliability of the first post terminal 12 and the housing 11 to a certain extent. The width d of the first limiting stage part 12b may be understood as a distance from the outer peripheral wall of the post terminal body part 12a to the outer side wall of the first limiting stage part 12b in the radial direction of the mounting hole 113.

For example, x1 may be 1 mm, 1.2 mm, 1.5 mm, 1.8 mm, 2 mm, or the like.

In some embodiments, as shown in FIGs. 60, 61 and 62, in the axial direction, a thickness of the second limiting stage part 12c is t2, where t2 ≤ 2 mm, so as to take into account the riveting strength of the first post terminal 12 at the second limiting stage part 12c and the volumetric energy density of the battery cell 10 at the same time, thereby avoiding reducing the volumetric energy density of the battery cell 10 resulting from the thickness of the second limiting stage part 12c being set to be relatively large due to considering the riveting strength of the first post terminal 12 and meanwhile avoiding poor riveting strength of the first post terminal 12 at the second limiting stage part 12c resulting from the thickness·of the second limiting stage part 12c being set to be relatively small due to considering the volumetric energy density of the battery·cell 10.

For example, t2 may be 2 mm, 1.8 mm, 1.5 mm, 1.4 mm, 1.2 mm, or the like.

In some embodiments, the distance between an end of the second limiting stage part 12c distal to the first limiting stage part 12b and the inner side wall of the housing 11 in the axial direction of the mounting hole 113 is less than or equal to 2 mm, so as to further improve the energy density of the battery cell 10.

In some embodiments, at least one of the first limiting stage part 12b and the second limiting stage part 12c is a member separate from and fixedly connected to the post terminal body part 12a. That is, the first limiting stage part 12b or the second limiting stage part 12c can be a member separate from and fixedly connected to the post terminal body part 12a, or the first limiting stage part 12b and the second limiting stage part 12c both can be members separate from and fixedly connected to the post terminal body part 12a. In this technical solution, since at least one of the first limiting stage part 12b and the second limiting stage part 12c is a member separate from the post terminal body part 12a, the first post terminal 12 is relatively easy to operate when assembly with the housing 11, which can reduce the difficulty of assembly and facilitate subsequent disassembly and replacement, thereby reducing the use costs.

In some embodiments, at least one of the first limiting stage part 12b and the second limiting stage part 12c is connected to the post terminal body part 12a by welding.

In some embodiments, the post terminal body part 12a, the first limiting stage part 12b, and the second limiting stage part 12c are an integrated member. It can be understood that in this way, the assembly steps between the first post terminal 12 and the housing 11 can be reduced, the assembly process can be simplified, and the work efficiency can be improved. Meanwhile, by configuring the post terminal body part 12a, the first limiting stage part 12b and the second limiting stage part 12c as an integrated member, the mounting between the first post terminal 12 and the housing 11 can be made more reliable, and the risk of the first post terminal 12 falling off from the housing 11 due to the loosening of components of the split post terminal can be reduced.

Secondly, the post terminal body part 12a, the first limiting stage part 12b and the second limiting stage part 12c may be made of the same or different materials; certainly, the post terminal body 12a, the first limiting stage part 12b, and the second limiting stage part 12c can be separate members.

In some embodiments, as shown in FIGs. 60, 61 and 62, the battery 100 further includes an insulating and sealing component 8, and the insulating and sealing member 8 is provided between the first post terminal 12 and the housing 11, so as to achieve insulation and sealing between the first post terminal 12 and the housing 11.

In some embodiments, as shown in FIGs. 60, 61 and 62, the insulating and sealing component 8 includes an insulating member 81 and a sealing member 82. The insulating member 81 is provided between the first limiting stage part 12b and the housing 11; the sealing member 82 is provided between the second limiting stage part 12c and the housing 11, and a part of the insulating member 81 and/or a part of the sealing member are fitted between the post terminal body part 12a and the peripheral wall of the mounting hole 113. The insulating member 81 can play an insulating role between the first limiting stage part 12b and the housing 11 to ensure insulation reliability, and the sealing member 82 can play a sealing role such that the electrolytic solution in the housing 11 is not easy to overflow.

In some embodiments, as shown in FIGs. 60, 61 and 62, a mating groove is formed on the outer side wall of the housing 11 to accommodate the insulating member 81, which facilitates the limiting and mounting of the insulating member 8 and can avoid, to a certain extent, the misalignment of the insulating member 8 that tends to occur during the riveting process between the first post terminal 12 and the housing 11. Meanwhile, under the premise that the housing 11 can be used reliably, by providing the mating groove, it is conducive to reducing a height of the insulating member 8 protruding from the outer side wall of the housing 11, and thus it is conducive to reducing a height of the first post terminal 12 protruding from the outer side wall of the housing 11, so as to improve the volumetric energy density (VED) of the battery cell 10. Certainly, a mating groove may not be formed on the outer side wall of the housing 11.

In some embodiments, as shown in FIGs. 60, 61 and 62, a mating protrusion is formed on the inner side wall of the housing 11, and the mating protrusion abuts against the sealing member 82, so as to help improve the sealing reliability of the sealing member 82. Certainly, a mating protrusion may not be formed on the inner side wall of the housing 11.

For example, in the examples shown in FIGs. 60, 61 and 62, a mating groove is formed on the outer side wall of the housing 11 to accommodate the insulating member 8, a mating protrusion is formed on the inner side wall of the housing 11, and the mating protrusion abuts against the sealing member 82.

Optionally, the insulating and sealing component 8 may be an integrated member, that is, the insulating member 8 and the sealing member 82 are an integrated member, and at this time, the insulating component 8 and the sealing component 82 may be made of the same or different materials. Certainly, the insulating member 8 and the sealing component 82 may be separate members.

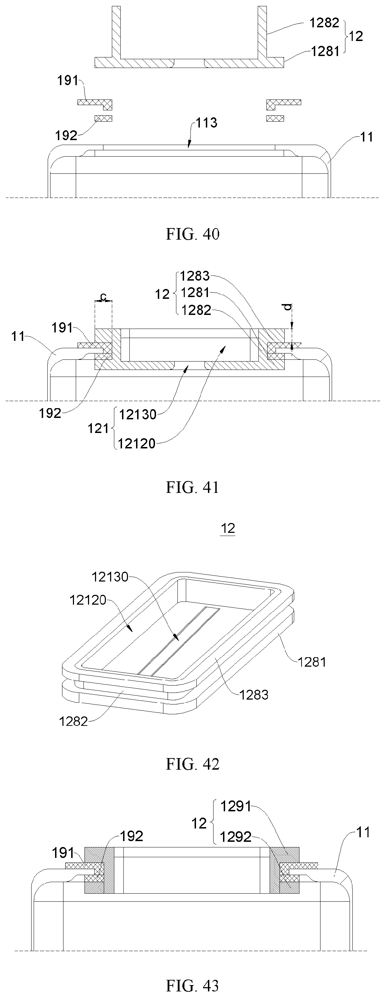

Specifically, referring to FIGs. 40-42, the first post terminal 12 may include a stopper part 1281 and a penetration part 1282 before riveting. During assembly, the stopper part 1281 is stopped inside the housing 11, and the penetration part 1282 is provided in the mounting hole 113 in a penetrating manner. Then, a part of the penetration part 1282 located outside the housing 11 is riveted to form a flange part 1283. The flange part 1283 is stopped outside the housing 11, thereby achieving the mounting of the first post terminal 12. It should be noted that the penetration part 1282 may refer to the post terminal body part 12a described below, the stopper part 1281 may refer to the second limiting stage part 12c described below, and the flange part 1283 may refer to the first limiting stage part 12b described below.

Optionally, referring to FIGs. 40 and 41, the housing assembly 1 may include several sealing gaskets fitted between the housing 11 and the first post terminal 12, e.g., the first sealing gasket 191 and the second sealing gasket 192 shown in FIG. 40, and the like. The sealing gaskets are assembled in place before riveting. After the first post terminal 12 is riveted, the first post terminal 12 presses the sealing gaskets to form a seal, such that the sealing performance of the fit between the first post terminal 12 and the housing 11 can be improved using the sealing gaskets. The number, position and material of the sealing gaskets are not limited. For example, the material may be silicone, plastic, etc., which is not limited here.

Optionally, referring to FIG. 41, a length c of the flange part 1283 may be greater than or equal to 1 mm, and a thickness d may be greater than or equal to 2 mm, so as to improve the riveting strength of the first post terminal 12. When the length c of the flange part 1283 is less than 1 mm and/or the thickness d is less than 2 mm, the reliability of the first post terminal 12 and the housing 11 is reduced under relatively strong vibration.

For another example, in other embodiments of the present application, referring to FIGs. 6 and 7, the first post terminal 12 may be of a split-type structure and connected by welding to be mounted in the housing 11. For example, the first post terminal 12 includes a first part 1291 and a second part 1292. At least a part of the first part 1291 is stopped outside the housing 11, and at least a part of the second part 1292 is stopped inside the housing 11. At least one of the first part 1291 and the second part 1292 is provided in the mounting hole 113 in a penetrating manner and connected to the other by welding (for example, laser welding), such that the mounting of the first post terminal 12 can be realized.

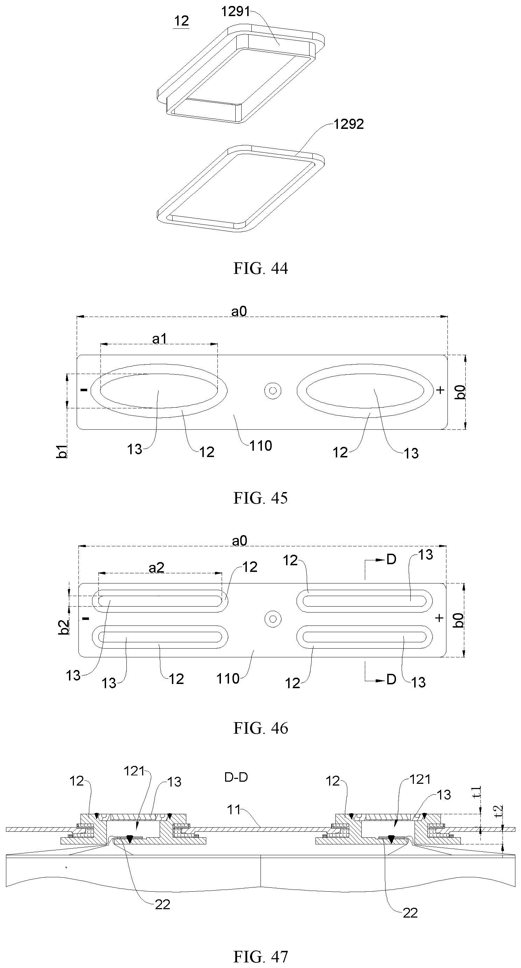

In some optional embodiments, referring to FIGs. 45 and 46, a plurality of first post terminals 12 are provided and are all located on a surface of the housing 11 on the same side, thereby facilitating mounting and improving assembly efficiency.

It should be noted that the arrangement manner of the plurality of first post terminals 12 on the surface on the same side is not limited. For example, when the cross-section of the first post terminal 12 is a slender structure, for example, with the cross-sectional length greater than or equal to three times the cross-sectional width, such as an ellipse, a track shape, or a rectangle, the first post terminal can better match a thin and flat housing 11. For example, the plurality of first post terminals 12 are all provided on a surface of the housing 11 on a side in the height direction (referred to as a first wall surface 110). The length direction of each of the first post terminals 12 is consistent with the length direction of the first wall surface 110 of the housing 11, and the plurality of first post terminals 12 are spaced apart in the length direction and/or width direction of the first wall surface 110.

For example, in the example shown in FIG. 45, when the first wall surface 110 is provided with two first post terminals 12, the two first post terminals 12 are spaced apart in the length direction of the first wall surface 110. Optionally, referring to FIG. 45, a part of the first post terminals 12 located outside the housing 11 (referred to as an exterior of the post terminal) is annular, and in the length direction of the first wall surface 110, an inner ring length a1 of the exterior of the post terminal is greater than or equal to 1/3 of a length a0 of the first wall surface 110, and in the width direction of the first wall surface 110, an inner ring width b1 of the exterior of the post terminal is greater than or equal to 3/4 of a width b0 of the first wall surface 110. As such, the first post terminal 12 can provide a larger area for electrical connection to the busbar component, so as to further improve the current passage capacity of the first post terminal 12. Illustratively, the inner ring length a1 of the exterior of the post terminal is greater than or equal to 50 mm, and the inner ring width b1 of the exterior of the post terminal is greater than or equal to 30 mm.

In addition, referring to FIG. 45, when the first wall surface 110 is provided with two first post terminals 12, and the two first post terminals 12 are spaced apart in the length direction of the first wall surface 110, in some optional embodiments, each of the first post terminal 12 includes a part located inside the housing 11 (referred to as an interior of the post terminal). In the length direction of the first wall surface 110, the length of the interior of the post terminal is greater than or equal to 1/3 of the length of the first wall surface 110, and in the width direction of the first wall surface 110, the width of the interior of the post terminal is greater than or equal to 3/4 of the width of the first wall surface 110. As such, the first post terminal 12 can provide a larger area for electrical connection to the conductive part 22, so as to further improve the current passage capacity of the first post terminal 12. Illustratively, the length of the interior of the post terminal is greater than or equal to 50 mm, and the width of the interior of the post terminal is greater than or equal to 30 mm.

For another example, in the example shown in FIG. 46, when the first wall surface 110 is provided with four first post terminals 12, two of the first post terminals 12 are spaced apart in the width direction of the first wall surface 110 to form a group, and a total of two groups are spaced apart in the length direction of the first wall surface 110. Optionally, referring to FIG. 46, a part of the first post terminals 12 located outside the housing 11 (referred to as an exterior of the post terminal) is annular, and in the length direction of the first wall surface 110, an inner ring length a2 of the exterior of the post terminal is greater than or equal to 1/3 of a length a0 of the first wall surface 110, and in the width direction of the first wall surface 110, an inner ring width b2 of the exterior of the post terminal is greater than or equal to 1/5 of a width b0 of the first wall surface 110. As such, the first post terminal 12 can provide a larger area for electrical connection to the busbar component, so as to further improve the current passage capacity of the first post terminal 12. Illustratively, the inner ring length a2 of the exterior of the post terminal is greater than or equal to 50 mm, and the inner ring width b2 of the exterior of the post terminal is greater than or equal to 8 mm.

In addition, referring to FIG. 46, when the first wall surface 110 is provided with four first post terminals 12, two of the post terminals 12 are spaced apart in the width direction of the first wall surface 110 to form a group, and a total of two groups are spaced apart in the length direction of the first wall surface 110, in some optional embodiments, the first post terminal 12 includes a part located inside the housing 11 (referred to as an interior of the post terminal). In the length direction of the first wall surface 110, the length of the interior of the post terminal is greater than or equal to 1/3 of the length of the first wall surface 110, and in the width direction of the first wall surface 110, the width of the interior of the post terminal is greater than or equal to 1/5 of the width of the first wall surface 110. As such, the first post terminal 12 can provide a larger area for electrical connection to the conductive part 22, so as to further improve the current passage capacity of the first post terminal 12. Illustratively, the length of the interior of the post terminal is greater than or equal to 50 mm, and the width of the interior of the post terminal is greater than or equal to 8 mm.

In some embodiments, referring to FIGs. 45 and 46, a part of the first post terminal 12 is located inside the housing 11, and a part of the first post terminal 12 is located outside the housing 11. An orthographic projection area of the part of the first post terminal 12 located outside the housing 11 on the first wall surface 110 is greater than or equal to 5% of an area of the first wall surface 110. For example, an orthographic projection area of the part of the first post terminal 12 located outside the housing 11 on the first wall surface 110 is greater than or equal to 5%, 6%, 7%, 8%, 9%, 10%, or the like of the area of the first wall surface 110. As such, the connection area between the first post terminal 12 and the busbar component can be increased, so as to increase the effective current passage area between the first post terminal 12 and the busbar component, which is conducive to improving the charging speed of the battery cell 10.

In addition, in some embodiments, referring to FIG. 47, a vertical height t1 of a part of the first post terminal 12 protruding from the outer surface of the first wall surface 110 (referred to as an exterior of the post terminal) from the first wall surface 110 may be less than or equal to 3.2 mm, and a vertical height t2 of a part of the first post terminal 12 protruding from the inner surface of the first wall surface 110 (referred to as an interior of the post terminal) from the first wall surface 110 may be less than or equal to 2 mm, so as to improve the volumetric energy density of the battery cell 10.

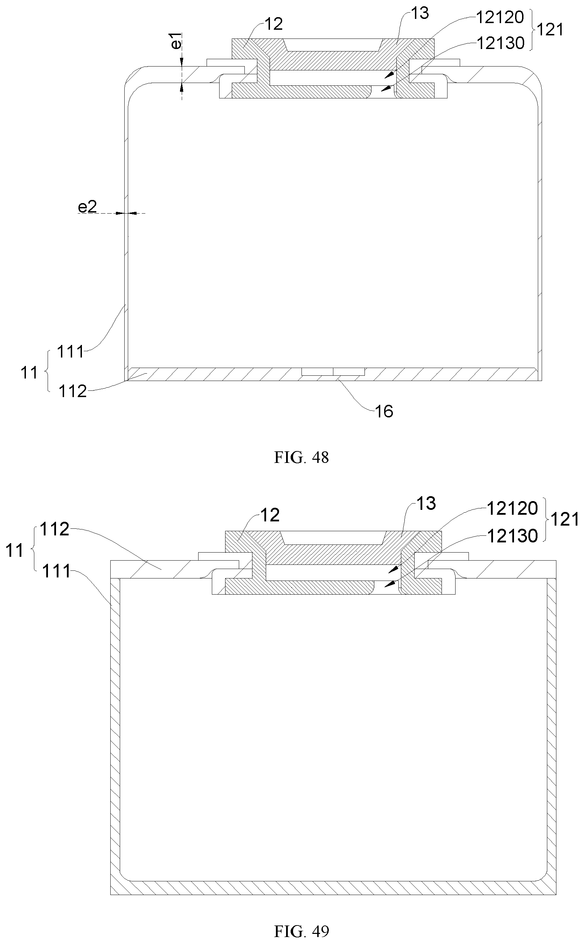

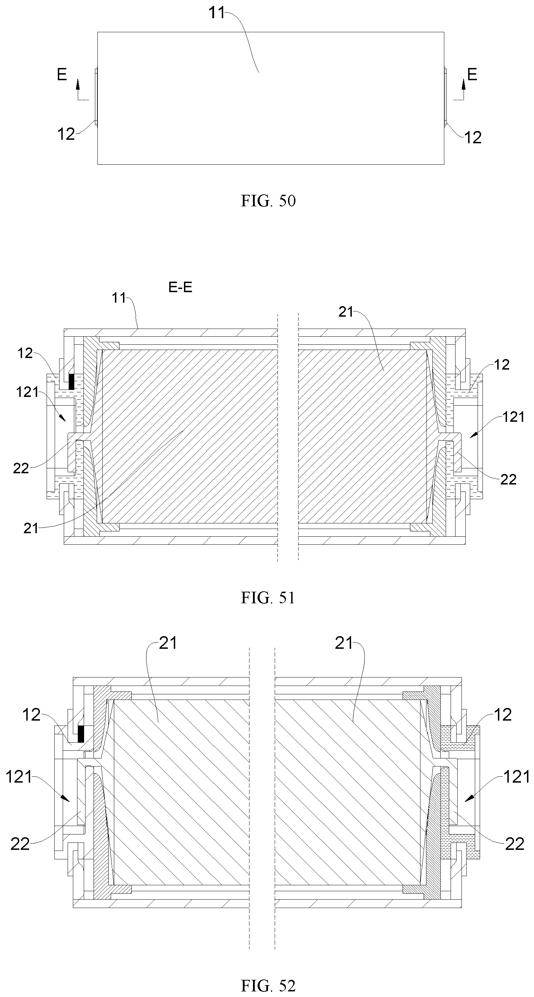

FIG. 48 is a cross-sectional schematic diagram of the housing assembly 1 according to some embodiments of the present application; FIG. 49 is a cross-sectional schematic diagram of the housing assembly 1 according to some embodiments of the present application; FIG. 50 is an orthographic projection diagram of the battery cell 10 according to some embodiments of the present application; FIG. 51 is a cross-sectional view along the line E-E in FIG. 50; FIG. 52 is a partial cross-sectional schematic diagram of the battery cell 10 according to some embodiments of the present application. Referring to FIGs. 48-52, in the embodiments of the present application, the housing 11 specifically includes a housing body 111 and a housing cover 112. The housing body 111 is of a square annular structure with one or both ends open. When one end of the housing body is open, the number of the housing cover 112 is one, and the housing cover lids an open position. When both ends of the housing body are open, the number of the housing cover 112 is two, and the housing covers lid both open ends of the housing body 111, respectively.

Specifically, when the housing 11 includes the housing body 111 and the housing cover 112, and one end of the housing body 111 is open, the housing body 111 is an integrally formed part, and may specifically be a square structure formed by stretching. In this case, the first post terminal 12 may be provided on at least one of the housing body 111 or the housing cover 112. Illustratively, referring to FIG. 48, the first post terminal 12 may be specifically provided at an end of the housing body 111 distal to the housing cover 112. When the battery cell 10 is used in a vibration environment, the vibration at the connection between the housing body 111 and the housing cover 112 is relatively small, and the connection position of the housing body 111 and the housing cover 112 is unlikely to crack, which can improve the reliability of the battery cell 10 and help reduce the wall thickness of the housing body 111, thereby reducing costs and weight, and facilitating miniaturization of the battery cell 10.

As an optional solution, referring to FIG. 48 again, when a plurality of first post terminals 12 are provided, all the first post terminals 12 are provided at an end of the housing body 111 distal to the housing cover 112. As such, when the battery cell 10 is used in a vibration environment, the vibration at the connection between the housing body 111 and the housing cover 112 is small, and the connection position of the housing body 111 and the housing cover 112 is unlikely to crack, which can improve the reliability of the battery cell 10. Furthermore, the wall thickness e1 of an end wall of the housing body 111 distal to the housing cover 112 may be reduced to less than or equal to 2 mm, and the wall thickness e2 of the side wall of the housing body 111 connecting the above end wall and the housing cover 112 may be reduced to less than or equal to 0.8 mm, thereby reducing costs and weight, and facilitating miniaturization of the battery cell 10.

When the first accommodating groove 12110 corresponding to the mounting hole 113 is formed on the first post terminal 12, the wall thickness of a part of the first post terminal 12 located on a side of the first accommodating groove 12110 distal to the active substance-coated part 21 is relatively small, such that the welding of the conductive part 22 to the first post terminal 12 can be achieved from the outside of the housing 11. Referring to FIG. 48, in the case where the housing 11 includes a housing body 111 and a housing cover 112, and the housing cover 112 is provided at an open end of the housing body 111, even if the first post terminal 12 is provided at a closed end of the housing body 111, there is no need to worry about the problem that it is difficult to weld the conductive part 22 to the first post terminal 12 from the inside of the housing 11, because the conductive part 22 and the first post terminal 12 can be welded from the outside of the housing 11, such that the connection stability and reliability of the housing body 111 and the housing cover 112 can be improved by providing the first post terminal 12 at the closed end of the housing body 111.

When the above second accommodating groove 12120 is formed on the first post terminal 12, since the welding of the conductive part 22 to the first post terminal 12 can be realized from the outside of the housing 11 through the opening of the second accommodating groove 12120, referring to FIG. 48, in the case where the housing 11 includes a housing body 111 and a housing cover 112, the housing cover 112 is provided at an open end of the housing body 111, even if the first post terminal 12 is provided at a closed end of the housing body 111, there is no need to worry about the problem that it is difficult to weld the conductive part 22 to the first post terminal 12 from the inside of the housing 11, because the conductive part 22 and the first post terminal 12 can be welded from the outside of the housing 11, such that the connection stability and reliability of the housing body 111 and the housing cover 112 can be improved by providing the first post terminal 12 at the closed end of the housing body 111.

Certainly, referring to FIG. 49, in other embodiments of the present application, all the first post terminals 12 may be separately provided on the housing cover 112 as required. As such, the assembly of the first post terminal 12 and the housing cover 112 is facilitated, which is not limited in the embodiments.

In addition, referring to FIGs. 50-52, in the embodiments of the present application, when a plurality of first post terminals 12 are provided, the first post terminals 12 may be provided on two surfaces of the housing 11 on different sides. For example, a plurality of first post terminals 12 are provided and separately provided on surfaces of the housing 11 on two adjacent sides. For another example, a plurality of first post terminals 12 are provided and separately provided on surfaces of the housing 11 on two opposite sides.

When the first post terminals 12 are separately provided on the surfaces of the housing 11 on two opposite sides, the conductive part 22 can extend out of the active substance-coated part 21 proximal to the first post terminal 12 on each side, and the conductive part 22 is connected to the first post terminal 12 on the adjacent side in a fitting manner, such that the problem that the tab part 221 is pulled by the first post terminal 12 on the same side, resulting in breaking of the connection between the tab part 221 and the active substance-coated part 21, thereby improving the reliability of the battery cell 10. It is worth noting that the first post terminals 12 on two sides may be the same or different, and the connection modes between the first post terminals 12 on two sides and the conductive part 22 may be the same or different, which are not limited herein.

Certainly, in other embodiments of the present application, the first post terminal 12 may also be provided on a surface on a side of the largest area of the housing 11. For another example, in some optional embodiments of the present application, the first post terminal 12 may be located on the top surface of the housing 11. For another example, in some optional embodiments of the present application, the first post terminal 12 may be located on the bottom surface of the housing 11, and the like. When the first post terminal 12 is located on the bottom surface of the housing 11, the accommodating part 121 may be used to accommodate the electrolytic solution, thereby increasing the cycle life of the battery cell 10. In addition, when the first post terminal 12 is located on the bottom surface of the housing 11 and the support 3 is located at the bottom of the active substance-coated part 21, the contact area between the support 3 and the active substance-coated part 21 can be increased, thereby mitigating the stress concentration problem and saving other supporting structural members.

Referring to FIG. 43, in some embodiments of the present application, a pressure relief part 16 is provided on the housing 11. The specific structure of the pressure relief part 16 is not limited. For example, the pressure relief part may be an explosion-proof valve or a weak part, which can be used to relieve pressure when the pressure in the battery cell 10 is high, so as to improve the reliability of the battery cell 10.

Optionally, the pressure relief part 16 and the first post terminal 12 may be located on a surface of the housing 11 on the same side. As such, processing and assembly can be facilitated. Optionally, the pressure relief part 16 and the first post terminal 12 may also be provided on surfaces on two opposite sides of the housing 11. As such, the space can be saved, the volume of the first post terminal 12 can be increased, and the adverse effects on the first post terminal 12 when the pressure relief part 16 relieves pressure can be reduced.

Referring to FIGs. 48 and 53 again, in the embodiments of the present application, the pressure relief part 16 may also be provided on the housing cover 112 as required. Since the housing cover 112 does not need to assume the function of mounting the first post terminal 12, and the connection position of the housing cover 112 and the housing 11 is less affected by vibration during the charging and discharging processes of the battery cell 10 and is unlikely to crack, the thickness of the housing cover 112 is set to be relatively small, which is more convenient for processing and manufacture of the pressure relief part 16. Illustratively, the pressure relief part 16 can be formed directly on the housing cover 112 in an integrated engraving manner, so as to fully improve the manufacturability of the battery cell 10. It is worth noting that in the embodiments, the first post terminal 12 may be provided on the housing body 111 or the housing cover 112, which is not limited herein. For example, the pressure relief part 16 may be integrally formed with the housing cover 112, thereby facilitating processing, simplifying assembly, improving production efficiency, and reducing costs.

Referring to FIGs. 3-5, 18, and 23-24 again, the battery cell 10 according to a specific embodiment of the present application is described.

Referring to FIGs. 3-5, the battery cell 10 is in the shape of a rectangular parallelepiped, and the height direction of the battery cell 10 is a first direction Z, the length direction of the battery cell 10 is a second direction X, and the thickness direction of the battery cell 10 is a third direction Y. The battery cell 10 includes a housing 11. The housing 11 includes a housing body 111 and a housing cover 112. The housing body 111 is of a square annular structure, one end of the housing body 111 in the first direction Z is open, and the other end in the first direction Z is closed. The housing cover 112 lids an open position of the housing body 111.

Referring to FIGs. 3-5, the closed end of the housing body 111 in the first direction Z is provided with two post terminals. The two post terminals are spaced apart in the second direction X to be a positive electrode post terminal and a negative electrode post terminal, respectively. The two post terminals are both first post terminals 12 provided with an accommodating part 121, and the accommodating part 121 includes a second accommodating groove 12120. Specifically, the first post terminal 12 includes a second end wall 12121 and a second side wall 12123, the second end wall 12121 is located on a side of the second side wall 12123 proximal to the housing cover 112, and the second end wall 12121 and the second side wall 12123 define, in an enclosing manner, a second accommodating groove 12120. A surface of the first post terminal 12 on a side distal to the housing cover 112 is a post terminal outer end surface 123, the opening of the second accommodating groove 12120 is formed on the post terminal outer end surface 123, a first perforation 12130 is formed on the second end wall 12121, and the first perforation 12130 is located at a position of the second end wall 12121 proximal to the second side wall 12123.

Referring to FIGs. 5 and 18, the battery cell 10 further includes a battery cell assembly 2. The battery cell assembly 2 includes an active substance-coated part 21 and a tab part 221. The active substance-coated part 21 is accommodated in the housing 11, and the tab part 221 extends through the first perforation 12130 into the second accommodating groove 12120 and is welded to the second end wall 12121, such that the active substance-coated part 21 is electrically connected to the first post terminal 12 through the tab part 221.

Referring to FIGs. 18, 23 and 24, a first cover plate 13 is embedded in an opening of the second accommodating groove 12120, such that after the welding of the tab part 221 to the second end wall 12121 is completed, the opening of the second accommodating groove 12120 is closed by the fit between the first cover plate 13 and the first post terminal 12. The first cover plate 13 is welded to the first post terminal 12 to form an electrical connection. Thereafter, when the battery cells 10 are electrically connected to each other by using a busbar component, the busbar component may be welded to the first cover plate 13 to achieve an electrical connection to the first post terminal 12.

In the above technical solution, in one aspect, by providing the first post terminal 12 with the second accommodating groove 12120, the weight of the first post terminal 12 can be reduced to a certain extent, so as to improve the gravimetric energy density of the battery cell 10 and the battery 100. In another aspect, since the opening of the second accommodating groove 12120 is formed on the post terminal outer end surface 123 and the post terminal outer end surface 123 is a surface of the first post terminal 12 on a side distal to the active substance-coated part 21, the second accommodating groove 12120 can be open in a direction away from the active substance-coated part 21. In this way, when at least a part of the tab part 221 is accommodated in the second accommodating groove 12120, the accommodation and arrangement of the tab part 221 can be easily realized through the opening of the second accommodating groove 12120, and the welding operation between the tab part 221 and the first post terminal 12 can be easily realized through the opening of the second accommodating groove 12120, thereby reducing the production difficulty of the battery cell 10 and improving the production efficiency of the battery cell 10.

Furthermore, since the welding of the tab part 221 to the first post terminal 12 can be realized from the outside of the housing 11, the first post terminal 12 can be provided on the closed end of the housing body 111. In this way, when the battery cell 10 is used in a vibration environment, the vibration at the connection between the housing body 111 and the housing cover 112 is relatively small, and the connection position of the housing body 111 and the housing cover 112 is unlikely to crack, which can improve the reliability of the battery cell 10 and help reduce the wall thickness of the housing body 111, thereby reducing costs and weight, and facilitating miniaturization of the battery cell 10.

Meanwhile, since the second accommodating groove 12120 can be in communication with the interior of the housing 11 through the first perforation 12130, the second accommodating groove 12120 can also serve as a buffering and temporary storage structure for the electrolytic solution, such that a larger number of electrolytic solution can be accommodated in the housing 11. As the electrolytic solution will be consumed during the charging and discharging processes of the battery cell 10, a greater amount of electrolytic solution can prolong the service life of the battery cell 10. It is also due to the fact that the second accommodating groove 12120 can be in communication with the interior of the housing 11 through the first perforation 12130, that the second accommodating groove 12120 can also serve as an accommodating and buffering structure for gas generated inside the battery cell assembly 2, reducing the expansion of the battery cell 10 and improving the reliability and stability of the battery cell 10.

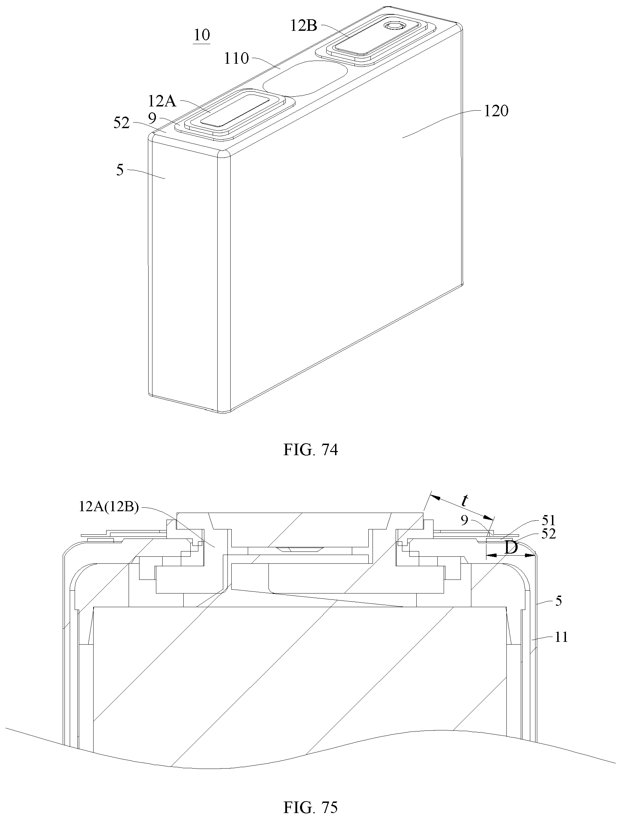

In some embodiments, referring to FIGs. 74 and 75, the battery cell 10 further includes an outer insulating member 5. The outer insulating member 5 is wrapped outside the housing 11. In this solution, the outer insulating member 5 plays an insulating role and is configured to separate the housing 11 from external components. For example, the outer insulating member 5 is a blue film.

In some embodiments, referring to FIG. 74, the housing 111 is provided with a first wall 110, a mounting hole 113 is formed on the first wall 110, the post terminal body 1201 is provided in the mounting hole 113, the battery cell 10 further includes a patch 9 covering an outer side of the first wall 110, the outer insulating member 5 includes an outer insulating film 52, the outer insulating film 52 is an integrated film, the outer insulating film 52 is provided with a connecting part 51, and the connecting part 51 extends to the an outer side of the first wall 110 and is connected to the patch 9.

In the above technical solution, the connecting part 51 can be stacked with the patch 9 in the axial direction of the mounting hole 113 to facilitate the connection between the connecting part 51 and the patch 9. At this time, the outer insulating film 52 and the patch 9 can at least separate the first post terminal 12 and the housing 11 on the first wall 110, so as to improve the insulation reliability between the first post terminal 12 and the housing 11, thereby improving the reliability of the battery cell 10. For example, in the examples shown in FIGs. 74 and 75, the connecting part 51 can extend around the outer periphery of the first wall 110 to form an annular shape, such that the outer insulating member 5 is wrapped outside all walls of the housing 11 except the first wall 110. The connecting part 51 is provided between the patch 9 and the first wall 110, such that the patch 9 plays a certain protective role in the connection between the connecting part 51 and the patch 9.

Optionally, the outer insulating member 5 is connected to the housing 11 in a bonding manner, and the patch 6 is connected to the first wall 11a in a bonding manner.

In some embodiments, the first post terminal 12 is of a solid structure, and a second welding part 72 is formed on a part of the first post terminal 12 located outside the housing 11. In this way, the structure of the first post terminal 12 is simple and easy to process.

In some embodiments, a minimum distance between an edge of the outer insulating film 52 and the first post terminal 12 is greater than or equal to 3 mm. As such, a creepage distance between the first post terminal 12 and the housing 11 may be greater than or equal to 3 mm, which is conducive to improving the insulation and voltage resistance performance between the first post terminal 12 and the housing 11. For example, a minimum distance t between the connecting part 51 and the post terminal 12 may be 3 mm, 4 mm, 4.7 mm, 5 mm, 5.2 mm, or the like.

In some embodiments, as shown in FIGs. 56-60 and 66, taking the plane where the cross-section of the mounting hole 113 is located as a projection plane, in a direction perpendicular to the projection plane, a projection area of the first welding part 71 on the projection plane is greater than or equal to 0.1% of a projection area of the first wall 110 on the projection plane.

In the above technical solution, the cross-section of the mounting hole 113 is perpendicular to the axial direction of the mounting hole 113, and the projection direction in the above conditions is parallel to the axial direction of the mounting hole 113. As such, the projection area of the first welding part 71 on the projection plane can be understood as a projection area of the connection region between the conductive part 22 and the post terminal body 1201 on the projection plane, and thus the projection area of the first welding part 71 on the projection plane can reflect the area of the connection region between the conductive part 22 and the post terminal body 1201. If the projection area of the first welding part 71 on the projection plane meets the above conditions, the equivalent resistance between the conductive part 22 and the post terminal body 1201 can be reduced to a certain extent, the current passage area of the first post terminal 12 can be increased, and the current passage capacity of the first post terminal 12 can be increased, which is conducive to increasing the charging speed of the battery cell 10 and the fast charging performance of the battery cell 10, and also conducive to increasing the thermal diffusion capacity of the first post terminal 12 to a certain extent.

In the above technical solution, by setting the projection area of the first welding part 71 between the conductive part 22 and the post terminal body 1201 on the projection plane to be greater than or equal to 0.1% of the projection area of the first wall 110 on the projection plane, the effective current passage area between the conductive part 22 and the post terminal body 1201 is greater than or equal to 0.1% of the projection area of the first wall 110 on the projection plane, so as to increase the effective current passage area of the conductive part 22 and the post terminal body 1201, increase the current passage area of the first post terminal 12, and improve the current passage capacity of the first post terminal 12, which is conducive to increasing the charging speed of the battery cell 10, and also conducive to increasing the thermal diffusion capacity of the first post terminal 12 to a certain extent and reducing the current passage temperature of the first post terminal 12, and thus helping to reduce the risk of loss of control of the battery cell 10.

In some embodiments, in a direction perpendicular to the projection plane, a projection area of the first welding part 71 on the projection plane is greater than or equal to 0.15% of a projection area of the first wall 110 on the projection plane.

In the above technical solution, by setting the orthographic projection area of the first welding part 71 on the projection plane to be greater than or equal to 0.15% of the orthographic projection area of the first wall 110 on the projection plane, the effective current passage area between the conductive part 22 and the post terminal body 1201 is further increase, which is conducive to improving the fast charging performance of the battery cell 10.

In some embodiments, a projection area of the first welding part 71 on the projection plane is greater than or equal to 5 mm². For example, a projection area of the first welding part 71 on the projection plane may be 5 mm², 6 mm², 8mm², 9 mm², 10 mm², or the like.

In the above technical solution, by setting the projection area of the first welding part 71 on the projection plane to be greater than or equal to 5 mm², the current passage capacity and thermal diffusion capacity of the first post terminal 12 are effectively improved.

For example, in the example shown in FIG. 59, the projection of the first welding part 71 on the projection plane extends into a long strip shape (the corresponding weld seam is a spiral long strip shape). Taking the projection of the first welding part 71 on the projection plane extending along a straight line as an example, the length of the projection of the first welding part 71 on the projection plane is greater than or equal to 10 mm, and the width of the projection of the first welding part 71 on the projection plane is greater than or equal to 5 mm; certainly, the projection of the first welding part 71 on the projection plane may extend along a curve (including but not limited to a smooth curve or a broken line), for example, the projection of the first welding part 71 on the projection plane extends into a closed ring (such as a circular ring and a polygonal ring). In addition, the shape of the projection of the first welding part 71 on the projection plane may be a solid circle.

Further, a projection area of the first welding part 71 on the projection plane is greater than or equal to 7 mm². For example, a projection area of the first welding part 71 on the projection plane may be 7 mm², 7.8 mm², 9.5 mm², 11 mm², or the like.

Illustratively, taking the case where the shape of the projection of the first welding part 71 on the projection plane is a solid circle as an example, the diameter of the circle corresponding to the projection of the first welding part 71 on the projection plane is greater than or equal to 3 mm.

In some embodiments, in a direction perpendicular to the projection plane, a part of the conductive part 22 overlapping with the post terminal body 1201 is a weldable region of the conductive part 22; that is, the weldable region of the conductive part 22 is stacked with the post terminal body 1201 in the direction perpendicular to the projection plane, or in other words, in the direction perpendicular to the projection plane, the projection of the weldable region of the conductive part 22 on the projection plane overlaps with at least a part of the projection of the post terminal body 1201 on the projection plane. As such, the weldable region of the conductive part 22 can be understood as a region provided by the conductive part 22 that can be welded to the post terminal body 1201, and therefore the area of the weldable region must be greater than or equal to the orthographic projection area of the first welding part 71 on the projection plane.

In the direction perpendicular to the projection plane, the projection area of the first welding part 71 on the projection plane is greater than or equal to 20% of the area of the weldable region of the conductive part 22. As such, the projection area of the first welding part 71 on the projection plane accounts for an appropriate proportion, so as to facilitate the welding operation between the conductive part 22 and the post terminal body 1201 under the premise of appropriately increasing the current passage capacity and thermal diffusion capacity of the first post terminal 12.

For example, the orthographic projection area of the first welding part 71 on the projection plane is 20%, 25%, 35%, 40%, 50%, 60%, or the like of the area of the weldable region of the conductive part 22.

In some embodiments, in a direction perpendicular to the projection plane, a projection area of the first welding part 71 on the projection plane is greater than or equal to 30% of an area of a weldable region of the conductive part 22.

In the above technical solution, by setting the orthographic projection area of the first welding part 71 on the projection plane to be greater than or equal to 30% of the area of the weldable region of the conductive part 22, it is conducive to further taking into account the current passage capacity of the first post terminal 12 and the convenience of the welding operation. For example, the orthographic projection area of the second welding part 7 on the projection plane is 30%, 45%, 55%, 65%, 70%, or the like of the area of the weldable region of the guiding part 22.

In some embodiments, taking the cross-section of the mounting hole 113 as a projection plane, in a direction perpendicular to the projection plane, a part of the second gathering part 2213 overlapping with the first post terminal 12 is a weldable region of the tab part 221, and the weldable region of the tab part 221 is stacked with the first post terminal 12 in the direction perpendicular to the projection plane, or in other words, in the direction perpendicular to the projection plane, the orthographic projection of the weldable region of the tab part 221 on the projection plane overlaps with at least a part of the orthographic projection of the first post terminal 12 on the projection plane. As such, the weldable region of the tab part 221 can be understood as a region provided by the tab part 221 that can be welded to the first post terminal 12, and therefore the area of the weldable region of the tab part 221 must be greater than or equal to the orthographic projection area of the first welding part 71 on the projection plane.

The area of the weldable region of the tab part 221 is greater than or equal to 40% of the total area of the tab part 221, such that the tab part 221 can provide a sufficient weldable region, so as to lay a foundation for improving the current passage capacity and thermal diffusion capacity of the first post terminal 12. For example, the area of the weldable region of the tab part 221 is 40%, 45%, 50%, 65%, 70%, or the like of the total area of the tab part 221.

In some embodiments, the area of the weldable region of the tab part 221 is greater than or equal to 60% of the total area of the tab part 221. In the above technical solution, by setting the area of the weldable region of the tab part 221 to be greater than or equal to 60% of the total area of the tab part 221, the tab part 221 can provide a sufficient weldable region, so as to lay a foundation for improving the current passage capacity and thermal diffusion capacity of the first post terminal 12. For example, the area of the weldable region of the tab part 221 is 60%, 68%, 72%, 80% or the like of the total area of the tab part 221.

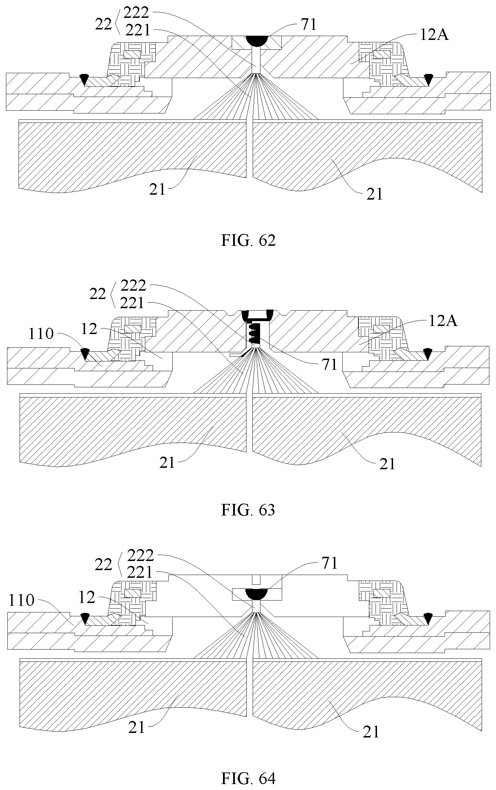

In some embodiments, as shown in FIGs. 62-66, the conductive part 22 includes a tab part 221 and an adapting piece 222. The connection and arrangement of the adapting piece 222 refer to the corresponding content described above. In a direction perpendicular to the projection plane, a part of the adapting piece 222 overlapping with the first post terminal 12 is a weldable region of the adapting piece 222, and the weldable region of the adapting piece 222 is overlapped with the first post terminal 12 in the direction perpendicular to the projection plane, or in other words, in the direction perpendicular to the projection plane, the orthographic projection of the weldable region of the adapting piece 222 on the projection plane overlaps with at least a part of the orthographic projection of the first post terminal 12 on the projection plane. As such, the weldable region of the adapting piece 222 can be immediately a region provided by the adapting piece 222 that can be welded to the first post terminal 12, and therefore the area of the weldable region of the adapting piece 222 must be greater than or equal to the orthographic projection area of the first welding part 71 on the projection plane.

The area of the weldable region of the adapting piece 222 is greater than or equal to 1/12 of the area of the adapting piece 222, such that the adapting piece 222 can provide a sufficient weldable region, so as to lay a foundation for improving the current passage capacity and thermal diffusion capacity of the first post terminal 12.

For example, the area of the weldable region of the adapting piece 222 is 1/11, 1/10, 1/9, 1/8, or the like of the total area of the adapting piece 222.

In some embodiments, the tab part 221 is indirectly electrically connected to the first post terminal 12 through the adapting piece 222. As such, the weldable region of the conductive part 22 is the weldable region of the adapting piece 222, and in the direction perpendicular to the projection plane, the projection area of the first welding part 71 on the projection plane is greater than or equal to 20% of the area of the weldable region of the adapting piece 222.

In some embodiments, the area of the weldable region of the adapting piece 222 is greater than or equal to 1/10 of the area of the adapting piece 222.

In the above technical solution, by setting the area of the weldable region of the adapting piece 222 to be greater than or equal to 1/10 of the area of the adapting piece 222, the adapting piece 222 provides a sufficient weldable region, so as to lay a foundation for improving the current passage capacity and thermal diffusion capacity of the first post terminal 12. For example, the area of the weldable region of the adapting piece 222 is 1/10, 1/7, 1/6, 1/5, or the like of the total area of the adapting piece 222.

In some embodiments, as shown in FIG. 56, all the first post terminals 12 of the battery cell 10 are provided on the same wall of the housing 11. As such, all the first post terminals 12 are provided on the first wall 110, such that the welding of the active substance-coated part 21 to the corresponding first post terminal 12 can be performed on the same side of the housing 11, so as to improve the operational convenience.

It can be understood that when all the first post terminals 12 of the battery cell 10 are provided on the first wall 110, the first wall 110 may be a wall with the largest area of the housing 11, or the area of the first wall 110 may be smaller than the area of the wall with the largest area of the housing 11.

In some embodiments, as shown in FIG. 56, the housing 11 includes a housing body 111 and a housing cover 112. An end of the housing body 111 is open, the housing cover 112 is fitted to the open end of the housing body 111, and the post terminals 12 are all provided at an end of the housing body 111 distal to the housing cover 112. The end of the housing body 111 distal to the housing cover 112 can be understood as an end of the housing body 111 opposite to the housing cover 112. When the battery cell 10 is assembled, the battery cell assembly 2 will enter the housing body 111 from the open end of the housing body 111. At this time, the conductive part 22 can contact the post terminal 12 and be mounted in the direction of the battery cell assembly 2 entering the housing. In this process, the mounting of the conductive part 22 and the post terminal 12 is relatively easy, which can improve the assembly efficiency.

Optionally, the housing cover 112 may be formed as a flat plate structure, or may be formed as a cover body structure that is open toward one end of the housing body 111.

In some embodiments, all the first post terminals 12 of the battery cell 10 are provided on different walls of the housing 11, respectively, so as to facilitate flexible arrangement of the battery cells 10 and other electrical connection components.

Specifically, as shown in FIG. 56, the housing 11 is provided with a second wall 120. The second wall 120 can be provided opposite to and spaced from the first wall 110, or provided at an included angle, and a second mounting hole 114 is formed on the second wall 120. In this case, the plurality of first post terminals 12 can include a first polarity post terminal 12A and a second polarity post terminal 12B having different polarities. As such, the mounting hole 113 is provided with the first polarity post terminal 12A, and the second mounting hole 114 is provided with a second polarity post terminal 12B having a polarity opposite to that of the first polarity post terminal 12A. Similarly, one of the first polarity post terminal 12A and the second polarity post terminal 12B is a positive electrode post terminal, and the other is a negative electrode post terminal. Moreover, the second wall 120 can be adjacent to and not parallel to the first wall 110, or the second wall 120 is not adjacent to the first wall 110, and at this time, the second wall 120 can be parallel to or not parallel to the first wall 110. The first polarity post terminal 12A and the second polarity post terminal 12B are provided on different walls of the housing 11, respectively.

More specifically, all the first post terminals 12 of the battery cell 10 are provided, respectively, on two walls of the housing 11 that are provided opposite to each other, or all the first post terminals 12 of the battery cell 10 are provided, respectively, on two walls of the housing 11 that are provided adjacent to each other. Certainly, all the first post terminals 12 of the battery cell 10 can also be provided on three or more walls of the housing 11, respectively.

At this time, the battery cell assembly 2 includes one active substance-coated part 21 or a plurality of electrically connected active substance-coated parts 21. The battery cell assembly 2 further includes two conductive parts 22 having opposite polarities. One of the two conductive parts 22 and the first polarity post terminal 12A, and the other of the two conductive parts 22 and the second polarity post terminal 12B are electrically connected through a first welding part 71. It can be seen that when the battery cell assembly 2 includes a plurality of active substance-coated parts 21, the plurality of active substance-coated parts 21 can be connected in parallel between the first polarity post terminal 12A on the first wall 110 and the second polarity post terminal 12B on the second wall 120, so as to increase the capacity of the battery cell 10.

Taking the cross-section of the second mounting hole 114 as a projection plane, in a direction perpendicular to the projection plane, a projection area of the first welding part 71 corresponding to the second polarity post terminal 12B on the projection plane is greater than or equal to 0.03% of the projection area of the second wall 120 on the projection plane, so as to increase the current passage area and current passage capacity of the second polarity post terminal 12B on the second wall 120, which is conducive to increasing the charging speed of the battery cell 10, and also conducive to reducing the current passage temperature of the second polarity post terminal 12B, and thus helping to reduce the risk of loss of control of the battery cell 10.

Obviously, regardless of the number of active substance-coated parts 21 of the battery cell assembly 2, the two conductive parts 22 of each battery cell assembly 2 are electrically connected to the corresponding active substance-coated part 21, and one of the conductive parts 22 of each battery cell assembly 2 is electrically connected to the first polarity post terminal 12A on the first wall 110 through the first welding part 71, and the other conductive part 22 is electrically connected to the second polarity post terminal 12B on the second wall 120 through another first welding part 71.

Therefore, in the above technical solution of the present application, the arrangement of the first polarity post terminal 12A and the second polarity post terminal 12B is relatively flexible, which enables the battery cell 10 to meet different layout requirements.

In some embodiments, as shown in FIGs. 90-73, the mounting hole 113 includes a plurality of sub-holes 1131 spaced from each other. The first polarity post terminal 12A includes a plurality of first post terminals 12. The plurality of first post terminals 12 are provided at the plurality of sub-holes 1131 in a one-to-one correspondence. The battery cell assembly 2 includes a plurality of active substance-coated parts 21, and the conductive part 22 includes a plurality of conductive sub-parts connected to the plurality of active substance-coated parts 21 in a one-to-one correspondence. Each of the conductive sub-parts is electrically connected to one first post terminal 12 through one welding sub-part 71.

Taking the plane where the cross-section of the mounting hole 113 is located as a projection plane, in a direction perpendicular to the projection plane, the sum of projection areas of the plurality of welding sub-parts 71 on the projection plane is greater than or equal to 0.1% of a projection area of the first wall 110 on the projection plane, so as to achieve an increase in the current passage capacity of the first polarity post terminal 12A.

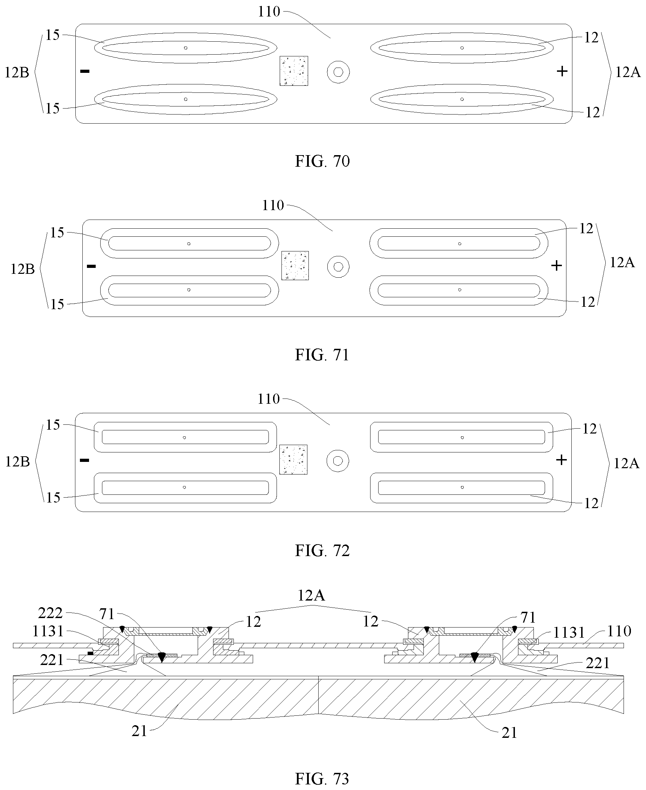

At this time, the arrangement of the second polarity post terminal 12B of the battery cell 10 can be set according to actual requirements. For example, in the example shown in FIG. 71, a plurality of first post terminals 12 are provided in a plurality of sub-holes 1131 of the mounting hole 113 in a one-to-one correspondence. A second mounting hole 114 is also formed on the housing 11, and the second mounting hole 114 also includes a plurality of sub-holes 1131 that are spaced from each other. The second polarity post terminal 12B includes a plurality of second post terminals 15. The plurality of second post terminals 15 are provided in the plurality of sub-holes 1131 of the second mounting hole 114 in a one-to-one correspondence. At this time, the second polarity post terminal 12B and the first polarity post terminal 12A can be provided on the same wall or different walls of the housing 11.

Certainly, in other embodiments of the present application, the mounting hole 113 includes one sub-hole 1131, the first polarity post terminal 12A includes one first post terminal 12. The second mounting hole 114 also includes one sub-hole 1131, and the second polarity post terminal 12B includes one second post terminal 15. It can be understood that, for the battery cell 10, the number of the first post terminals 12 and the number of the second post terminals 15 may be equal or different.

In some embodiments, all the post terminals are provided on two opposite walls of the housing 11, respectively, and the post terminals are provided on the first wall 110 and the wall of the housing 11 opposite to the first wall 110, respectively, so as to realize flexible arrangement of the post terminals.

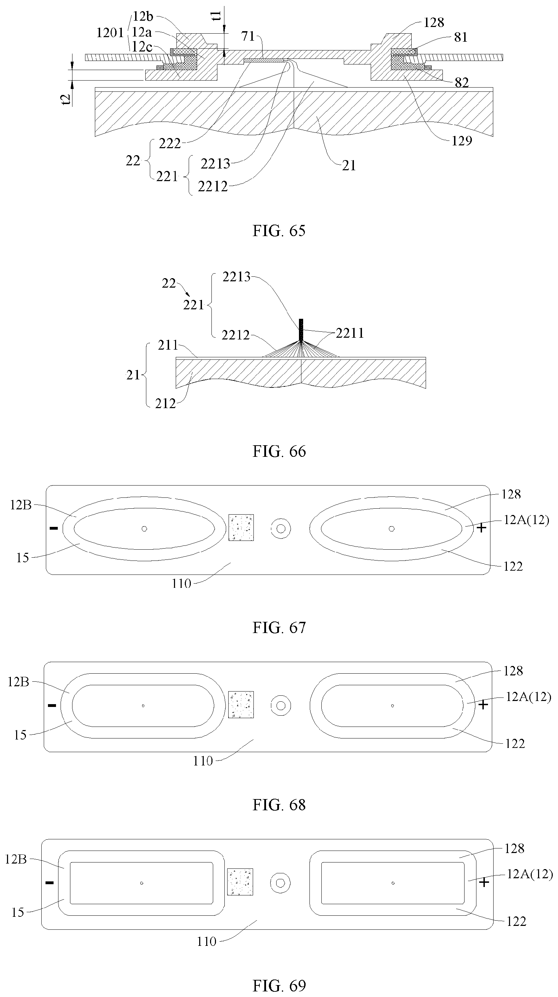

In some embodiments, as shown in FIGs. 67-72, the outer contour of the cross-section of the first polarity post terminal 12A is rectangular, track-shaped, or elliptical. The cross-section of the first polarity post terminal 12A can be perpendicular to the axial direction of the mounting hole 113, so as to facilitate the flexible arrangement of the outer contour of the first polarity post terminal 12A. Meanwhile, the length of the cross-section of the first polarity post terminal 12A is greater than the width thereof, which is conducive to achieving a good match between the first polarity post terminal 12A and the first wall 110 in the length direction of the cross-section of the firs polarity post terminal 12A and the width direction of the cross-section of the first polarity post terminal 12A. For example, the length of the first wall 110 in the length direction of the cross-section of the first polarity post terminal 12A is greater than the width of the first wall 110 in the width direction of the cross-section of the first polarity post terminal 12A, such that the cross-sectional area of the first polarity post terminal 12A that can be provided on the first wall 110 can be increased to a certain extent, which is conducive to increasing the cross-sectional area of the first polarity post terminal 12A within the limited arrangement region on the first wall 110, and thus increasing the current passage area of the first polarity post terminal 12A, increasing the current passage capacity of the first polarity post terminal 12A, and increasing the thermal diffusion capacity of the first polarity post terminal 12A, and further conducive to increasing the charging speed of the battery cell 10.

Meanwhile, the outer contour of the cross-section of the second polarity post terminal 12B having an opposite polarity to the first polarity post terminal 12A is rectangular, track-shaped, or elliptical, which is also conducive to achieving a good match between the second polarity post terminal 12B and the corresponding wall of the housing 11 (such as the first wall 110 or the second wall 120) in the length direction of the cross-section of the second polarity post terminal 12B and the width direction of the cross-section of the second polarity post terminal 12B, so as to make full use of the effective arrangement region of the corresponding wall of the housing 11 to increase the cross-sectional area of the second polarity post terminal 12B, which is conducive to increasing the current passage capacity of the second polarity post terminal 12B, and thus increasing the charging speed of the battery cell 10.

The rectangle in the above embodiments of the present application can be understood in a broad sense, and the four corners of the rectangle can be in the form of right-angled transitions, rounded transitions, or the like. The track shape can be understood as including two parallel line segments and two semicircles connecting the two line segments, for example, a running track shape. It can be understood that the outer contour of the cross-section of the second polarity post terminal 12B of the battery cell 10 can be the same as or different from the shape of outer contour of the cross-section of the first polarity post terminal 12A, and the first polarity post terminal 12A and the second polarity post terminal 12B can be located on the same wall of the housing 11, or on different walls of the housing 11, respectively.

In some embodiments, as shown in FIGs. 56 and 67-72, on the cross-section of the first polarity post terminal 12A, the size of the first polarity post terminal 12Ain a first direction X is greater than or equal to three times the size of the first polarity post terminal 12A in a second direction Y, and the first direction X, the second direction Y and the axial direction of the mounting hole 113 are perpendicular to each other, which is conducive to achieving a good match between the first polarity post terminal 12A and the first wall 110 in the first direction X and the second direction Y, such that the first polarity post terminal 12A makes full use of the arrangement region of the first wall 110 to increase the cross-sectional area of the first polarity post terminal 12A within the limited arrangement region on the first wall 110, so as to facilitate the first polarity post terminal 12A to be configured as a "super large post terminal structure", which is conducive to increasing the current passage area, current passage capacity and thermal diffusion capacity of the first polarity post terminal 12A.

As shown in FIGs. 56 and 67-72, on the cross-section of the second polarity post terminal 12B, the size of the second polarity post terminal 12B in the first direction X is greater than or equal to three times the size of the second polarity post terminal 12B in the second direction Y, and the polarity of the second polarity post terminal 12B is opposite to the polarity of the first polarity post terminal 12A. At this time, the second polarity post terminal 12B and the first polarity post terminal 12A can be located on the same wall of the housing 11, or the second polarity post terminal 12B and the first polarity post terminal 12A are located, respectively, on two walls of the housing 11 that are provided opposite to each other, which is conducive to achieving a good match between the second polarity post terminal 12B and the corresponding wall of the housing 11 in the first direction X and the second direction Y, such that the second polarity post terminal 12B makes full use of the arrangement region of the corresponding wall of the housing 11, which is conducive to increasing the current passage area, current passage capacity and thermal diffusion capacity of the second polarity post terminal 12B.

For example, the size of the first polarity post terminal 12A in the first direction X may be 3 times, 3.5 times, 4 times, or 4.2 times the size of the first polarity post terminal 12A in the second defense line, and the size of the second polarity post terminal 12B in the first direction X may be 3 times, 3.5 times, 3.7 times, or 4.2 times the size of the second polarity post terminal 12B in the second defense line.

Illustratively, the first direction X is the length direction of the cross-section of the first polarity post terminal 12A, and the second direction Y is the width direction of the cross-section of the first polarity post terminal 12A. At this time, the axial direction of the mounting hole 113 can be understood as the height direction of the first polarity post terminal 12A or the axial direction of the first polarity post terminal 12A.

Alternatively, on the cross-section of the second polarity post terminal 12B, the size of the second polarity post terminal 12B in the axial direction of the mounting hole 113 is greater than or equal to three times the size of the second polarity post terminal 12B in the second direction Y, and the polarity of the second polarity post terminal 12B is opposite to the polarity of the first polarity post terminal 12A. At this time, the second polarity post terminal 12B and the first polarity post terminal 12A can be located, respectively, on two walls of the housing 11 that are perpendicular to each other, which is also conducive to achieving a good match between the second polarity post terminal 12B and the corresponding wall of the housing 11 in the axial direction of the mounting hole 113 and the second direction Y, such that the second polarity post terminal 12B makes full use of the arrangement region of the corresponding wall of the housing 11, which is conducive to increasing the current passage area, current passage capacity and thermal diffusion capacity of the second polarity post terminal 12B. The axial direction of the mounting hole 113 may be the length direction of the wall where the second polarity post terminal 12B is located.

In some embodiments, as shown in FIG. 56, the size of the first wall 110 in the first direction X is greater than the size of the first wall 110 in the second direction Y. As such, the length direction of the first wall 110 can be consistent with the length direction of the cross-section of the first polarity post terminal 12A, and the width direction of the first wall 110 can be consistent with the width direction of the cross-section of the first polarity post terminal 12A, so as to further achieve a good match between the first wall 110 and the first polarity post terminal 12A in the first direction X and the second direction Y, such that the first polarity post terminal 12A further makes full use of the arrangement region of the first wall 110.

Illustratively, a first polarity post terminal 12A and a second polarity post terminal 12B are provided on the first wall 110, and the first polarity post terminal 12A and the second polarity post terminal 12B can be spaced to each other in the first direction X, such that the arrangement direction of the first polarity post terminal 12A and the second polarity post terminal 12B matches the length direction of the first wall 110, so as to achieve a suitable spacing between the first polarity post terminal 12A and the second polarity post terminal 12B. Certainly, the second polarity post terminal 12B and the first polarity post terminal 12A can also be provided on different walls of the housing 11, respectively. Taking the case where the housing 11 is provided with a second wall 120, and the second wall 120 is provided with a second polarity post terminal 12B as an example, if the second wall 120 is provided opposite to and spaced from the first wall 110, the size of the second wall 120 in the first direction X can be greater than the size of the second wall 120 in the second direction Y, such that the second polarity post terminal 12B makes full use of the arrangement region provided by the second wall 120. If the second wall 120 is provided at an included angle to the first wall 110, the length direction of the cross-section of the second polarity post terminal 12B can be set to be consistent with the length direction of the second wall 120, and the width direction of the cross-section of the second polarity post terminal 12B can be set to be consistent with the width direction of the second wall 120, such that the second polarity post terminal 12B also makes full use of the arrangement region provided by the second wall 120.

In some embodiments, as shown in FIGs. 67-72, the first polarity post terminal 12A includes a first part 128 located outside the first wall 110, and the first part 128 is annular. In the first direction X, the inner ring length of the first part 128 is greater than or equal to 1/3 of the length of the first wall 110, and in the second direction Y, the inner ring width of the first part 128 is greater than or equal to 3/4 of the width of the first wall 110.

In the above technical solution, by setting the inner ring length of the first part 128 to be greater than or equal to 1/3 of the length of the first wall 110, and the inner ring width of the first part 128 to be greater than or equal to 3/4 of the width of the first wall 110, the first polarity post terminal 12A can provide a relatively large area for an electrical connection to the busbar component, so as to further increase the current passage capacity of the first polarity post terminal 12A.

Illustratively, the inner ring length of the first part 128 is greater than or equal to 50 mm, and the inner ring width of the first part 128 is greater than or equal to 30 mm.

In some embodiments, the first polarity post terminal 12A includes a second part 129 located on the inner side of the first wall 110. In the first direction X, the length of the second part 129 is greater than or equal to 1/3 of the length of the first wall 110, and in the second part Y, the width of the second part 129 is greater than or equal to 3/4 of the width of the first wall 110.

In the above technical solution, by setting the inner ring length of the second part 129 to be greater than or equal to 1/3 of the length of the first wall 110, and the inner ring width of the second part 129 to be greater than or equal to 3/4 of the width of the first wall 110, the first polarity post terminal 12A can provide a relatively large area for an electrical connection to the conductive part 22, so as to further increase the current passage capacity of the first polarity post terminal 12A.

Illustratively, the length of the second part 129 is greater than or equal to 50 mm, and the width of the second part 129 is greater than or equal to 30 mm.

As shown in FIG. 2, the embodiments of the present application provide a battery 100, including the battery cell 10 described above.

As shown in FIGs. 58 and 60, in some embodiments, the battery 100 includes a battery cell 10 and a busbar component 30.

The number of battery cells 10 is plural. The busbar component 30 is electrically connected to the first post terminals 12 of at least two battery cells 10, the first post terminals 12 of the same polarity of each of the battery cells 10 is electrically connected to the busbar component 30 through a second welding part 72, and the second welding part 72 is formed on the first cover plate 13. The housing 11 includes a first wall 110, a mounting hole 113 is formed on the first wall 110, and the post terminal body 1201 is provided in the mounting hole 113; on the cross-section of the mounting hole 113, an orthographic projection area of the second welding part 72 is greater than or equal to 0.2% of an orthographic projection area of the first wall 110.

The definition of the cross-section of the mounting hole 113 refers to the corresponding content described above, and can be understood as an orthographic projection area of a connection region between the busbar component 30 and the corresponding first post terminal 12 on the cross-section of the mounting hole 113. As such, the orthographic projection area of the second welding part 72 on the cross-section of the mounting hole 113 can reflect the area of the connection region between the busbar component 30 and the corresponding first post terminal 12. If the orthographic projection area of the second welding part 72 on the cross-section of the mounting hole 113 meets the above conditions, then the equivalent resistance between the busbar component 30 and the first post terminal 12 can be reduced to a certain extent, the current passage area of the first post terminal 12 can be increased, and the current passage capacity of the first post terminal 12 can be increased, which is conducive to increasing the charging speed of the battery cell 10 and the fast charging performance of the battery cell 10, and also conducive to increasing the thermal diffusion capacity of the first post terminal 12 to a certain extent.

In the above technical solution, by setting the orthographic projection area of the second welding part 72 between the busbar component 30 and the corresponding first post terminal 12 on the cross-section of the mounting hole 113 to be greater than or equal to 0.2% of the orthographic projection area of the first wall 110, the effective current passage area between the busbar component 30 and the corresponding first post terminal 12 is greater than or equal to 0.2% of the orthographic projection area of the first wall 110, so as to increase the effective current passage area of the busbar component 30 and the first post terminal 12, increase the current passage area of the first post terminal 12, and increase the current passage capacity of the first post terminal 12, which is conducive to increasing the charging speed of the battery cell 10, and also conducive to increasing the thermal diffusion capacity of the first post terminal 12 to a certain extent, reducing the current passage temperature of the first post terminal 12, and thus helping to reduce the risk of loss of control of the battery cell 10.

It can be understood that a plurality of post terminals may be provided, including a first polarity post terminal 12A and a second polarity post terminal 12B. The second polarity post terminal 12B and the first polarity post terminal 12A have opposite polarities, and can be a positive electrode post terminal and a negative electrode post terminal, respectively.

Optionally, the busbar component 30 and the first post terminal 12 are laser welded to form the second welding part 72, but the present disclosure is not limited thereto.

In some embodiments, on the cross-section of the mounting hole 113, the orthographic projection area of the second welding part 72 is greater than or equal to 0.4% of the orthographic projection area of the first wall 110, so as to further increase the effective current passage area between the busbar component 30 and the first post terminal 12, which is conducive to increasing the fast charging performance of the battery cell 10.

In some embodiments, in a direction perpendicular to the cross-section of the mounting hole 113, a part of the busbar component 30 overlapping with the post terminal body 1201 of the same polarity is a weldable region of the busbar component 30, that is, the weldable region of the busbar component 30 is stacked with the post terminal body 1201 in the direction perpendicular to the projection plane, or in other words, in the direction perpendicular to the projection plane, the projection of the weldable region of the busbar component 30 on the cross-section of the mounting hole 113 overlaps with at least a part of the projection of the post terminal body 1201 on the cross-section of the mounting hole 113. As such, the weldable region of the busbar component 30 can be understood as a region provided by the busbar component 30 that can be welded to the post terminal body 1201, and therefore the area of the weldable region must be greater than or equal to the orthographic projection area of the second welding part 72 on the projection plane.

The orthographic projection area of the second welding part 72 on the cross-section of the mounting hole 113 is greater than or equal to 0.2 of an area of the weldable region of the busbar component 30. As such, the projection area of the second welding part 72 on the projection plane accounts for an appropriate proportion, so as to facilitate the welding operation between the busbar component 30 and the post terminal body 1201 under the premise of appropriately increasing the current passage capacity and thermal diffusion capacity of the post terminal body 1201.

For example, the orthographic projection area of the second welding part 72 on the cross-section of the mounting hole 113 is 0.2, 0.25, 0.35, 0.40, 0.50, 0.60, or the like, of the area of the weldable region of the busbar component 30.

In some embodiments, the orthographic projection area of the second welding part 72 on the cross-section of the mounting hole 113 is greater than or equal to 0.4 of an area of the weldable region of the busbar component 30.

In the above technical solution, by setting the orthographic projection area of the second welding part 72 on the cross-section of the mounting hole 113 to be greater than or equal to 0.4 of the area of the weldable region of the busbar component 30, it is conducive to further taking into account the current passage capacity of the post terminal 12 and the convenience of the welding operation.

For example, the orthographic projection area of the second welding part 72 on the cross-section of the mounting hole 113 is 0.4, 0.45, 0.55, 0.65, 0.70, or the like of the area of the weldable region of the busbar component 30.

In some embodiments, the orthographic projection of the second welding part 72 on the cross-section of the mounting hole 113 is in the shape of any one of a straight line, a curve, a circle, a polygon or a ring.

For example, referring to FIG. 58, the orthographic projection of the second welding part 72 on the cross-section of the mounting hole 113 may be a circular ring-shaped weld seam. The diameter of the circular ring-shaped weld seam is greater than or equal to 5 mm, and an effective weld width W is greater than or equal to 2 mm.

In some embodiments, the orthographic projection area of the second welding part 72 on the cross-section of the mounting hole 113 may be 10 mm²-20 mm². For example, the orthographic projection area of the second welding part 72 on the cross-section of the mounting hole 113 may be 10 mm², 12 mm², 15 mm², 17 mm², 19 mm², 20 mm², or the like.

In some embodiments, in a direction perpendicular to the cross-section of the mounting hole 113, a part of the busbar component 30 overlapping with the first post terminal 12 of the same polarity is a weldable region of the busbar component 30, that is, the weldable region of the busbar component 30 overlaps with the first post terminal 12 of the same polarity in the direction perpendicular to the cross-section of the mounting hole 113, or in other words, in the direction perpendicular to the cross-section of the mounting hole 113, the orthographic projection of the weldable region of the busbar component 30 on the cross-section of the mounting hole 113 overlaps with at least a part of the orthographic projection of the first post terminal 12 of the same polarity on the cross-section of the mounting hole 113. As such, the weldable region of the busbar component 30 can be understood as a region provided by the busbar component 30 that can be welded to the first post terminal 12, and therefore the area of the weldable region of the busbar component 30 must be greater than or equal to the orthographic projection area of the second welding part 72 on the cross-section of the mounting hole 113.

The area of the weldable region of the busbar component 30 is greater than or equal to 20% of the orthographic projection area of the busbar component 30 on the cross-section of the mounting hole 113. In this way, the busbar component 30 can provide a sufficient weldable region, so as to lay a foundation for improving the current passage capacity and thermal diffusion capacity of the first post terminal 12.

For example, the area of the weldable region of the busbar component 30 is 20%, 25%, 30%, 35%, 40%, or the like of the total area of the busbar component 30.

In some embodiments, the area of the weldable region of the busbar component 30 is less than or equal to 50% of the orthographic projection area of the busbar component 30 on the cross-section of the mounting hole 113. By setting the area of the weldable region of the busbar component 30 to be greater than or equal to 50% of the orthographic projection area of the busbar component 30 on the cross-section of the mounting hole 113, it is conducive to further taking into account the current passage capacity of the first post terminal 12 and the convenience of the welding operation.

In some embodiments, the area of the weldable region of the busbar component 30 is greater than or equal to 30% of the orthographic projection area of the busbar component 30 on the cross-section of the mounting hole 113. By setting the area of the weldable region of the busbar component 30 to be greater than or equal to 30% of the orthographic projection area of the busbar component 30 on the cross-section of the mounting hole 113, it is conducive to further taking into account the current passage capacity of the first post terminal 12 and the convenience of the welding operation.

As shown in FIG. 1, the embodiments of the present application provide an electrical apparatus 1000, including the battery 100 described above.

The battery 100 is configured to provide electrical energy to the electrical apparatus 1000. The electrical apparatus 1000 may be any one of the aforementioned devices or systems that apply the battery 100. It should be noted that the embodiments and features of the embodiments in the present application may be combined with each other without conflict.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A battery cell, comprising:
a housing assembly (1), comprising a housing (11) and a first post terminal (12), the first post terminal (12) comprising a post terminal body (1201) and a first cover plate (13), the post terminal body (1201) being mounted in the housing (11), and the first cover plate (13) being provided on the post terminal body (1201);
a battery cell assembly (2), comprising an active substance-coated part (21) and a conductive part (22) connected to the active substance-coated part (21), the active substance-coated part (21) being accommodated in the housing (11), and the conductive part (22) being connected to the post terminal body (1201) through a first welding part (71),
wherein the first welding part (71) is at least partially located on a side of the post terminal body (1201) away from the active substance-coated part (21), and the first cover plate (13) is configured to shield the first welding part (71).

2. The battery cell according to claim 1, wherein the post terminal body (1201) is provided with a first accommodating groove (12110), a surface of the first post terminal (12) on a side facing the active substance-coated part (21) is a post terminal inner end surface (122), an opening of the first accommodating groove (12110) is formed on the post terminal inner end surface (122), and the first accommodating groove (12110) is provided with a first end wall (12111) and a first side wall (12113); the first end wall (12111) is located on a side of the first side wall (12113) distal to the active substance-coated part (21), at least a part of the conductive part (22) is accommodated in the first accommodating groove (12110), the first welding part (71) is provided on the first end wall (12111), and the first cover plate (13) is fitted to the post terminal body (1201) and covers the first welding part (71).

3. The battery cell (10) according to claim 2, wherein the first end wall (12111) is provided with a first recess (12112), and at least a part of the first welding part (71) is located in the first recess (12112).

4. The battery cell (10) according to claim 2 or 3, wherein the first post terminal (12) is provided with a first groove (126), a surface of the first post terminal (12) on a side distal to the active substance-coated part (21) is a post terminal outer end surface (123), an opening of the first groove (126) is formed on the post terminal outer end surface (123), and the first cover plate covers the opening of the first groove.

5. The battery cell according to any one of claims 2-4, wherein the active substance-coated part (21) comprises a current collector (211) and an active substance layer (212) provided on the current collector (211), the conductive part (22) comprises a tab part (221) electrically connected to the current collector (211), the tab part (221) comprises a plurality of tab plates (2211), parts of the plurality of tab plates (2211) proximal to the current collector (211) converge to form a first gathering part (2212), parts of the plurality of tab plates (2211) distal to the current collector (211) converge and are connected to form a second gathering part (2213), the first gathering part (2212) connects the second gathering part (2213) and the active substance-coated part (21), at least a part of the second gathering part (2213) is accommodated in the first accommodating groove (12110),
and the second gathering part (2213) is connected to the first end wall (12111) through the first welding part (71).

6. The battery cell (10) according to any one of claims 2-4, wherein the active substance-coated part (21) comprises a current collector (211) and an active substance layer (212) provided on the current collector (211), the conductive part (22) comprises a tab part (221) and an adapting piece (222), the tab part (221) comprises a plurality of tab plates (2211), parts of the plurality of tab plates (2211) proximal to the current collector (211) converge to form a first gathering part (2212), parts of the plurality of tab plates (2211) distal to the current collector (211) converge and are connected to form a second gathering part (2213), the first gathering part (2212) connects the second gathering part (2213) and the active substance-coated part (21), the adapting piece (222) is connected to the second gathering part (2213), at least a part of the adapting piece (222) is accommodated in the first accommodating groove (12110),
and the adapting piece (222) is connected to the first end wall (12111) through the first welding part (71).

7. The battery cell (10) according to claim 5 or 6, wherein at least a part of the first gathering part (2212) is accommodated in the first accommodating groove (12110).

8. The battery cell (10) according to any one of claims 2-7, wherein the housing (11) is provided with a mounting hole (113), and the first post terminal (12) is mounted in the mounting hole (113); in an axial direction of the first post terminal (12), a depth H1 of the first accommodating groove (12110) is greater than or equal to a minimum distance H2 from the post terminal inner end surface (122) to the mounting hole (113).

9. The battery cell according to claim 1, wherein the post terminal body (1201) is provided with a second accommodating groove (12120), a surface of the post terminal body (1201) on a side distal to the active substance-coated part (21) is a post terminal outer end surface (123), an opening of the second accommodating groove (12120) is formed on the post terminal outer end surface (123), the second accommodating groove (12120) is provided with a second end wall (12121) proximal to the active substance-coated part (21),
the first welding part (71) is provided on the second end wall (12121), and the first cover plate (13) is fitted to the post terminal body (1201) and covers the opening of the second accommodating groove (12120).

10. The battery cell according to claim 9, wherein the conductive part (22) is located on a side of the second end wall (12121) facing the active substance-coated part (21).

11. The battery cell according to claim 9, wherein the second accommodating groove (12120) is in communication with the interior of the housing (11) through a first perforation (12130), the conductive part (22) is provided in the first perforation (12130) in a penetrating manner and is at least partially accommodated in the second accommodating groove (12120), and the conductive part (22) is at least partially provided on a side of the second end wall (12121) away from the active substance-coated part (21).

12. The battery cell according to claim 11, wherein the second accommodating groove (12120) is further provided with a second side wall (12123), the second side wall (12123) is located on a side of the second end wall (12121) distal to the active substance-coated part (21), and the second side wall (12123) and the second end wall (12121) define, in an enclosing manner, the second accommodating groove (12120); the first perforation (12130) is formed on the second end wall (12121),
the second end wall (12121) is provided with a second recess (12122), and at least a part of the first welding part (71) is located in the second recess (12122).

13. The battery cell (10) according to claim 11 or 12, wherein the active substance-coated part (21) comprises a current collector (211) and an active substance layer (212) provided on the current collector (211), the conductive part (22) comprises a tab part (221) electrically connected to the current collector (211), the tab part (221) comprises a plurality of tab plates (2211), parts of the plurality of tab plates (2211) proximal to the current collector (211) converge to form a first gathering part (2212), parts of the plurality of tab plates (2211) distal to the current collector (211) converge and are connected to form a second gathering part (2213), the first gathering part (2212) connects the second gathering part (2213) and the active substance-coated part (21), at least a part of the second gathering part (2213) is accommodated in the second accommodating groove (12120),
and the second gathering part (2212) is connected to the second end wall (12121) through the first welding part (71).

14. The battery cell (10) according to claim 11 or 12, wherein the active substance-coated part (21) comprises a current collector (211) and an active substance layer (212) provided on the current collector (211), the conductive part (22) comprises a tab part (221) and an adapting piece (222), the tab part (221) is electrically connected to the current collector (211), the tab part (221) comprises a plurality of tab plates (2211), parts of the plurality of tab plates (2211) proximal to the current collector (211) converge to form a first gathering part (2212), parts of the plurality of tab plates (2211) distal to the current collector (211) converge and are connected to form a second gathering part (2213), the first gathering part (2212) connects the second gathering part (2213) and the active substance-coated part (21), the adapting piece (222) is connected to the second gathering part (2213), at least a part of the adapting piece (222) is accommodated in the second accommodating groove (12120),
and the adapting piece (222) is connected to the second end wall (12121) through the first welding part (71).

15. The battery cell according to claim 13 or 14, wherein at least a part of the first gathering part (2212) is accommodated in the second accommodating groove (12120).

16. The battery cell (10) according to claim 13 or 14, wherein the post terminal body (1201) is provided with a first accommodating part (121), the first accommodating part (121) is provided with a third accommodating groove (12140), a surface of the first post terminal (12) on a side facing the active substance-coated part (21) is a post terminal inner end surface (122), the third accommodating groove (12140) is located on a side of the second accommodating groove (12120) proximal to the active substance-coated part (21), and an opening of the third accommodating groove (12140) is formed on the post terminal inner end surface (122); the third accommodating groove (12140) is in communication with the second accommodating groove (12120) through the first perforation (12130), and at least a part of the first gathering part (2212) is accommodated in the third accommodating groove (12140).

17. The battery cell according to any one of claims 11-16, wherein the housing assembly (1) further comprises a second cover plate (14), the second cover plate (14) lids the first perforation (12130) and is located outside the conductive part (22) located in the second accommodating groove (12120).

18. The battery cell (10) according to any one of claims 9-17, wherein the housing (11) is provided with a mounting hole (113), and the first post terminal (12) is mounted in the mounting hole (113); in an axial direction of the first post terminal (12), a depth H3 of the second accommodating groove (12120) is greater than or equal to a minimum distance H4 from the post terminal outer end surface (123) to the mounting hole (113).

19. The battery cell according to claim 1, wherein the post terminal body (1201) is provided with a first accommodating part (121), the first accommodating part (121) is provided with a fourth accommodating groove (12150), a surface of the post terminal body (1201) on a side distal to the active substance-coated part (21) is a post terminal outer end surface (123), an opening of the fourth accommodating groove (12150) is formed on the post terminal outer end surface (123), the fourth accommodating groove (12150) is in communication with the interior of the housing (11) through a second perforation (12160), the conductive part (22) is provided in the second perforation (12160) in a penetrating manner,
the first welding part (71) is provided on a wall of the second perforation (12160) formed in the first accommodating part (121), and the first cover plate (14) is fitted to the post terminal body (1201) and covers the second perforation (12160).

20. The battery cell (10) according to claim 19, wherein the post terminal body (1201) comprises a first post terminal part (124) and a second post terminal part (125) made of different materials and electrically connected, the second post terminal part (125) is located on a side of the first post terminal part (124) distal to the active substance-coated part (21), the first accommodating part (121) is provided on the first post terminal part (124) or on the first post terminal part (124) and the second post terminal part (125), and the first welding part (71) is provided on the first post terminal part (124).

21. The battery cell according to any one of claims 1-20, wherein the first cover plate (13) is provided with a second accommodating part (134), the second accommodating part (134) is provided with a fifth accommodating groove (1341), an opening of the fifth accommodating groove (1341) is formed on an end surface of the first cover plate (13) on a side facing the active substance-coated part (21), and the fifth accommodating groove (1341) is provided with a third end wall (13411) and a third side wall (13412); the third end wall (13411) is located on a side of the third side wall (13412) distal to the active substance-coated part (21),
and at least a part of the first welding part (71) is accommodated in the fifth accommodating groove (1341).

22. The battery cell (10) according to any one of claims 1-21, wherein the first cover plate (13) is electrically connected to the post terminal body (1201); or, the first cover plate (13) is provided to be insulated from the post terminal body (1201).

23. The battery cell (10) according to any one of claims 1-21, wherein the first cover plate (13) comprises a first conductive member (131) and a second conductive member (132) made of different materials, the first conductive member (131) is fitted to and electrically connected to the post terminal body, and the second conductive member (132) is fitted to and electrically connected to the first conductive member (131).

24. The battery cell (10) according to claim 23, wherein the first conductive member (131) is provided with a second groove (1311), the second conductive member (132) is embedded in the second groove (1311), and an opening of the second groove (1311) is formed on a surface of the first conductive member (131) on a side distal to the active substance-coated part (21), such that the second conductive member (132) is exposed from the opening of the second groove (1311).

25. The battery cell (10) according to any one of claims 23 or 24, wherein the first cover plate (13) is provided with a stress relief groove (133), and the stress relief groove (133) is located in an outer peripheral region of the first cover plate (13).

26. The battery cell (10) according to any one of claims 2-4, 9-12, and 19, further comprising:
a support (3), located in the housing (11) and on a side of the active substance-coated part (21) proximal to the first post terminal (12), the support (3) being provided with a clearance hole (31) configured to provide clearance for the conductive part (22), and the conductive part (22) being suitable for extending to a side of the support (3) distal to the active substance-coated part (21) through the clearance hole (31).

27. The battery cell (10) according to claim 26, wherein the post terminal body (1201) is provided with a first accommodating part (121), the support (3) is provided with a guiding part (32), the guiding part (32) defines, in an enclosing manner, at least a part of the clearance hole (31), and the guiding part (32) at least partially extends to the first accommodating part (121).

28. The battery cell (10) according to claim 26 or 27, wherein the clearance hole (31) includes a first hole segment (311) and a second hole segment (312), the second hole segment (312) is located on a side of the first hole segment (311) proximal to the active substance-coated part (21), and the cross-sectional area of the second hole segment (312) gradually increases in a direction distal to the first hole segment (311), the active substance-coated part (21) includes a current collector (211) and an active substance layer (212) provided on the current collector (211), the conductive part (22) includes a tab part (221) electrically connected to the current collector (211), the tab part (221) includes a plurality of tab plates (2211), parts of the plurality of tab plates (2211) proximal to the current collector (211) converge to form a first gathering part (2212), parts of the plurality of tab plates (2211) distal to the current collector (211) converge and are connected to form a second gathering part (2213), the first gathering part (2212) connects the second gathering part (2213) and the active substance-coated part (21), at least a part of the first gathering part (2212) is accommodated in the second hole segment (312), and the second gathering part (2213) is provided in the first hole segment (311) in a penetrating manner.

29. The battery cell (10) according to any one of claims 26-28, wherein the support (3) is of an integrated structure; or, the support (3) is of a split-type structure and includes a first support (33) and a second support (34) that are separable, and a clearance hole (31) is defined between the first support (33) and the second support (34).

30. The battery cell according to any one of claims 1-29, wherein the housing (11) is provided with a first wall (110), a mounting hole (113) is formed on the first wall (110), and the post terminal body (1201) is provided in the mounting hole (113); taking a plane where the cross-section of the mounting hole (113) is located as a projection plane, in a direction perpendicular to the projection plane, a ratio of a projection area of the first welding part (71) on the projection plane to a projection area of the first wall (110) on the projection plane is in a range of 0.1%-1%.

31. The battery cell according to any one of claims 1-30, wherein the housing (11) is provided with a mounting hole (113), the post terminal body (1201) comprises a post terminal body part (12a), a first limiting stage part (12b), and a second limiting stage part (12c) that are integrally formed, the post terminal body part (12a) is provided in the mounting hole (113) in a penetrating manner, the first limiting stage part (12b) and the second limiting stage part (12c) are provided at both ends of the post terminal body part (12a) in an axial direction of the mounting hole (113), the first limiting stage part (12b) is in limiting fit with an outer side of the housing (11), and the second limiting stage part (12c) is in limiting fit with an inner side of the housing (11), such that the post terminal body (1201) is riveted to the housing (11).

32. The battery cell according to any one of claims 1-31, wherein the battery cell (10) further comprises:
an outer insulating member (5), wherein the outer insulating member (5) is wrapped outside the housing (11).

33. The battery cell according to claim 32, wherein the housing (11) is provided with a first wall (110), a mounting hole (113) is formed on the first wall (110), the post terminal body (1201) is provided in the mounting hole (113), the battery cell (10) further comprises a patch (9) covering an outer side of the first wall (110), the outer insulating member (5) comprises an outer insulating film (52), the outer insulating film (52) is an integrated film, the outer insulating film (52) is provided with a connecting part (51), and the connecting part (51) extends to the outer side of the first wall (110) and is connected to the patch (9).

34. The battery cell according to claim 33, wherein a minimum distance between an edge of the outer insulating film (52) and the first post terminal (12) is greater than or equal to 3 mm.

35. A battery, comprising the battery cell (10) according to any one of claims 1-34.

36. The battery according to claim 35, comprising:
a plurality of the battery cells (10); and
a busbar component (30), the busbar component (30) being electrically connected to the first post terminals (12) of at least two of the battery cells (10), the first post terminals (12) of the same polarity of each of the battery cells (10) being electrically connected to the busbar component (30) through a second welding part (72), and the second welding part (72) being formed on the first cover plate (13),
wherein the housing (11) comprises a first wall (110), a mounting hole (113) is formed on the first wall (110), and the post terminal body (1201) is provided in the mounting hole (113);
on the cross-section of the mounting hole (113), an orthographic projection area of the second welding part (72) is greater than or equal to 0.2% of an orthographic projection area of the first wall (110).

37. The battery according to claim 36, wherein in a direction perpendicular to the cross-section of the mounting hole (113), a part of the busbar component (30) overlapping with the post terminal body (12) of the same polarity is a weldable region of the busbar component (30),
and the orthographic projection area of the second welding part (72) on the cross-section of the mounting hole (113) is greater than or equal to 0.2 of an area of the weldable region of the busbar component (30).

38. The battery according to claim 36, wherein in a direction perpendicular to the cross-section of the mounting hole (113), a part of the busbar component (30) overlapping with the first post terminal (12) of the same polarity is a weldable region of the busbar component (30),
and an area of the weldable region of the busbar component (30) is greater than or equal to 20% of the orthographic projection area of the busbar component (30) on the cross-section of the mounting hole (113).

39. The battery according to claim 38, wherein the area of the weldable region of the busbar component (30) is less than or equal to 50% of the orthographic projection area of the busbar component (30) on the cross-section of the mounting hole (113).

40. An electrical apparatus, comprising the battery (100) according to any one of claims 35-39.
